(19) Europäisches Patentamt
European Patent Office
Office européen des brevets

(11) EP 3 181 517 B1

(12) **EUROPEAN PATENT SPECIFICATION**

(45) Date of publication and mention of the grant of the patent:
**29.04.2026 Bulletin 2026/18**

(21) Application number: **15832051.5**

(22) Date of filing: **15.07.2015**

(51) International Patent Classification (IPC):
***C01B 3/56*** *(2006.01)* ***B01D 53/04*** *(2006.01)*

(52) Cooperative Patent Classification (CPC):
**B01D 53/04; C01B 3/56;** B01D 53/002; B01D 2253/102; B01D 2253/108; B01D 2256/16; B01D 2257/7022; B01D 2257/7027; B01D 2259/40013; B01D 2259/40028; B01D 2259/40086; B01D 2259/4009; B01D 2259/402

(86) International application number:
**PCT/JP2015/070225**

(87) International publication number:
**WO 2016/024456 (18.02.2016 Gazette 2016/07)**

(54) **HYDROGEN GAS PURIFICATION METHOD AND PURIFICATION DEVICE FOR SAME**

WASSERSTOFFGASREINIGUNGSVERFAHREN UND REINIGUNGSVORRICHTUNG DAFÜR

PROCÉDÉ DE PURIFICATION D'HYDROGÈNE GAZEUX ET DISPOSITIF DE PURIFICATION POUR CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2014 JP 2014164128**

(43) Date of publication of application:
**21.06.2017 Bulletin 2017/25**

(73) Proprietor: **Air Water Inc.**
**Osaka-shi, Osaka 542-0081 (JP)**

(72) Inventors:
- **FUJIMOTO Kazuyuki**
**Sakai-shi**
**Osaka 592-8331 (JP)**
- **KAIGAWA Takanori**
**Sakai-shi**
**Osaka 592-8331 (JP)**

(74) Representative: **Meissner Bolte Partnerschaft mbB**
**Patentanwälte Rechtsanwälte**
**Postfach 86 06 24**
**81633 München (DE)**

(56) References cited:
**EP-A2- 0 064 267**
**JP-A- 2005 000 862**
**JP-A- 2005 216 774**
**JP-A- 2014 073 922**
**JP-A- H09 323 017**
**US-A- 5 897 686**
**US-A- 6 120 581**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 181 517 B1

## Description

TECHNICAL FIELD

The present invention relates to a method for purifying a hydrogen gas and an apparatus for purifying a hydrogen gas. Particularly, the present invention relates to a method for purifying a hydrogen gas and an apparatus for purifying a hydrogen gas, which are capable of separating and removing an impurity constituent such as methylcyclohexane or toluene from a hydrogen gas.

BACKGROUND ART

Recently, as a method for transporting and storing a hydrogen gas, an organic chemical hydride method has attracted attention (see Non-Patent Documents 1 and 2 below). In this method, an organic compound that is used as a hydrogen carrier can be handled like oil or gasoline, and handling is easy. Further, an existing infrastructure can be utilized.

Specifically, the organic chemical hydride method comprises a hydrogenation step of fixing hydrogen by a hydrogenation reaction of a specific organic compound, and a dehydrogenation step of extracting a hydrogen gas. As the organic compound, one having a high hydrogen absorption capacity of about 6 % by mass can be used as a hydrogen carrier. For example, when toluene is used as the organic compound, the hydrogenation step is represented by the following chemical reaction Formula (1), and the dehydrogenation step is represented by the following chemical reaction Formula (2).

Chemical Formula 1

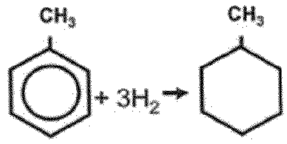


(1)

Toluene Methylcyclohexane

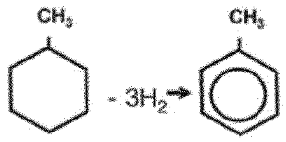


(2)

Methylcyclohexane Toluene

The hydrogenation step represented by the chemical reaction Formula (1) is a technique which has been generally used heretofore for hydrogenation in chemical plants. In addition to a step of converting toluene into methylcyclohexane as described above, for example, a step of converting benzene into cyclohexane, a step of converting naphthalene into decalin, and so on have been known. On the other hand, in the dehydrogenation step represented by the chemical reaction Formula (2), a catalyst capable of efficiently advancing the reaction has been recently developed (see Non-Patent Document 2 below). Accordingly, practical application of storage and carriage of hydrogen by use of the organic chemical hydride method has become realistic.

However, in a hydrogen gas extracted by the organic chemical hydride method, an organic compound used as a hydrogen carrier, such as toluene or methylcyclohexane, exists as an impurity constituent. The existing amount of the impurity constituent may be at least about 0.1 to 2 % by mass based on the total mass. Given the use of a hydrogen gas as an energy source, the hydrogen gas is required to have such a purity that the total amount of carbon existing in the hydrogen gas is 2 ppm or less when the hydrogen gas is used for, for example, fuel battery vehicles (specified in ISO 14687-2).

Therefore, for using hydrogen stored and carried by the organic chemical hydride method with the hydrogen supplied to fuel battery vehicles, it is necessary to perform purification so that the amount of carbon, i.e. the amount of organic compounds existing in a hydrogen gas is equal to or less than the foregoing specified value.

Here, as the method for purifying a hydrogen gas, mention is made of adsorption separation using an adsorbent. Examples of the adsorption separation method include a pressure swing adsorption (PSA) method (see Patent Document 1 below), and a thermal swing adsorption (TSA) method. In the PSA method, however, it is necessary to feed a large amount of hydrogen gas to an adsorption tower as a purge gas for desorbing impurities adsorbed to an adsorbent, so that

the adsorbent can adsorb impurities again. For securing the purity of the purified hydrogen gas, a part thereof is often used as a purge gas. However, there is the problem that the recovery ratio of the purified hydrogen gas decreases because the used purge gas is exhausted.
Patent Document 2 describes a process and device for purification by removing carbon dioxide from a hydrogen and carbon monoxide containing synthesis gas by using adsorption in one of two adsorption vessels and regeneration of the other bed using a heated gas stream.

PRIOR ART DOCUMENTS

PATENT DOCUMENT

| | |
|---|---|
| Patent Document 1: | JP 2014-073 923 A |
| Patent Document 2: | US 5 897 686 A |

NON-PATENT DOCUMENTS

| | |
|---|---|
| Non-Patent Document 1: | Junichi Sakaguchi, "Hydrogen Production/Absorption/Storage Material and Safing", Science & Technology Co., Ltd., p. 272-280 (2010) |
| Non-Patent Document 2: | Yoshimi Okada et al, "Chemical Engineering", Society for Chemical Engineers, Japan, Vol. 77, No. 1, p. 46-50 (2013) |

SUMMARY OF THE INVENTION

PROBLEMS TO BE SOLVED BY THE INVENTION

The present invention has been devised in view of the above-mentioned problems, and an object of the present invention is to provide a method for purifying a hydrogen gas and an apparatus for purifying a hydrogen gas, which are capable of purifying a hydrogen gas with a high recovery ratio by removing an impurity constituent from a hydrogen gas extracted by an organic chemical hydride method etc.

SOLUTIONS TO THE PROBLEMS

The above-mentioned conventional problems are solved by the invention described below.
In order to solve the above-mentioned problems, the method for purifying a hydrogen gas in which a raw material hydrogen gas containing an impurity constituent is purified using a pair of adsorption towers each filled with an adsorbent, the method comprising: repeatedly carrying out an adsorption cycle comprising at least an adsorption step of separating the impurity constituent from the raw material hydrogen gas by adsorbing the impurity constituent to the adsorbent in the adsorption towers, and a heating and regeneration step of desorbing the impurity constituent from the adsorbent by supplying a heated purge gas to the adsorption tower after the adsorption step, in each of the adsorption towers; and while carrying out the adsorption step in one adsorption tower, carrying out a step other than the adsorption step in the other adsorption tower, wherein the adsorption cycle further comprises

- a pressure reducing step of reducing the pressure of the adsorption tower just after the adsorption step by discharging a residual gas remaining in the adsorption tower, and
- a regeneration preparation step of mixing a part of a purified hydrogen gas, which is discharged from the adsorption tower engaged in the adsorption step, with the residual gas to form the purge gas, and supplying the purge gas to the adsorption tower after the adsorption step while circulating the purge gas, before the heating and regeneration step, and

the heating and regeneration step comprising supplying the purge gas to the adsorption tower after the adsorption step while circulating the purge gas, and
wherein the heating and regeneration step further comprises the step of cooling the purge gas to condense an impurity

constituent contained in the purge gas into a liquid, performing gas-liquid separation to separate a hydrogen gas contained in the purge gas and a liquid of the impurity constituent from each other, and recovering the liquid of the impurity constituent.

According to the above-mentioned configuration, a method for purifying a hydrogen gas according to the present invention comprises repeatedly carrying out an adsorption cycle including at least an adsorption step and a heating and regeneration step in each of two adsorption towers. In the adsorption cycle, while the adsorption step is carried out in one adsorption tower, a step other than the adsorption step is carried out in the other adsorption tower. Thus, in the present invention, an operation for adsorbing and separating an impurity constituent from a raw material hydrogen gas by adsorbing the impurity constituent to the adsorbent to purify the hydrogen gas can be continuously carried out.

In the heating and regeneration step, a heated purge gas is circulated and simultaneously supplied to an adsorption tower after the adsorption step, and therefore as compared to, for example, a conventional TSA method in which a purified hydrogen gas is fed as a purge gas, and then exhausted, the amount of a purge gas can be considerably reduced, and the purge gas can be recovered. As a result, the recovery ratio of a purified hydrogen gas can be improved. The term "adsorption tower after completion of the adsorption step" includes not only an adsorption tower just after the adsorption step but also an adsorption tower in which after completion of the adsorption step, other steps are carried out.

According to the above-mentioned configuration, the tower internal pressure of the adsorption tower after the adsorption step can be reduced to, for example, approximately atmospheric pressure by carrying out the pressure reducing step. In the regeneration preparation step, a residual gas discharged in the pressure reducing step is mixed with a part of a purified hydrogen gas to form a purge gas, and therefore as compared to a case where only a purified hydrogen gas is used as a purge gas, the use amount of the purified hydrogen gas can be reduced.

In the above configuration, it is preferred that the adsorption cycle further comprises a cooling step of cooling the adsorption tower after the heating and regeneration step to a temperature, at which the adsorbent can be adsorbed, by circulating and supplying the purge gas to the adsorption tower as a cooling gas without preventing at least heating of the purge gas, and a pressure raising step of raising the pressure of the adsorption tower after the cooling step by supplying to the adsorption tower a part of the purified hydrogen gas discharged from the adsorption tower engaged in the adsorption step.

In the conventional TSA method, a cooling gas once fed to an adsorption tower and used in a cooling step is exhausted as it is. When a hydrogen gas is purified as in the present invention, the hydrogen gas is used as a cooling gas, and therefore when the cooling step is carried out by the conventional method, a loss equivalent to the amount of exhausted gas occurs, leading to a reduction in recovery ratio. However, in the above-mentioned configuration, at least heating of the purge gas used in the heating and regeneration step is stopped, and this purge gas is used as a cooling gas. The cooling gas is circulated and supplied to the adsorption tower after the heating and regeneration step, and therefore as compared to the conventional TSA method, the loss of a purified hydrogen gas can be reduced, so that the recovery ratio of the purified hydrogen gas can be further improved.

In the above configuration, it is preferred that the adsorption cycle further comprises a pressure raising step of raising the pressure of the adsorption tower after the heating and regeneration step by supplying to the adsorption tower a part of the purified hydrogen gas discharged from the adsorption tower engaged in the adsorption step, and a cooling step of cooling the adsorption tower after the pressure raising step to a temperature, at which the adsorbent can be adsorbed, by supplying to the adsorption tower a part of the purified hydrogen gas discharged from the adsorption tower engaged in the adsorption step while preventing at least heating of the part of the purified hydrogen gas, then combining the part of the purified hydrogen gas with the raw material hydrogen gas, and supplying the combined gas to the adsorption tower engaged in the adsorption step.

In the above-mentioned configuration, a part of the purified hydrogen gas discharged from an adsorption tower engaged in the adsorption step is used as a cooling gas, and therefore existence of an impurity constituent in the cooling gas can be prevented. The cooling gas used for cooling is not exhausted, but combined with the raw material hydrogen gas to be resupplied to the adsorption tower engaged in the adsorption step, and therefore the loss of the purified hydrogen gas can be suppressed, so that the recovery ratio can be improved.

The adsorption tower engaged in the adsorption step has a raised pressure, but the adsorption tower to be engaged in the cooling step is subjected to the pressure raising step, whereby a pressure difference between the two adsorption towers can be eliminated. As a result, the cooling gas used in the cooling step can be combined with the raw material hydrogen gas, and a decrease in pressure of the raw material hydrogen gas can be prevented.

In the above configuration, it is preferred that the adsorption cycle further comprises a regeneration preparation step of supplying the unheated purge gas to the adsorption tower just after the adsorption step, and a cooling step of supplying a cooling gas to the adsorption tower just after the heating and regeneration step to cool the adsorbent filled into the adsorption tower, the tower internal pressure of the adsorption tower in which a step other than the adsorption step is carried out is substantially equal to that at the time of carrying out the adsorption step, the regeneration and preparation step and the heating and regeneration step comprise supplying a part of the purified hydrogen gas, which is discharged

from the adsorption tower engaged in the adsorption step, to the other adsorption tower as the purge gas, then combining the purified hydrogen gas with the raw material hydrogen gas, and supplying the combined gas to the adsorption tower engaged in the adsorption step, and the cooling step comprises supplying a part of the purified hydrogen gas, which is discharged from the adsorption tower engaged in the adsorption step, to the other adsorption tower as the cooling gas, then combining the purified hydrogen gas with the raw material hydrogen gas, and supplying the combined gas to the adsorption tower engaged in the adsorption step.

In the above-mentioned configuration, the tower internal pressure of the adsorption tower in which a step other than the adsorption step is carried out is substantially equal to that at the time of carrying out the adsorption step, and therefore it is not necessary to carry out the pressure reducing step of reducing the tower internal pressure of the adsorption tower to approximately atmospheric pressure before carrying out the regeneration preparation step. It is not necessary that an adsorption tower in which an adsorbent has been regenerated in the heating and regeneration step be subjected to a pressure raising step for raising the pressure in the tower for carrying out the adsorption step. Therefore, in the above-mentioned configuration, the number of steps can be reduced to efficiently purify a hydrogen gas.

In the above-mentioned configuration, a part of the purified hydrogen gas discharged from the adsorption tower engaged in the adsorption step is used as a purge gas in the regeneration preparation step and the heating and regeneration step, and therefore existence of an impurity constituent can be prevented. The purge gas is not exhausted, but combined with the raw material hydrogen gas to be resupplied to the adsorption tower engaged in the adsorption step, and therefore the loss of the purified hydrogen gas can be suppressed, so that the recovery ratio can be improved. Further, in the cooling step, a part of the purified hydrogen gas is used as a cooling gas as in the case of the regeneration preparation step and the heating and regeneration step, and therefore existence of an impurity constituent is prevented, and the used cooling gas is combined with the raw material hydrogen gas, so that the loss of the purified hydrogen gas can be suppressed to improve the yield.

In the above configuration, the heating and regeneration step comprises the step of cooling the purge gas to condense an impurity constituent contained in the purge gas into a liquid, performing gas-liquid separation to separate a hydrogen gas contained in the purge gas and a liquid of the impurity constituent from each other, and recovering the liquid of the impurity constituent.

Accordingly, an impurity constituent adsorbed to the adsorbent can be recovered as a solvent. As a result, for example, the impurity constituent can be reused as a solvent to be used in an organic chemical hydride method when the present invention is used for purification of a hydrogen gas extracted by the organic chemical hydride method.

In order to solve the above-mentioned problems, the apparatus suitable for purifying a hydrogen gas, which comprises a pair of adsorption towers each filled with an adsorbent and configured to purify a raw material hydrogen gas containing an impurity constituent, wherein each of the adsorption towers is configured to repeatedly carry out an adsorption cycle therein, the adsorption cycle comprising at least an adsorption step of separating the impurity constituent from the raw material hydrogen gas by adsorbing the impurity constituent to the adsorbent in the adsorption tower, and a heating and regeneration step of desorbing the impurity constituent from the adsorbent by supplying a heated purge gas to the adsorption tower after the adsorption step, the apparatus comprising: a raw material supply channel configured such that the raw material hydrogen gas is supplied to one of the pair of adsorption towers in which the adsorption step is carried out, whereas the raw material hydrogen gas is not supplied to the other adsorption tower in which a step other than the adsorption step is carried out; a purge gas circulation channel configured to supply the heated purge gas to the adsorption tower engaged in the heating and regeneration step while circulating the heated purge gas; and a heater which is connected to the purge gas circulation channel, and is configured to heat the purge gas, wherein the purge gas circulation channel is provided with a cooler configured to cool the purge gas to condense an impurity constituent contained in the purge gas into a liquid, and a gas-liquid separator configured to perform gas-liquid separation to separate a hydrogen gas contained in the purge gas and a liquid of the impurity constituent from each other, and recovering the liquid of the impurity constituent, and a purified hydrogen gas introduction channel configured to supply a part of the purified hydrogen gas and to communicate with the purge gas circulation channel.

According to the above-mentioned configuration, the apparatus suitable for purifying a hydrogen gas according to the present invention is configured to repeatedly carrying out an adsorption cycle including at least an adsorption step and a heating and regeneration step in each of a pair of adsorption towers. In the adsorption cycle, while the adsorption step is carried out in one adsorption tower, a step other than the adsorption step is carried out in the other adsorption tower.

Thus, the raw material supply channel is configured such that a raw material hydrogen gas is supplied to one adsorption tower in which the adsorption step is carried out, whereas a raw material hydrogen gas is not supplied to the other adsorption tower. As a result, in the present invention, an operation for adsorbing and separating an impurity constituent from a raw material hydrogen gas by adsorbing the impurity constituent to the adsorbent to purify the hydrogen gas can be continuously carried out.

In the present invention, a purge gas circulation channel for circulating a heated purge gas and simultaneously supplying the purge gas to an adsorption tower engaged in the heating and regeneration step is provided, and therefore as compared to, for example, a conventional TSA purification apparatus in which a purified hydrogen gas is used as a purge

gas, and then exhausted, the amount of a purge gas can be considerably reduced, and the purge gas can be recovered. As a result, there can be provided an apparatus suitable for purifying a hydrogen gas, which is capable of improving the recovery ratio of a purified hydrogen gas.

In the above configuration, it is preferred that the adsorption cycle comprises a pressure reducing step of reducing the pressure of the adsorption tower just after the adsorption step by discharging the residual gas remaining in the adsorption tower, and a regeneration preparation step of mixing a part of a purified hydrogen gas, which is discharged from the adsorption tower engaged in the adsorption step, with the residual gas to form the purge gas, and supplying the purge gas to the adsorption tower after the adsorption step while circulating the purge gas, before the heating and regeneration step; and a purified hydrogen gas introduction channel for supplying a part of the purified hydrogen gas communicates with the purge gas circulation channel through which the residual gas flows.

According to the above-mentioned configuration, the purified hydrogen gas introduction channel for supplying a part of the purified hydrogen gas communicates with the purge gas circulation channel through which the residual gas is fed, and therefore in the regeneration preparation step, the residual gas discharged in the pressure reducing step can be mixed with a part of the purified hydrogen gas to form a purge gas. Thus, as compared to a case where only a purified hydrogen gas is used as a purge gas, the use amount of the purified hydrogen gas can be reduced.

When the amount of the purge gas is insufficient in the heating and regeneration step, much time is consumed in the heating and regeneration step, so that it is difficult to continuously purify the hydrogen gas in a two-tower switching system. Therefore, a part of the purified hydrogen gas is mixed with the purge gas. Thus, in the above-mentioned configuration, a part of the purified hydrogen gas is mixed with the purge gas to secure a necessary amount of the purge gas.

In the above configuration, it is preferred that the adsorption cycle further comprises a cooling step of cooling the adsorption tower after the heating and regeneration step to a temperature, at which the adsorbent can be adsorbed, by circulating and supplying the purge gas to the adsorption tower as a cooling gas while preventing at least heating of the purge gas, and a pressure raising step of raising the pressure of the adsorption tower after the cooling step by supplying to the adsorption tower a part of the purified hydrogen gas discharged from the adsorption tower engaged in the adsorption step; the pair of adsorption towers are each provided with a cooling gas circulation channel for circulating and supplying the cooling gas to the adsorption tower engaged in the cooling step, the cooling gas circulation channel branching from the purge gas circulation channel, and a pressure raising channel for supplying a part of the purified hydrogen gas to the adsorption tower engaged in the pressure raising step from the adsorption tower engaged in the adsorption step; and the purge gas circulation channel is provided with a gas compressor for sending the cooling gas to the cooling gas circulation channel in the cooling step.

In the conventional TSA method, a cooling gas once fed to an adsorption tower and used in a cooling step is exhausted as it is. When a hydrogen gas is purified as in the present invention, the hydrogen gas is used as a cooling gas, and therefore when the cooling step is carried out by the conventional method, a loss equivalent to the amount of exhausted gas occurs, leading to a reduction in recovery ratio.

However, in the above-mentioned configuration, at least heating of the purge gas used in the heating and regeneration step is stopped, and this purge gas is used as a cooling gas. The cooling gas is circulated using the cooling gas circulation channel and the gas compressor, and repeatedly used for cooling, and therefore as compared to the conventional TSA purification apparatus, the loss of a purified hydrogen gas can be reduced, so that the recovery ratio of the purified hydrogen gas can be further improved.

In the above configuration, it is preferred that the adsorption cycle comprises a pressure reducing step of reducing the pressure of the adsorption tower just after the adsorption step by discharging the residual gas remaining in the adsorption tower, and a regeneration preparation step of mixing a part of a purified hydrogen gas, which is discharged from the adsorption tower engaged in the adsorption step, with the residual gas to form the purge gas, and supplying the purge gas to the adsorption tower after the adsorption step while circulating the purge gas, before the heating and regeneration step; and other purified hydrogen gas introduction channel for supplying a part of the purified hydrogen gas from the adsorption tower engaged in the adsorption step to the adsorption tower in which the regeneration preparation step is carried out is provided between the pair of adsorption towers.

According to the above-mentioned configuration, other purified hydrogen gas introduction channel for supplying a part of the purified hydrogen gas from the adsorption tower engaged in the adsorption step to the adsorption tower engaged in the regeneration preparation step is provided, and therefore in the regeneration preparation step, the residual gas discharged in the pressure reducing step can be mixed with a part of the purified hydrogen gas to form a purge gas.

Thus, as compared to a case where only a purified hydrogen gas is used as a purge gas, the use amount of the purified hydrogen gas can be reduced. When the amount of the purge gas is insufficient in the heating and regeneration step, much time is consumed in the heating and regeneration step, so that it is difficult to continuously purify the hydrogen gas in a two-tower switching system.

Therefore, a part of the purified hydrogen gas is mixed with the purge gas. Thus, in the above-mentioned configuration, a part of the purified hydrogen gas is mixed with the purge gas to secure a necessary amount of the purge

gas.

In the above configuration, it is preferred that the adsorption cycle further comprises a pressure raising step of raising the pressure of the adsorption tower after the heating and regeneration step by supplying to the adsorption tower a part of the purified hydrogen gas discharged from the adsorption tower engaged in the adsorption step, and a cooling step of cooling the adsorption tower after the pressure raising step to a temperature, at which the adsorbent can be adsorbed, by supplying to the adsorption tower a part of the purified hydrogen gas discharged from the adsorption tower engaged in the adsorption step while preventing at least heating of the part of the purified hydrogen gas, then combining the part of the purified hydrogen gas with the raw material hydrogen gas, and supplying the combined gas to the adsorption tower engaged in the adsorption step; a cooling gas introduction channel branching from the purge gas circulation channel is connected to the raw material supply channel, and the cooling gas introduction channel serves to supply the purified hydrogen gas, which is used as a cooling gas in the cooling step, to the raw material supply channel; the purge gas circulation channel is provided with a gas compressor for sending the cooling gas, which is used in the cooling step, to the cooling gas introduction channel; and the other purified hydrogen gas introduction channel serves to supply a part of the purified hydrogen gas, which is discharged from the adsorption tower engaged in the adsorption step, to the adsorption tower engaged in the pressure raising step or the cooling step, in the pressure raising step or the cooling step.

In the above-mentioned configuration, a part of the purified hydrogen gas discharged from the adsorption tower engaged in the adsorption step is supplied through other purified hydrogen gas introduction channel to the adsorption tower engaged in the cooling step, and the purified hydrogen gas is used as a cooling gas, so that existence of an impurity constituent in the cooling gas can be prevented.

The cooling gas used for cooling is not exhausted, but fed into the raw material supply channel through the cooling gas introduction channel, and then resupplied, together with the raw material hydrogen gas, to the adsorption tower engaged in the adsorption step, and therefore the loss of the purified hydrogen gas can be suppressed, so that the recovery ratio can be improved.

The adsorption tower engaged in the adsorption step has a raised pressure, but the adsorption tower to be engaged in the cooling step is subjected to the pressure raising step of introducing a part of the purified hydrogen gas discharged from the adsorption tower engaged in the adsorption step, whereby a pressure difference between the two adsorption towers can be eliminated. The gas compressor sends the cooling gas used in the cooling step to the cooling gas introduction channel, whereby the cooling gas can be combined with the raw material hydrogen gas.

In the above configuration, it is preferred that the adsorption cycle further comprises a regeneration preparation step of supplying the unheated purge gas to the adsorption tower just after the adsorption step, and a cooling step of supplying a cooling gas to the adsorption tower just after the heating and regeneration step to cool the adsorbent filled into the adsorption tower, the tower internal pressure of the adsorption tower engaged in the adsorption step is substantially equal to that at the time of carrying out the adsorption step, the purge gas circulation channel is provided with still other purified hydrogen gas introduction channel for supplying as the purge gas or cooling gas a part of the purified hydrogen gas, which is discharged from the adsorption tower engaged in the adsorption step, to the adsorption tower engaged in a step other than the adsorption step; and a purge gas/cooling gas introduction channel branching from the purge gas circulation channel is connected to the raw material supply channel, and the purge gas/cooling gas introduction channel serves to supply the purified hydrogen gas, which is used as the purge gas or cooling gas, to the raw material supply channel.

In the above-mentioned configuration, the tower internal pressure of the adsorption tower in which a step other than the adsorption step is carried out is substantially equal to that at the time of carrying out the adsorption step, and therefore it is not necessary to carry out the pressure reducing step of reducing the tower internal pressure of the adsorption tower to approximately atmospheric pressure before carrying out the regeneration preparation step.

It is not necessary that an adsorption tower in which an adsorbent has been regenerated in the heating and regeneration step be subjected to a pressure raising step for raising the pressure in the tower for carrying out the adsorption step. Therefore, in the purification apparatus having the above-mentioned configuration, the number of steps can be reduced to efficiently purify a hydrogen gas.

In the above-mentioned configuration, still other purified hydrogen gas introduction channel for supplying a part of the purified hydrogen gas as the purge gas or cooling gas from the adsorption tower engaged in the adsorption step to the adsorption tower engaged in a step other than the adsorption step is provided. Thus, existence of an impurity constituent in the purge gas or cooling gas can be prevented.

The purge gas/cooling gas introduction channel branched from the purge gas circulation channel is connected to the raw material supply channel, and therefore the used purge gas or cooling gas can be combined with the raw material gas without being exhausted. Accordingly, the purified hydrogen gas as a purge gas or cooling gas can be resupplied to the adsorption tower engaged in the adsorption step, and therefore the loss of the purified hydrogen gas can be suppressed to improve the recovery ratio.

In the above configuration, the purge gas circulation channel is provided with a cooler for cooling the purge gas to condense an impurity constituent contained in the purge gas into a liquid, and a gas-liquid separator for performing gas-liquid separation to separate a hydrogen gas contained in the purge gas and a liquid of the impurity constituent from each other, and recovering the liquid of the impurity constituent.

Accordingly, an impurity constituent adsorbed to the adsorbent can be recovered as a solvent. As a result, for example, aromatic compounds applicable to an organic chemical hydride method can be recovered as reusable compounds when the present invention is used for purification of a hydrogen gas extracted by the organic chemical hydride method.

## EFFECTS OF THE INVENTION

Owing to the means described above, the present invention exhibits effects as described below.

According to the present invention, an adsorption cycle including at least an adsorption step and a heating and regeneration step is carried out in each of two adsorption towers, and the adsorption cycle is repeated such that while the adsorption step is carried out in one adsorption tower, a step other than the adsorption step is carried out in the other adsorption tower. Thus, in the present invention, an operation for adsorbing and separating an impurity constituent from a raw material hydrogen gas to purify the hydrogen gas can be continuously carried out, so that purification of the hydrogen gas can be made efficient.

According to the present invention, in the heating and regeneration step, a heated purge gas is circulated and simultaneously supplied to an adsorption tower after the adsorption step, and therefore as compared to, for example, a conventional TSA method in which a purified hydrogen gas is fed as a purge gas, and then exhausted, the amount of a purge gas can be considerably reduced, and the purge gas can be recovered. As a result, there can be provided a method for purifying a hydrogen gas and an apparatus for purifying a hydrogen gas, which are capable of purifying a hydrogen gas with a high recovery ratio.

## BRIEF DESCRIPTION OF THE DRAWINGS

FIG. 1 is a schematic system diagram showing a TSA-type apparatus for purifying a hydrogen gas according to Embodiment 1 of the present invention.

FIG. 2 shows steps carried out in adsorption towers, opened/closed states of valves in the apparatus for purifying a hydrogen gas, and states of a gas compressor and a gas heater for steps in a method for purifying a hydrogen gas according to the Embodiment 1.

FIG. 3 is a schematic system diagram showing a gas flow state in a step 1 in the method for purifying a hydrogen gas according to the Embodiment 1.

FIG. 4 is a schematic system diagram showing a gas flow state in a step 2 in the method for purifying a hydrogen gas according to the Embodiment 1.

FIG. 5 is a schematic system diagram showing a gas flow state in a step 3 in the method for purifying a hydrogen gas according to the Embodiment 1.

FIG. 6 is a schematic system diagram showing a gas flow state in a step 4 in the method for purifying a hydrogen gas according to the Embodiment 1.

FIG. 7 is a schematic system diagram showing a gas flow state in a step 5 in the method for purifying a hydrogen gas according to the Embodiment 1.

FIG. 8 is a schematic system diagram showing a gas flow state in a step 6 in the method for purifying a hydrogen gas according to the Embodiment 1.

FIG. 9 is a schematic system diagram showing a gas flow state in a step 7 in the method for purifying a hydrogen gas according to the Embodiment 1.

FIG. 10 is a schematic system diagram showing a gas flow state in a step 8 in the method for purifying a hydrogen gas according to the Embodiment 1.

FIG. 11 is a schematic system diagram showing a gas flow state in a step 9 in the method for purifying a hydrogen gas according to the Embodiment 1.

FIG. 12 is a schematic system diagram showing a gas flow state in a step 10 in the method for purifying a hydrogen gas according to the Embodiment 1.

FIG. 13 is a schematic system diagram showing a TSA-type apparatus for purifying a hydrogen gas according to Embodiment 2 of the present invention.

FIG. 14 shows steps carried out in adsorption towers, opened/closed states of valves in the apparatus for purifying a hydrogen gas, and states of a gas compressor and a gas heater for steps in a method for purifying a hydrogen gas according to the Embodiment 2.

FIG. 15 is a schematic system diagram showing a gas flow state in a step 1 in the method for purifying a hydrogen

gas according to the Embodiment 2.

FIG. 16 is a schematic system diagram showing a gas flow state in a step 2 in the method for purifying a hydrogen gas according to the Embodiment 2.

FIG. 17 is a schematic system diagram showing a gas flow state in a step 3 in the method for purifying a hydrogen gas according to the Embodiment 2.

FIG. 18 is a schematic system diagram showing a gas flow state in a step 4 in the method for purifying a hydrogen gas according to the Embodiment 2.

FIG. 19 is a schematic system diagram showing a gas flow state in a step 5 in the method for purifying a hydrogen gas according to the Embodiment 2.

FIG. 20 is a schematic system diagram showing a gas flow state in a step 6 in the method for purifying a hydrogen gas according to the Embodiment 2.

FIG. 21 is a schematic system diagram showing a gas flow state in a step 7 in the method for purifying a hydrogen gas according to the Embodiment 2.

FIG. 22 is a schematic system diagram showing a gas flow state in a step 8 in the method for purifying a hydrogen gas according to the Embodiment 2.

FIG. 23 is a schematic system diagram showing a gas flow state in a step 9 in the method for purifying a hydrogen gas according to the Embodiment 2.

FIG. 24 is a schematic system diagram showing a gas flow state in a step 10 in the method for purifying a hydrogen gas according to the Embodiment 2.

FIG. 25 is a schematic system diagram showing a TSA-type apparatus for purifying a hydrogen gas according to Embodiment 3 of the present invention.

FIG. 26 shows steps carried out in adsorption towers, opened/closed states of valves in the apparatus for purifying a hydrogen gas, and states of a gas compressor and a gas heater for steps in a method for purifying a hydrogen gas according to the Embodiment 3.

FIG. 27 is a schematic system diagram showing a gas flow state in a step 1 in the method for purifying a hydrogen gas according to the Embodiment 3.

FIG. 28 is a schematic system diagram showing a gas flow state in a step 2 in the method for purifying a hydrogen gas according to the Embodiment 3.

FIG. 29 is a schematic system diagram showing a gas flow state in a step 3 in the method for purifying a hydrogen gas according to the Embodiment 3.

FIG. 30 is a schematic system diagram showing a gas flow state in a step 4 in the method for purifying a hydrogen gas according to the Embodiment 3.

FIG. 31 is a schematic system diagram showing a gas flow state in a step 5 in the method for purifying a hydrogen gas according to the Embodiment 3.

FIG. 32 is a schematic system diagram showing a gas flow state in a step 6 in the method for purifying a hydrogen gas according to the Embodiment 3.

FIG. 33 is a graphic chart showing adsorption isotherms for toluene, methyl ethyl hexane and hydrogen.

## EMBODIMENTS OF THE INVENTION

### Embodiment 1

#### Apparatus for Purifying Hydrogen Gas

An apparatus for purifying a hydrogen gas according to Embodiment 1 will be described below with reference to FIG. 1. It is to be noted that some parts are omitted because they are unnecessary for explanation, and some parts are illustrated in enlarged or reduced size for making explanation easy to understand.

An apparatus 1 for purifying a hydrogen gas according to this embodiment is an apparatus that purifies a raw material hydrogen gas containing an impurity constituent by a thermal swing adsorption (TSA) method using two towers: a first adsorption tower 10A and a second adsorption tower 10B each filled with an adsorbent.

In this embodiment, the raw material hydrogen gas means a hydrogen gas containing an organic compound as an impurity constituent. The raw material hydrogen gas is not particularly limited, and in this embodiment, examples of the raw material hydrogen gas include hydrogen gases extracted by an organic chemical hydride method. In these hydrogen gases, an aromatic compound such as toluene-methylcyclohexane (MCH), cyclohexane-benzene or naphthalene-decalin, or a hydrogenated aromatic compound is contained as an impurity constituent.

The apparatus 1 for purifying a hydrogen gas is applicable not only to the above-mentioned raw material hydrogen gases but also to raw material hydrogen gases containing at least one of pentane, hexane, heptane, octane, benzene, an alkyl cyclopentane and an alkyl cyclohexane as an impurity constituent. Therefore, the apparatus 1 for

purifying a hydrogen gas has high versatility.

There is no limitation on use of the apparatus 1 for purifying a hydrogen gas in this embodiment as long as the concentration of an impurity constituent contained in the raw material hydrogen gas is within a normal range. For example, the apparatus 1 for purifying a hydrogen gas is applicable to a raw material hydrogen gas containing an impurity constituent in a concentration of several tens of ppm to several %.

The adsorbent is not particularly limited, and can be appropriately selected according to, for example, a kind of impurity constituent to be adsorbed. Specific examples of the adsorbent include coconut shell-based activated carbon (e.g. coconut shell-based activated carbon manufactured by KURARAY CHEMICAL CO., LTD., model number: 2GG), coal-based activated carbon (e.g. coconut shell-based activated carbon manufactured by KURARAY CHEMICAL CO., LTD., model number: 4GG), zeolite (e.g. Zeolite 13X etc.) and activated alumina.

Among these adsorbents, activated carbon is preferable as an adsorbent in this embodiment because it has relatively low polarity, shows strong affinity for organic compounds, and does not suffer deterioration of adsorption performance even in the presence of moisture. Regarding adsorption performance of activated carbon, the pore size and the specific surface area may determine the selectivity of an adsorbate and the adsorption capacity, respectively.

Thus, when various kinds of impurity constituents are to be gas-adsorbed, activated carbon having a wide pore size distribution is advantageous, and in particular, the coconut shell-based activated carbon which is inexpensive is especially preferable. Accordingly, purification costs can be reduced.

The filling amount of the adsorbent is not particularly limited, and can be appropriately set in consideration of factors such as the constituents and flow rate of a raw material hydrogen gas, the adsorption cycle time, the purity of a hydrogen gas, and the operating pressure and temperature of an adsorption tower.

Raw material supply channels 21A and 21B communicate with the tower bottoms of the first adsorption tower 10A and the second adsorption tower 10B, respectively. The raw material supply channels 21A and 21B are provided with on-off valves 101A and 101B, respectively, and control of opening/closing of these valves is performed to control supply of a raw material hydrogen gas and stop of the supply of the raw material hydrogen gas to the first adsorption tower 10A and the second adsorption tower 10B. The raw material supply channels 21A and 21B branch from a raw material supply channel 21.

Purified hydrogen gas discharge channels 24A and 24B for discharging a hydrogen gas that is purified (hereinafter, referred to as a "purified hydrogen gas") communicate with the tops of the first adsorption tower 10A and the second adsorption tower 10B, respectively. The purified hydrogen gas discharge channels 24A and 24B are provided with on-off valves 106A and 106B, respectively, and control of opening/closing of these valves is performed to control discharge or stop of the discharge of a purified hydrogen gas from the first adsorption tower 10A or the second adsorption tower 10B. The purified hydrogen gas discharge channels 24A and 24B communicate with a purified hydrogen gas discharge channel 24 so as to be merged into the purified hydrogen gas discharge channel 24.

Purge gas circulation channels 22A and 22B for circulating a purge gas (described later for details) communicate with the raw material supply channels 21A and 21B, respectively. The purge gas circulation channels 22A and 22B communicate with a purge gas circulation channel 22 so as to be merged into the purge gas circulation channel 22. The purge gas circulation channel 22 is provided with a first cooler 11, a gas-liquid separator 12, a gas compressor 13 and a gas heater (heater) 14 in order. The first cooler 11 has a function of cooling the purge gas, so that an impurity constituent contained in the purge gas is condensed into a liquid.

The gas-liquid separator 12 has such a function that a mixed fluid of a hydrogen gas contained in the residual gas and an impurity constituent in the form of a liquid is separated into a gas and a liquid by, for example, collecting and separating the condensed liquid. To the gas-liquid separator 12 is further connected an organic solvent discharge channel 29, and an organic solvent of the impurity constituent subjected to the gas-liquid separation is discharged through the organic solvent discharge channel 29 to be recovered.

The gas compressor 13 has such a function that when the supply pressure of the purge gas or cooling gas is relatively low, the compressed purge gas or cooling gas is discharged for increasing the supply pressure. The gas compressor 13 is not particularly limited, and a previously known gas compressor can be used. The gas heater 14 has a function of heating the purge gas. The gas heater 14 is not particularly limited, and a previously known gas heater, such as an electric stainless sheath heater or a steam-type heater.

The purge gas circulation channel 22 communicates with purge gas circulation channels 25A and 25B so as to be branched into the purge gas circulation channels 25A and 25B. Further, the purge gas circulation channels 25A and 25B communicate with the purified hydrogen gas discharge channels 24A and 24B, respectively. The purge gas circulation channels 25A and 25B are provided with on-off valves 104A and 104B, respectively, and control of opening/closing of these valves is performed to control supply of a purge gas or stop of the supply of the purge gas to the purified hydrogen gas discharge channels 24A and 24B, so that the purge gas can be circulated and supplied to the first adsorption tower 10A or the second adsorption tower 10B.

The purified hydrogen gas discharge channel 24 communicates with a purified hydrogen gas introduction channel 28 in such a manner that a part of the purified hydrogen gas is separated to the purified hydrogen gas discharge

channel 24. The purified hydrogen gas introduction channel 28 is provided with an on-off valve 109, and by performing control of opening/closing of this valve, a part of the purified hydrogen gas can be supplied to the purge gas circulation channels 25A and 25B.

Cooling gas circulation channels 26A and 26B communicate with the purified hydrogen gas discharge channels 24A and 24B, respectively. The cooling gas circulation channels 26A and 26B communicate with a cooling gas circulation channel 26 so as to be merged into the cooling gas circulation channel 26, and the cooling gas circulation channel 26 communicates with the purge gas circulation channel 22. On the other hand, a cooling gas circulation channel 23 branches from the purge gas circulation channel 22 between the gas compressor 13 and the gas heater 14.

The cooling gas circulation channel 23 is provided with a second cooler 15 for cooling a cooling gas, and connected to cooling gas circulation channels 23A and 23B so as to be branched into the cooling gas circulation channels 23A and 23B. The cooling gas circulation channels 23A and 23B communicate with the raw material supply channels 21A and 21B, respectively.

Further, the cooling gas circulation channels 23A and 23B are provided with on-off valves 103A and 103B, respectively, and control of opening/closing of these valves is performed to control supply of a cooling gas or stop of the supply of the cooling gas to the raw material supply channels 21A and 21B, so that the cooling gas can be circulated and supplied to the first adsorption tower 10A or the second adsorption tower 10B.

Further, pressure raising channels 27A and 27B communicate with the purified hydrogen gas discharge channels 24A and 24B, respectively. An on-off valve 107 is provided between the pressure raising channel 27A and the pressure raising channel 27B. By opening the on-off valve 107, the tower internal pressures of the first adsorption tower 10A and the second adsorption tower 10B can be equalized.

Method for Purifying Hydrogen Gas

A method for purifying a hydrogen gas according to Embodiment 1 will now be described below with reference to FIGS. 2 to 12.

The method for purifying a hydrogen gas according to the present invention employs a TSA method, and comprises repeatedly carrying out an adsorption cycle including (1) an adsorption step, (2) a pressure reducing step, (3) a regeneration preparation step, (4) a heating and regeneration step, (5) a cooling step and (6) a pressure raising step in order in each adsorption tower.

While the adsorption step is carried out in one adsorption tower, a step other than the adsorption step, more specifically the (2) pressure reducing step to (6) pressure raising step, is carried out, and by operating the two adsorption towers while switching the steps as described above, a raw material hydrogen gas can be continuously and efficiently purified.

The adsorption step is a step of adsorbing and separating an impurity constituent from a raw material gas in an adsorption tower using an adsorbent filled into the adsorption tower. The raw material hydrogen gas is introduced from the tower bottom of the adsorption tower, and brought into contact with the adsorbent to adsorb only the impurity constituent. Accordingly, the hydrogen gas is purified. The flow rate and temperature of the raw material hydrogen gas to be supplied can be appropriately set as necessary.

Preferably, the supply pressure of the raw material hydrogen gas is set to the same value as the adsorption pressure in the adsorption tower. The period of time during which the adsorption step is carried out is not particularly limited, and it suffices that the adsorption step is carried out while steps ranging from the (2) pressure reducing step to the (6) pressure raising step are carried out.

The pressure reducing step is a step of reducing the tower internal pressure of the adsorption tower after the adsorption step to, for example, near atmospheric pressure. Specifically, a residual gas remaining in the adsorption tower is discharged from the tower bottom. In the pressure reducing step, an organic solvent retained in the gas-liquid separator 12 is also recovered. The organic solvent is a liquid of an impurity constituent generated when in the later-described heating and regeneration step, a purge gas is cooled to condense the impurity constituent into a liquid, and gas-liquid separation is then performed to separate a hydrogen gas contained in the purge gas and a liquid of the impurity constituent from each other. The period of time during which the pressure reducing step is carried out is not particularly limited, and when the tower internal pressure of the adsorption tower is reduced to atmospheric pressure, a transition can be made to the next step.

The regeneration preparation step is a step for ensuring that a purge gas to be used in the later-described heating and regeneration step is circulated with a certain supply pressure. Specifically, first at the time when a residual gas is discharged from the adsorption tower after the pressure reducing step, and the residual gas is circulated, a part of a purified hydrogen gas discharged from the other adsorption tower engaged in the adsorption step is introduced.

A residual gas remaining in the adsorption tower after the pressure reducing step is only used as a purge gas. As a result, the regeneration preparation step compensates for shortage of a supply pressure by introducing a purified hydrogen gas in the case where shortage of a supply pressure occurs. When the pressure of the purge gas reaches

a certain value, introduction of the purified hydrogen gas is stopped.

The specific value of the pressure of the purge gas in the regeneration preparation step is not particularly limited. In this step, the purge gas is not heated. The flow rate of the purge gas is not particularly limited, and can be appropriately set as necessary. The period of time during which the regeneration preparation step is carried out is not particularly limited, and when the pressure of at least the purge gas reaches a certain pressure, a transition can be made to the next step. Further, the flow direction of the purge gas is preferably a direction toward the tower bottom from the tower top of the adsorption tower.

The heating and regeneration step is a step of making reusable an adsorbent filled into the adsorption tower. Specifically, a purge gas circulated and supplied to the adsorption tower is heated by the gas heater 14, and the heated purge gas is brought into contact with the adsorbent to desorb an impurity constituent adsorbed to the adsorbent. By carrying out the heating and regeneration step, the adsorbent is regenerated, so that the adsorbent is capable of adsorbing an impurity constituent again.

This step is carried out while a heated purge gas is circulated, so that the amount of an exhausted purge gas can be considerably reduced as compared to the conventional TSA method in which a large amount of hydrogen gas is fed as a purge gas, and then exhausted. As a result, the recovery ratio of a purified hydrogen gas can be improved.

In the heating and regeneration step, the adsorbent is heated to a temperature at which an impurity constituent to be desorbed is vaporized. Therefore, the temperature at which the purge gas is heated by the gas heater 14 can be appropriately set according to the kind of an impurity constituent desired to be desorbed. Normally, on the basis of the temperature of the tower bottom in the adsorption tower, the heating is performed at a temperature within a range of 150 °C to 250 °C when the adsorbent is activated carbon. The heating is performed at a temperature within a range of 200 °C to 300 °C when the adsorbent is zeolite.

Preferably, the upper limit value of the heating temperature is set in consideration of the heat-resistance temperature of the adsorbent. The period of time during which the heating and regeneration step is carried out is not particularly limited, and when at least desorption from the adsorbent is completed, a transition can be made to the next step. The flow rate of the purge gas is not particularly limited, and can be appropriately set as necessary. Further, the flow direction of the purge gas is preferably a direction toward the tower bottom from the tower top of the adsorption tower.

In the heating and regeneration step, a step of separating and recovering as an organic solvent the impurity constituent contained in the purge gas. Specifically, in this step, the purge gas is cooled to condense an impurity constituent into a liquid, and gas-liquid separation is then performed to separate a hydrogen gas contained in the purge gas and a liquid of the impurity constituent from each other.

The cooling step is a step of feeding a cooling gas into an adsorption tower to cool an adsorbent filled into the tower. Accordingly, the adsorption capability of the adsorbent is restored. The cooling gas to be used in the cooling step is the purge gas cooled to a certain temperature. In the conventional TSA method, a purified hydrogen gas is used as a cooling gas, and the cooling gas once used in a cooling step is exhausted as it is.

In this embodiment, however, the cooling gas is circulated, and repeatedly used for cooling the adsorption tower, and therefore the loss of the purified hydrogen gas is suppressed, so that the recovery ratio can be improved. The cooling gas is cooled using the first cooler 11 and the second cooler 15. Preferably, the cooling is performed until the temperature of the cooling gas is, for example, almost equivalent to the temperature of the raw material hydrogen gas.

The pressure raising step (pressure restoring step) is a step of introducing a part of a purified hydrogen gas, which is discharged from an adsorption tower engaged in the adsorption step, into an adsorption tower after the cooling step to equalize the tower internal pressures of both the adsorption towers. Accordingly, the tower internal pressure of the adsorption tower after the cooling step can be raised to a pressure that is more suitable for carrying out the adsorption step.

The period of time in which each of the steps ranging from the pressure reducing step to the pressure raising step may fall within the period of time during which the adsorption step is carried out in the other adsorption tower, and the period of time during which each of these steps is carried out is appropriately adjusted within this range.

Operations as described above are carried out in the steps in the adsorption cycle, and these operations will be described further in detail along with the operations of the apparatus 1 for purifying a hydrogen gas according to the present invention. In each of the first adsorption tower 10A and the second adsorption tower 10B, one of the above-mentioned steps is carried out in each of steps 1 to 10 as shown in FIG. 2. Hereinafter, the method for purifying a hydrogen gas according to the present invention will be described in detail for each step.

1. Step 1

As shown in FIGS. 2 and 3, the adsorption step is carried out in the first adsorption tower 10A in step 1. Specifically, the on-off valve 101A is opened, so that a raw material hydrogen gas is supplied from the raw material supply channels 21 and 21A to the tower bottom of the first adsorption tower 10A. An impurity constituent is adsorbed and separated by an adsorbent in the first adsorption tower 10A to purify the raw material hydrogen gas. The purified hydrogen gas is discharged through the purified hydrogen gas discharge channels 24A and 24 from the tower top. The on-off valve

106A in the purified hydrogen gas discharge channel 24A is opened.

On the other hand, the pressure reducing step is carried out in the second adsorption tower 10B. Specifically, the on-off valve 102B is opened, so that a residual gas remaining in the second adsorption tower 10B is discharged through the purge gas circulation channel 22B from the tower bottom of the second adsorption tower 10B. When the pressure in the second adsorption tower 10B is accordingly reduced to, for example, atmospheric pressure (0 MPaG), the on-off valve 108 is closed to terminate the pressure reducing step (i.e. step 1).

In the pressure reducing step, the on-off valve 108 is also opened, and accordingly, the organic solvent of the impurity constituent stored in the gas-liquid separator 12 is discharged through the organic solvent discharge channel 29 to be recovered. The recovered organic solvent can be reused as, for example, an organic chemical hydride (aromatic compound) to be used in the organic chemical hydride method.

2. Step 2

As shown in FIGS. 2 and 4, the adsorption step is successively carried out in the first adsorption tower 10A in step 2.

On the other hand, the regeneration preparation step is carried out in the second adsorption tower 10B. Thus, the on-off valve 102B is in an opened state successively to the pressure reducing step. The on-off valve 109 is opened, so that a part of the purified hydrogen gas discharged from the first adsorption tower 10A is separated from the purified hydrogen gas discharge channel 24 to the purified hydrogen gas introduction channel 28. Further, the on-off valve 104B is also opened, and therefore the purified hydrogen gas flows from the purified hydrogen gas introduction channel 28 into the purge gas circulation channel 25B, and is combined with a residual gas in the purge gas circulation channel 25B to form a purge gas.

The purge gas is supplied to the second adsorption tower 10B from the tower top. In the regeneration preparation step, the gas compressor 13 is also driven, and accordingly, the purge gas is circulated to flow through the purge gas circulation channels 22B, 22 and 25B. Introduction of a part of the purified hydrogen gas is stopped by closing the on-off valve 109 at the time when the suction pressure of the gas compressor 13 reaches a certain value. With this, the regeneration preparation step (i.e. step 2) is terminated.

3. Step 3

As shown in FIGS. 2 and 5, the adsorption step is successively carried out in the first adsorption tower 10A in step 3.

On the other hand, the heating and regeneration step is carried out in the second adsorption tower 10B. Specifically, successively to the step 2, the purge gas is circulated, and simultaneously the gas heater 14 is driven to heat the purge gas. When the heated purge gas comes into contact with the adsorbent in the second adsorption tower 10B, the temperature of the adsorption tower rises, so that an impurity constituent is desorbed.

When the temperature at the tower bottom of the second adsorption tower 10B reaches a set temperature, the on-off valves 104B and 102B are closed, and the gas heater 14 is stopped. With this, the heating and regeneration step (i.e. step 3) is terminated. The set temperature is determined with consideration given to, for example, a temperature at which an impurity constituent to be desorbed is vaporized.

In the heating and regeneration step, separation of an impurity constituent contained in the purge gas is also performed. Specifically, the purge gas flowing through the purge gas circulation channels 22B and 22 is supplied to the first cooler 11, and cooled in the first cooler 11. Accordingly, the impurity constituent is condensed into a liquid (organic solvent). The cooling temperature is not particularly limited, and may be a temperature at which at least the impurity constituent is condensed.

Further, a mixed fluid of the purge gas and the organic solvent of the impurity constituent is supplied to the gas-liquid separator 12 through the purge gas circulation channel 22, and subjected to gas-liquid separation in the gas-liquid separator 12. Here, the on-off valve 108 is opened, and therefore the organic solvent of the impurity constituent is discharged through the organic solvent discharge channel 29 to be recovered.

4. Step 4

As shown in FIGS. 2 and 6, the adsorption step is successively carried out in the first adsorption tower 10A in step 4.

On the other hand, the cooling step is carried out in the second adsorption tower 10B. Specifically, the on-off valves 103B and 105B are opened, so that the purge gas is circulated through the cooling gas circulation channel 26B, the purge gas circulation channel 22 and the cooling gas circulation channels 23 and 23B as a cooling gas, and then supplied to the tower bottom of the second adsorption tower 10B. The cooling gas comes into contact with the adsorbent filled into

the second adsorption tower, whereby the adsorbent is cooled.

Thereafter, the cooling gas is discharged from the tower top, and flows through the cooling gas circulation channel 26B again, so that the cooling gas is circulated. The cooling gas is cooled in the first cooler 11 and the second cooler 15. The temperature of the cooling gas discharged from the gas compressor 13 is high, and therefore the second cooler 15 is provided to cool the discharged cooling gas. When the temperature at the tower top of the second adsorption tower 10B reaches a set temperature, the on-off valves 103B and 105B are closed to terminate the cooling step (i.e. step 4).

5. Step 5

As shown in FIGS. 2 and 7, the adsorption step is successively carried out in the first adsorption tower 10A in step 5.

On the other hand, the pressure raising step is carried out in the second adsorption tower 10B. Specifically, the on-off valve 107 is opened, so that a part of the purified hydrogen gas discharged from the first adsorption tower 10A is supplied to the second adsorption tower 10B through the pressure raising channels 27A and 27B. Accordingly, the tower internal pressures of the first adsorption tower 10A and the second adsorption tower 10B can be equalized, so that the tower internal pressure of the second adsorption tower 10B can be made more suitable for the adsorption step.

When the tower internal pressure of the second adsorption tower 10B becomes almost equivalent to the tower internal pressure of the first adsorption tower 10A, the on-off valve 107 is closed to terminate the pressure raising step (i.e. step 5).

6. Steps 6 to 10

In steps 6 to 10, the adsorption cycle is switched between the first adsorption tower 10A and the second adsorption tower 10B as shown in FIG. 2. Specifically, concurrently with termination of step 5, the adsorption step in the first adsorption tower 10A is terminated, and the adsorption step is started in the second adsorption tower 10B. The detailed operations of the apparatus 1 for purifying a hydrogen gas in steps 6 to 10 are as shown in FIGS. 8 to 12, where the same operations as in steps 1 to 5 are performed while the first adsorption tower 10A and the second adsorption tower 10B are used in a reverse manner. Therefore, details of the operations in steps 6 to 10 are omitted.

Embodiment 2

Apparatus for Purifying Hydrogen Gas

An apparatus for purifying a hydrogen gas according to Embodiment 2 will be described below with reference to FIG. 13. Constitutional elements having the same functions as in the apparatus 1 for purifying a hydrogen gas according to the Embodiment 1 are given like symbols, and details descriptions thereof are omitted.

As in the case of the Embodiment 1, an apparatus 2 for purifying a hydrogen gas according to this embodiment is an apparatus that purifies a raw material hydrogen gas containing an impurity constituent by a thermal swing adsorption (TSA) method using two towers: a first adsorption tower 10A and a second adsorption tower 10B each filled with an adsorbent.

Raw material supply channels 21A and 21B communicate with the tower bottoms of the first adsorption tower 10A and the second adsorption tower 10B, respectively. The raw material supply channels 21A and 21B are provided with on-off valves 101A and 101B, respectively. The raw material supply channels 21A and 21B branch from a raw material supply channel 21.

Purified hydrogen gas discharge channels 24A and 24B communicate with the tower tops of the first adsorption tower 10A and the second adsorption tower 10B, respectively. The purified hydrogen gas discharge channels 24A and 24B are provided with on-off valves 106A and 106B, respectively. The purified hydrogen gas discharge channels 24A and 24B communicate with a purified hydrogen gas discharge channel 24 so as to be merged into the purified hydrogen gas discharge channel 24.

Purge gas circulation channels 22A and 22B communicate with the raw material supply channels 21A and 21B. The purge gas circulation channels 22A and 22B communicate with a purge gas circulation channel 22 so as to be merged into the purge gas circulation channel 22. Further, the purge gas circulation channel 22 is provided with a first cooler 11, a gas-liquid separator 12, a gas compressor 13, a gas heater 14 and an on-off valve 110 in order. An organic solvent discharge channel 29 is connected to the gas-liquid separator 12.

The purge gas circulation channel 22 communicates with purge gas circulation channels 25A and 25B so as to be branched into the purge gas circulation channels 25A and 25B. Further, the purge gas circulation channels 25A and 25B communicate with the purified hydrogen gas discharge channels 24A and 24B, respectively. The purge gas circulation channels 25A and 25B are provided with on-off valves 104A and 104B, respectively.

On the other hand, a cooling gas circulation channel 23 branches from the purge gas circulation channel 22 between the gas compressor 13 and the gas heater 14. The cooling gas circulation channel 23 is provided with a second cooler 15 for cooling a cooling gas, and an on-off valve 111 for controlling an opened/closed state. Further, the second cooler 15 communicates with a cooling gas introduction channel 31, and the cooling gas introduction channel 31 communicates with the raw material supply channel 21. Accordingly, the cooling gas can be introduced into the raw material supply channel 21, and the cooling gas can be circulated and supplied to the first adsorption tower 10A or the second adsorption tower 10B.

Further, other purified hydrogen gas introduction channels 30A and 30B communicate with the purified hydrogen gas discharge channels 24A and 24B, and an on-off valve 112 is provided between the other purified hydrogen gas introduction channel 30A and the other hydrogen gas introduction channel 30B. By opening the on-off valve 112, a part of the purified hydrogen gas can be introduced from the first adsorption tower 10A to the second adsorption tower 10B and vice versa. The tower internal pressures of the first adsorption tower 10A and the second adsorption tower 10B can be equalized.

Method for Purifying Hydrogen Gas

A method for purifying a hydrogen gas according to the Embodiment 2 will now be described below with reference to FIGS. 14 to 24.

In this embodiment, an adsorption cycle including (1) an adsorption step, (2) a pressure reducing step, (3) a regeneration preparation step, (4) a heating and regeneration step, (5) a pressure raising step and (6) a cooling step is repeatedly carried out in each adsorption tower. This embodiment is different from the aspect of the Embodiment 1 in that the pressure raising step is carried out before the cooling step.

The steps ranging from the adsorption step to the heating and regeneration step, and the pressure raising step in this embodiment are the same as in the Embodiment 1. On the other hand, in the cooling step in this embodiment, a part of the purified hydrogen gas is used as a cooling gas. Thus, existence of an impurity constituent in the cooling gas can be prevented.

The cooling gas used for cooling is cooled by the first cooler 11 and the second cooler 15, and mixed with the raw material hydrogen gas to be resupplied to the adsorption tower engaged in the adsorption step. Thus, the loss of the purified hydrogen gas can be suppressed, so that the recovery ratio can be improved. The cooling by the first cooler 11 and the second cooler 15 is performed until the temperature of the cooling gas is almost equivalent to the raw material hydrogen gas.

In this embodiment, the pressure raising step is carried out before the cooling step for the purpose of combining the cooling gas used in the cooling step with the raw material hydrogen gas to prevent a reduction in supply pressure of the raw material hydrogen gas. Specifically, the adsorption tower engaged in the adsorption step has a raised pressure, but the adsorption tower to be engaged in the cooling step is subjected to the pressure raising step of introducing a part of the purified hydrogen gas discharged from the adsorption tower engaged in the adsorption step, whereby a pressure difference between the two adsorption towers is eliminated. Accordingly, the used cooling gas can be flowed into the raw material hydrogen gas.

In the steps in the adsorption cycle, operations as described above are performed, and these operations will be described below further in detail along with the operations of the apparatus 2 for purifying a hydrogen gas according to this embodiment. In each of the first adsorption tower 10A and the second adsorption tower 10B, one of the above-mentioned steps is carried out in each of steps 1 to 10 as shown in FIG. 14. Hereinafter, the method for purifying a hydrogen gas according to the present invention will be described in detail for each step.

1. Step 1

As shown in FIGS. 14 and 15, the adsorption step is carried out in the first adsorption tower 10A in step 1. Specifically, the on-off valve 101A is opened, so that a raw material hydrogen gas is supplied from the raw material supply channels 21 and 21A to the tower bottom of the first adsorption tower 10A. An impurity constituent is adsorbed and separated by an adsorbent in the first adsorption tower 10A to purify the raw material hydrogen gas. The purified hydrogen gas is discharged through the purified hydrogen gas discharge channels 24A and 24 from the tower top. The on-off valve 106A in the purified hydrogen gas discharge channel 24A is opened.

On the other hand, the pressure reducing step is carried out in the second adsorption tower 10B. Specifically, the on-off valve 102B is opened, so that a residual gas remaining in the second adsorption tower 10B is discharged through the purge gas circulation channel 22B from the tower bottom of the second adsorption tower 10B. When the pressure in the second adsorption tower 10B is accordingly reduced to, for example, atmospheric pressure (0 MPaG), the on-off valve 108 is closed to terminate the pressure reducing step (i.e. step 1).

In the pressure reducing step, the on-off valve 108 is also opened, and accordingly, the organic solvent of the

impurity constituent stored in the gas-liquid separator 12 is discharged through the organic solvent discharge channel 29 to be recovered. The recovered organic solvent can be reused as, for example, an organic chemical hydride (aromatic compound) to be used in the organic chemical hydride method.

2. Step 2

As shown in FIGS. 14 and 16, the adsorption step is successively carried out in the first adsorption tower 10A in step 2.

On the other hand, the regeneration preparation step is carried out in the second adsorption tower 10B. Thus, the on-off valve 102B is in an opened state successively to the pressure reducing step. The on-off valve 112 is opened, so that a part of the purified hydrogen gas discharged from the first adsorption tower 10A is supplied to the second adsorption tower 10B through the purified hydrogen gas introduction channels 30A and 30B. Accordingly, the purified hydrogen gas is also circulated as a purge gas.

Further, in the regeneration preparation step, the on-off valves 104B and 110 are opened, and the gas compressor 13 is driven. Accordingly, the purge gas is circulated to flow through the purge gas circulation channels 22B, 22 and 25B. Introduction of a part of the purified hydrogen gas is stopped by closing the on-off valve 112 at the time when the suction pressure of the gas compressor 13 reaches a certain value. With this, the regeneration preparation step (i.e. step 2) is terminated.

3. Step 3

As shown in FIGS. 14 and 17, the adsorption step is successively carried out in the first adsorption tower 10A in step 3.

On the other hand, the heating and regeneration step is carried out in the second adsorption tower 10B. Specifically, successively to the step 2, the purge gas is circulated, and simultaneously the gas heater 14 is driven to heat the purge gas. When the heated purge gas comes into contact with the adsorbent in the second adsorption tower 10B, the temperature of the adsorption tower rises, so that an impurity constituent is desorbed.

When the temperature at the tower bottom of the second adsorption tower 10B reaches a set temperature, the on-off valves 104B and 110 are closed, and the gas heater 14 is stopped. With this, the heating and regeneration step (i.e. step 3) is terminated. The set temperature is determined with consideration given to, for example, a temperature at which an impurity constituent to be desorbed is vaporized.

In the heating and regeneration step, separation of an impurity constituent contained in the purge gas is also performed. Specifically, the purge gas flowing through the purge gas circulation channels 22B and 22 is cooled in the first cooler 11. Accordingly, the impurity constituent is condensed into a liquid (organic solvent). The cooling temperature is not particularly limited, and may be a temperature at which at least the impurity constituent is condensed.

Further, a mixed fluid of the purge gas and the organic solvent of the impurity constituent is supplied to the gas-liquid separator 12 through the purge gas circulation channel 22, and subjected to gas-liquid separation in the gas-liquid separator 12. Here, the on-off valve 108 is opened, and therefore the organic solvent of the impurity constituent is discharged through the organic solvent discharge channel 29 to be recovered.

4. Step 4

As shown in FIGS. 14 and 18, the adsorption step is successively carried out in the first adsorption tower 10A in step 4.

On the other hand, the pressure raising step is carried out in the second adsorption tower 10B. Specifically, the on-off valve 112 is opened, so that a part of the purified hydrogen gas discharged from the first adsorption tower 10A is supplied to the second adsorption tower 10B through the purified hydrogen gas introduction channels 30A and 30B. Accordingly, the tower internal pressures of the first adsorption tower 10A and the second adsorption tower 10B can be equalized, so that the tower internal pressure of the second adsorption tower 10B is increased for making it possible to carry out the cooling step. When the tower internal pressure of the second adsorption tower 10B becomes almost equivalent to the tower internal pressure of the first adsorption tower 10A, the pressure raising step (i.e. step 4) is terminated.

5. Step 5

As shown in FIGS. 14 and 19, the adsorption step is successively carried out in the first adsorption tower 10A in step 5.

On the other hand, the cooling step is carried out in the second adsorption tower 10B. Thus, the on-off valve 112 is

in an opened state successively to the pressure raising step. Accordingly, the cooling gas comes into contact with the adsorbent filled into the second adsorption tower, so that the adsorbent is cooled. The on-off valves 102B and 111 are opened, so that the used cooling gas is circulated through the purge gas circulation channels 22B and 22 and the cooling gas circulation channels 23 and 31, and then supplied to the raw material supply channel 21. The cooling gas is cooled in the first cooler 11 and the second cooler 15 during the circulation.

The temperature of the cooling gas discharged from the gas compressor 13 is high, and therefore the second cooler 15 is provided to cool the discharged cooling gas. When the temperature at the tower bottom of the second adsorption tower 10B reaches a set temperature, the on-off valves 102B, 111 and 112 are closed to terminate the cooling step (i.e. step 5).

6. Steps 6 to 10

In steps 6 to 10, the adsorption cycle is switched between the first adsorption tower 10A and the second adsorption tower 10B as shown in FIG. 14. Specifically, concurrently with termination of step 5, the adsorption step in the first adsorption tower 10A is terminated, and the adsorption step is started in the second adsorption tower 10B. The detailed operations of the apparatus 2 for purifying a hydrogen gas in steps 6 to 10 are as shown in FIGS. 20 to 24, where the same operations as in the steps 1 to 5 are performed while the first adsorption tower 10A and the second adsorption tower 10B are used in a reverse manner. Therefore, details of the operations in steps 6 to 10 are omitted.

## Embodiment 3

### Apparatus for Purifying Hydrogen Gas

An apparatus for purifying a hydrogen gas according to Embodiment 3 will be described below with reference to FIG. 25. Constitutional elements having the same functions as in the apparatus 1 for purifying a hydrogen gas according to the Embodiment 1 or the apparatus 2 for purifying a hydrogen gas according to the Embodiment 2 are given like symbols, and details descriptions thereof are omitted.

As in the case of the Embodiment 1 or Embodiment 2, an apparatus 3 for purifying a hydrogen gas according to this embodiment is an apparatus that purifies a raw material hydrogen gas containing an impurity constituent by a thermal swing adsorption (TSA) method using two towers: a first adsorption tower 10A and a second adsorption tower 10B each filled with an adsorbent.

Raw material supply channels 21A and 21B communicate with the tower bottoms of the first adsorption tower 10A and the second adsorption tower 10B, respectively. The raw material supply channels 21A and 21B are provided with on-off valves 101A and 101B, respectively. The raw material supply channels 21A and 21B branch from a raw material supply channel 21.

Purified hydrogen gas discharge channels 24A and 24B communicate with the tower tops of the first adsorption tower 10A and the second adsorption tower 10B, respectively. The purified hydrogen gas discharge channels 24A and 24B are provided with on-off valves 106A and 106B, respectively. The purified hydrogen gas discharge channels 24A and 24B communicate with a purified hydrogen gas discharge channel 24 so as to be merged into the purified hydrogen gas discharge channel 24.

Purge gas circulation channels 22A and 22B communicate with the raw material supply channels 21A and 21B. The purge gas circulation channels 22A and 22B communicate with a purge gas circulation channel 22 so as to be merged into the purge gas circulation channel 22. Further, the purge gas circulation channel 22 is provided with a first cooler 11 and a gas-liquid separator 12 in order. An organic solvent discharge channel 29 is connected to the gas-liquid separator 12.

To the gas-liquid separator 12 is connected a purge gas/cooling gas introduction channel 32 for guiding a purge gas or cooling gas to the raw material supply channel 21. The purge gas/cooling gas introduction channel 32 is provided with an on-off valve 113 for controlling an opened/closed state. Accordingly, the purge gas or cooling gas can be introduced into the raw material supply channel 21, and the purge gas or cooling gas can be circulated and supplied to the first adsorption tower 10A or the second adsorption tower 10B.

Further, a purified hydrogen gas introduction channel 33 communicates with the purified hydrogen gas discharge channel 24. The purified hydrogen gas introduction channel 33 is provided with a gas compressor 13 and a gas heater 14 in order. The purified hydrogen gas introduction channel 33 communicates with purge gas circulation channels 25A and 25B so as to be branched into the purge gas circulation channels 25A and 25B. The purge gas circulation channels 25A and 25B are provided with on-off valves 104A and 104B, respectively.

### Method for Purifying Hydrogen Gas

A method for purifying a hydrogen gas according to the Embodiment 3 will now be described below with reference

to FIGS. 26 to 32.

In this embodiment, an adsorption cycle including (1) an adsorption step, (2) a regeneration preparation step, (3) a heating and regeneration step and (4) a cooling step is repeatedly carried out in each adsorption tower. This embodiment is different from the aspect of the Embodiment 1 in that the pressure reducing step and the pressure raising step are omitted.

The adsorption step in this embodiment is the same as in the Embodiment 1 and the Embodiment 2. On the other hand, the regeneration preparation step in this embodiment is different from that in Embodiments 1 and 2 in that the purified hydrogen gas used as a purge gas is mixed with the raw material hydrogen gas to be resupplied to the adsorption tower engaged in the adsorption step. Accordingly, in this embodiment, the loss of the purified hydrogen gas can be suppressed, so that the recovery ratio can be improved.

The heating and regeneration step in this embodiment is different from that in Embodiments 1 and 2 in that the purified hydrogen gas used as a purge gas is mixed with the raw material hydrogen gas to be resupplied to the adsorption tower engaged in the adsorption step as in the case of the regeneration preparation step.

Further, in the cooling step in this embodiment, a part of the purified hydrogen gas is used as a cooling gas. Thus, existence of an impurity constituent in the cooling gas can be prevented. The cooling gas used for cooling is cooled by the first cooler 11, and mixed with the raw material hydrogen gas to be resupplied to the adsorption tower engaged in the adsorption step. Thus, the loss of the purified hydrogen gas can be suppressed, so that the recovery ratio can be improved. The cooling by the first cooler 11 is performed until the temperature of the cooling gas is almost equivalent to the raw material hydrogen gas.

In this embodiment, the adsorption tower in which an adsorbent is regenerated is placed under the same pressure condition as that during the adsorption step, and therefore the pressure reducing step and the pressure raising step can be omitted. In addition, the apparatus 3 for purifying a hydrogen gas according to this embodiment can be made to have a simpler apparatus structure as compared to the apparatuses 1 and 2 for purifying a hydrogen gas according to the Embodiments 1 and 2, respectively.

In the steps in the adsorption cycle, operations as described above are performed, and these operations will be described below further in detail along with the operations of the apparatus 3 for purifying a hydrogen gas according to this embodiment. In each of the first adsorption tower 10A and the second adsorption tower 10B, one of the above-mentioned steps is carried out in each of steps 1 to 6 as shown in FIG. 26. Hereinafter, the method for purifying a hydrogen gas according to the present invention will be described in detail for each step.

## 1. Step 1

As shown in FIGS. 26 and 27, the adsorption step is carried out in the first adsorption tower 10A in step 1. Specifically, the on-off valve 101A is opened, so that a raw material hydrogen gas is supplied from the raw material supply channels 21 and 21A to the tower bottom of the first adsorption tower 10A. An impurity constituent is adsorbed and separated by an adsorbent in the first adsorption tower 10A to purify the raw material hydrogen gas. The purified hydrogen gas is discharged through the purified hydrogen gas discharge channels 24A and 24 from the tower top. The on-off valve 106A in the purified hydrogen gas discharge channel 24A is opened.

On the other hand, the regeneration preparation step is carried out in the second adsorption tower 10B. Specifically, the on-off valve 104B is opened, and the gas compressor 13 is driven, so that a part of the purified hydrogen gas discharged from the purified hydrogen gas discharge channel 24 is supplied to the second adsorption tower 10B as a purge gas. Further, in the regeneration preparation step, the on-off valve 102B is opened, so that the purge gas is supplied to the raw material supply channel 21 through the purge gas circulation channel 22 and the purge gas/cooling gas introduction channel 32.

In the regeneration preparation step, the on-off valve 108 is also opened, and accordingly, the organic solvent of the impurity constituent stored in the gas-liquid separator 12 is discharged through the organic solvent discharge channel 29 to be recovered. The recovered organic solvent can be reused as, for example, an organic chemical hydride (aromatic compound) to be used in the organic chemical hydride method.

## 2. Step 2

As shown in FIGS. 26 and 28, the adsorption step is successively carried out in the first adsorption tower 10A in step 2.

On the other hand, the heating and regeneration step is carried out in the second adsorption tower 10B. Thus, the on-off valves 104A, 102B and 113 are successively in an opened state. Successively to the step 1, the purge gas is circulated, and simultaneously the gas heater 14 is driven to heat the purge gas. When the heated purge gas comes into contact with the adsorbent in the second adsorption tower 10B, the temperature of the adsorption tower rises, so that an impurity constituent is desorbed.

When the temperature at the tower bottom of the second adsorption tower 10B reaches a set temperature, the gas heater 14 is stopped. With this, the heating and regeneration step (i.e. step 3) is terminated. The set temperature is determined with consideration given to, for example, a temperature at which an impurity constituent to be desorbed is vaporized.

In the heating and regeneration step, separation of an impurity constituent contained in the purge gas is also performed. Specifically, the purge gas flowing through the purge gas circulation channel 22 is cooled in the first cooler 11. Accordingly, the impurity constituent is condensed into a liquid (organic solvent). Further, a mixed fluid of the purge gas and the organic solvent of the impurity constituent is supplied to the gas-liquid separator 12 through the purge gas circulation channel 22, and subjected to gas-liquid separation in the gas-liquid separator 12.

The on-off valve 108 is opened, and therefore the organic solvent of the impurity constituent is discharged through the organic solvent discharge channel 29. The recovered organic solvent can be reused as, for example, an organic chemical hydride (aromatic compound) to be used in the organic chemical hydride method.

3. Step 3

As shown in FIGS. 26 and 29, the adsorption step is successively carried out in the first adsorption tower 10A in step 3.

On the other hand, the cooling step is carried out in the second adsorption tower 10B. Thus, the on-off valves 104B, 102B and 113 are successively in an opened state. Accordingly, the cooling gas comes into contact with the adsorbent filled into the second adsorption tower 10B, so that the adsorbent is cooled. The on-off valves 102B and 113 are opened, so that the used cooling gas is circulated through the purge gas circulation channels 22B and 22 and the purge gas/cooling gas introduction channel 32, and then supplied to the raw material supply channel 21. The cooling gas is cooled in the first cooler 11 during the circulation. When the temperature at the tower bottom of the second adsorption tower 10B reaches a set temperature, the on-off valves 102B and 104B are closed to terminate the cooling step (i.e. step 5).

In the cooling step, the organic solvent of the impurity constituent is discharged through the organic solvent discharge channel 29.

4. Steps 4 to 6

In steps 4 to 6, the adsorption cycle is switched between the first adsorption tower 10A and the second adsorption tower 10B as shown in FIG. 26. Specifically, concurrently with termination of step 3, the adsorption step in the first adsorption tower 10A is terminated, and the adsorption step is started in the second adsorption tower 10B. The detailed operations of the apparatus 3 for purifying a hydrogen gas in steps 4 to 6 are as shown in FIGS. 31 and 32, where the same operations as in the steps 1 to 3 are performed while the first adsorption tower 10A and the second adsorption tower 10B are used in a reverse manner. Therefore, details of the operations in steps 6 to 10 are omitted.

Other Items

In the method for purifying a hydrogen gas as described in each of the embodiments, a step for carrying out a TSA method may be added. Here, the apparatuses 1 to 3 for purifying a hydrogen gas can be provided with a PSA apparatus which makes it possible to purify a discharged purified hydrogen gas by a PSA method. Accordingly, other impurity constituents (e.g. methane and ethane) that have not been adsorbed by the adsorption tower in the adsorption step can be removed. In the adsorption tower in the PSA apparatus, constituents to be adsorbed by an adsorbent are only the other impurity constituents, so that the amount of the purge gas can be reduced in the PSA apparatus, and as a result, the recovery ratio of the purified hydrogen gas can be kept high.

EXAMPLES

Apparatus for Purifying Hydrogen Gas

In each example described below, simulation of purification of a raw material hydrogen gas was performed by repeating an adsorption cycle as shown in each of FIGS. 2 to 13 using the apparatus 1 for purifying a hydrogen gas as shown in FIG. 1 (see FIG. 1). The sizes of the first adsorption tower 10A and the second adsorption tower 10B were as follows.

Tower diameter: 500 mm
Adsorbent filling height with adsorption tower diameter: 1.5 m
Adsorption tower height (T.L distance): 2 m

The filling amount of the adsorbent was 120 kg.

Adsorbent

Coconut shell-based activated carbon (coconut shell-based activated carbon manufactured by KURARAY CHEMICAL CO., LTD., model number: 2GG) was used as an adsorbent.

Measurement of Adsorption Amount

First, the adsorption amount (static adsorption capacity) for each of toluene (purity: 99.5 % by weight or more; manufactured by Wako Pure Chemical Industries, Ltd.) and methylcyclohexane (hereinafter, referred to as "MCH"; purity: 98 % by weight or more; manufactured by Wako Pure Chemical Industries, Ltd.) was measured using an automatic gas/vapor adsorption amount measuring apparatus (model number: BELSORP-18; manufactured by BEL JAPAN, INC.). The mass of the toluene sample was 0.1128 g, and the mass of the MCH sample was 0.1064 g. The adsorption temperature was 303 K. The results are shown in FIG. 33.

Subsequently, the static adsorption capacity for hydrogen (purity: 99.95 % or more) (manufactured by AIR WATER INC.) was measured using a high-pressure gas adsorption amount measuring apparatus (model number: BELSORP-miniII; manufactured by BEL JAPAN, INC.). The mass of the hydrogen sample was 0.2124 g. The adsorption temperature was 303 K. The results are shown in FIG. 33.

As is evident from FIG. 33, the coconut shell-based activated carbon adsorbent hardly adsorbed hydrogen while exhibiting an excellent adsorption capability for toluene and MCH (e.g. the static adsorption capacity at a partial pressure of 1 kPa was 90 NL/kg (37 wt%) for toluene, 73 NL/kg (32 wt%) for MCH, and 0.1 NL/kg or less (0.001 wt% or less) for hydrogen). Therefore, adsorption amounts for toluene, MCH and hydrogen under operation conditions as described in examples were set as shown below.

Toluene: 114 NL/kg (47 % by mass) (toluene concentration: 5400 ppm)
MCH: 87 NL/kg (38 % by mass) (MCH concentration: 5400 ppm)
Hydrogen: 0.001 % by mass or less

Example 1

Simulation of purification of a raw material hydrogen gas was performed by repeating an adsorption cycle as shown in each of FIGS. 2 to 13 using the apparatus 1 for purifying a hydrogen gas as shown in FIG. 1.

First, the raw material hydrogen gas had a toluene content of 5400 ppm (0.9 MPaG; amount of saturated vapor at 30 °C) and a methylcyclohexane content of 0 ppm. The purification conditions were as follows. The adsorption cycle time (1 cycle) was 8 hours.

Adsorption Conditions

Adsorption time: 4 hours
Raw material hydrogen gas flow rate: 305 $Nm^3/h$
Amount of raw material hydrogen gas supplied to adsorption tower per cycle = 305 $Nm^3/hr \times 4hr = 1220\ Nm^3$
Amount of purified hydrogen gas discharged from adsorption tower per cycle = 1.41 $Nm^3$
Supply pressure: 0.9 MPaG
Temperature of raw material hydrogen gas: 40 °C
Tower internal pressure: 0.9 MPaG

Pressure Reducing Step

Pressure reducing time: 0.5 hours

Regeneration Preparation Step

Regeneration preparation time: 0.5 hours

Tower internal pressure: 0.01 MPaG

Heating and Regeneration Step

Heating and regeneration time: 1.5 hours
Heating and regeneration temperature (tower bottom temperature): 160 °C
Purge gas temperature: 40 °C
Specific heat at constant pressure for hydrogen: 0.304 kcal/ (K•$Nm^3$)
Purge gas flow rate: 160 $Nm^3/h$
Tower internal pressure: 0.01 MPaG

Cooling Step

Cooling time: 1.0 hour
Cooling temperature (tower top temperature): 40 °C
Cooling gas temperature: 40 °C
Cooling gas flow rate: 160 $Nm^3/h$
Tower internal pressure: 0.01 MPaG

Pressure Raising Step

Pressure raising time: 0.5 hours

Simulation of purification of a raw material hydrogen gas was performed under the above-mentioned purification conditions, and the result showed that the content of toluene in the purified hydrogen gas was reduced to 1 ppm or less. The hydrogen recovery ratio of the hydrogen gas was 99.88 mol%.

The value of the recovery ratio of the hydrogen gas was calculated from the following equation:

hydrogen gas recovery ratio (mol%) = (amount of raw material hydrogen gas introduced into adsorption tower per cycle - amount of purified hydrogen gas discharged from adsorption tower per cycle) / (amount of raw material hydrogen gas supplied to adsorption tower per cycle) $\times$ 100

Example 2

In this example, the raw material hydrogen gas had a toluene content of 2700 ppm and a methylcyclohexane content of 2700 ppm. The amount of the purified hydrogen gas discharged from the adsorption tower per cycle was 1.57 $Nm^3$. Otherwise in the same manner as in Example 1, simulation of purification of the raw material hydrogen gas was performed.

The result showed that the content of toluene and the content of methylcyclohexane in the purified hydrogen gas were reduced to 1 ppm or less. The hydrogen recovery ratio of the hydrogen gas was 99.87 mol%.

Example 3

In this example, the raw material hydrogen gas had a toluene content of 0 ppm and a methylcyclohexane content of 5400 ppm. The amount of the purified hydrogen gas discharged from the adsorption tower per cycle was 1.74 $Nm^3$. Otherwise in the same manner as in Example 1, simulation of purification of the raw material hydrogen gas was performed.

The result showed that the content of methylcyclohexane in the purified hydrogen gas was reduced to 1 ppm or less. The hydrogen recovery ratio of the hydrogen gas was 99.86 mol%.

Results

The results of simulation in Examples 1 to 3 showed that the apparatuses for purifying a hydrogen gas in these examples were capable of reducing the contents of impurity constituents: toluene and methylcyclohexane to 1 ppm or less. Accordingly, it was apparent that utilization criteria on a hydrogen gas capable of being used in, for example, fuel battery vehicles were satisfied. The recovery ratio of the hydrogen gas was 99.86 to 99.88 mol%, and it was thus confirmed that the

loss of the purified hydrogen gas was reduced as compared to a conventional TSA method.

DESCRIPTION OF REFERENCE SIGNS

| | |
|---|---|
| 1, 2, 3 | Apparatus for purifying hydrogen gas |
| 10A | First adsorption tower |
| 10B | Second adsorption tower |
| 11 | First cooler |
| 12 | Gas-liquid separator |
| 13 | Gas compressor |
| 14 | Gas heater (heater) |
| 15 | Second cooler |
| 21, 21A, 21B | Raw material supply channel |
| 22, 22A, 22B | Purge gas circulation channel |
| 23, 23A, 23B | Cooling gas circulation channel |
| 24, 24A, 24B | Purified hydrogen gas discharge channel |
| 25A, 25B | Purge gas circulation channel |
| 26, 26A, 26B | Cooling gas circulation channel |
| 27A, 27B | Pressure raising channel |
| 28 | Purified hydrogen gas introduction channel |
| 29 | Organic solvent discharge channel |
| 30A, 30B | Other purified hydrogen gas introduction channel |
| 31 | Cooling gas introduction channel |
| 32 | Purge gas/cooling gas introduction channel |
| 33 | Purified hydrogen gas introduction channel |
| 101A~106A | On-off valve |
| 101B~106B | On-off valve |
| 107~113 | On-off valve |

**Claims**

**1.** A method for purifying a hydrogen gas in which a raw material hydrogen gas containing an impurity constituent is purified using a pair of adsorption towers each filled with an adsorbent, the method comprising:

- repeatedly carrying out an adsorption cycle comprising at least an adsorption step of separating the impurity constituent from the raw material hydrogen gas by adsorbing the impurity constituent to the adsorbent in the adsorption towers, and
- a heating and regeneration step of desorbing the impurity constituent from the adsorbent by supplying a heated purge gas to the adsorption tower after the adsorption step,
in each of the adsorption towers; and
- while carrying out the adsorption step in one adsorption tower, carrying out a step other than the adsorption step in the other adsorption tower, wherein
the adsorption cycle further comprises
- a pressure reducing step of reducing the pressure of the adsorption tower just after the adsorption step by discharging a residual gas remaining in the adsorption tower, and
- a regeneration preparation step of mixing a part of a purified hydrogen gas, which is discharged from the adsorption tower engaged in the adsorption step, with the residual gas to form the purge gas, and supplying the purge gas to the adsorption tower after the adsorption step while circulating the purge gas, before the heating and regeneration step, and

the heating and regeneration step comprising supplying the purge gas to the adsorption tower after the adsorption step while circulating the purge gas, and wherein the heating and regeneration step further comprises the step of cooling the purge gas to condense an impurity constituent contained in the purge gas into a liquid, performing gas-liquid separation to separate a hydrogen gas contained in the purge gas and a liquid of the impurity constituent from each other, and recovering the liquid of the impurity constituent.

**2.** The method for purifying a hydrogen gas according to claim 1, wherein the adsorption cycle further comprises

- a cooling step of cooling the adsorption tower after the heating and regeneration step to a temperature, at which the adsorbent can be adsorbed, by circulating and supplying the purge gas to the adsorption tower as a cooling gas without at least heating of the purge gas, and
- a pressure raising step of raising the pressure of the adsorption tower after the cooling step by supplying to the adsorption tower a part of the purified hydrogen gas discharged from the adsorption tower engaged in the adsorption step.

**3.** The method for purifying a hydrogen gas according to claim 1 or 2, wherein the adsorption cycle further comprises

- a pressure raising step of raising the pressure of the adsorption tower after the heating and regeneration step by supplying to the adsorption tower a part of the purified hydrogen gas discharged from the adsorption tower engaged in the adsorption step, and
- a cooling step of cooling the adsorption tower after the pressure raising step to a temperature, at which the adsorbent can be adsorbed, by supplying to the adsorption tower a part of the purified hydrogen gas discharged from the adsorption tower engaged in the adsorption step without at least heating of the part of the purified hydrogen gas, then combining the part of the purified hydrogen gas with the raw material hydrogen gas, and supplying the combined gas to the adsorption tower engaged in the adsorption step.

**4.** An apparatus suitable for purifying a hydrogen gas, which comprises a pair of adsorption towers each filled with an adsorbent and configured to purify a raw material hydrogen gas containing an impurity constituent, wherein

each of the adsorption towers is configured to repeatedly carry out an adsorption cycle therein, the adsorption cycle comprising at least an adsorption step of separating the impurity constituent from the raw material hydrogen gas by adsorbing the impurity constituent to the adsorbent in the adsorption tower, and a heating and regeneration step of desorbing the impurity constituent from the adsorbent by supplying a heated purge gas to the adsorption tower after the adsorption step,
the apparatus comprising:

a raw material supply channel configured such that the raw material hydrogen gas is supplied to one of the pair of adsorption towers in which the adsorption step is carried out, whereas the raw material hydrogen gas is not supplied to the other adsorption tower in which a step other than the adsorption step is carried out;
a purge gas circulation channel configured to supply the heated purge gas to the adsorption tower engaged in the heating and regeneration step while circulating the heated purge gas; and
a heater which is connected to the purge gas circulation channel, and is configured to heat the purge gas, wherein the purge gas circulation channel is provided with a cooler configured to cool the purge gas to condense an impurity constituent contained in the purge gas into a liquid, and
a gas-liquid separator configured to perform gas-liquid separation to separate a hydrogen gas contained in the purge gas and a liquid of the impurity constituent from each other, and recovering the liquid of the impurity constituent, and
a purified hydrogen gas introduction channel configured to supply a part of the purified hydrogen gas and to communicate with the purge gas circulation channel.

## Patentansprüche

**1.** Verfahren zur Reinigung eines Wasserstoffgases, in welchem ein Wasserstoffgas-Rohmaterial, das einen Verunreinigungsbestandteil enthält, unter Verwendung eines Paares von Adsorptionstürmen, die jeweils mit einem Adsorptionsmittel gefüllt sind, gereinigt wird, wobei das Verfahren Folgendes aufweist:

- wiederholtes Durchführen eines Adsorptionszyklus, der zumindest einen Adsorptionsschritt zum Abtrennen des Verunreinigungsbestandteils aus dem Wasserstoffgas-Rohmaterial durch Adsorbieren des Verunreinigungsbestandteils an das Adsorptionsmittel in den Adsorptionstürmen umfasst, und
- einen Erwärmungs- und Regenerierungsschritt zum Desorbieren des Verunreinigungsbestandteils aus dem Adsorptionsmittel durch Zuführen eines erwärmen Spülgases zum Adsorptionsturm nach dem Adsorptionsschritt,
in jedem der Adsorptionstürme; und

- während der Durchführung des Adsorptionsschritts in einem Adsorptionsturm, Durchführen eines anderen Schritts als den Adsorptionsschritt in dem anderen Adsorptionsturm, wobei der Adsorptionszyklus ferner Folgendes umfasst
- einen Druckreduzierungsschritt zum Reduzieren des Drucks des Adsorptionsturms gleich nach dem Adsorptionsschritt durch Ablassen eines im Adsorptionsturm verbliebenen Restgases, und
- einen Regenerationsvorbereitungsschritt des Mischens eines Teils eines gereinigten Wasserstoffgases, das aus dem im Adsorptionsschritt eingebundenen Adsorptionsturm abgegeben wird, mit dem Restgas, um das Spülgas zu bilden, und des Zuführens des Spülgases zum Adsorptionsturm nach dem Adsorptionsschritt unter Zirkulieren des Spülgases vor dem Erwärmungs- und Regenerierungsschritt, und

wobei der Erwärmungs- und Regenerierungsschritt das Zuführen des Spülgases zum Adsorptionsturm nach dem Adsorptionsschritt unter Zirkulieren des Spülgases umfasst, und
wobei der Erwärmungs- und Regenerierungsschritt ferner den Schritt des Kühlens des Spülgases, um einen im Spülgas enthaltenen Verunreinigungsbestandteil zu einer Flüssigkeit zu kondensieren, des Durchführens einer Gas-Flüssigkeits-Trennung, um im Spülgas enthaltenes Wasserstoffgas und eine Flüssigkeit des Verunreinigungsbestandteils voneinander zu trennen, und des Rückgewinnens der Flüssigkeit des Verunreinigungsbestandteils umfasst.

**2.** Verfahren zur Reinigung eines Wasserstoffgases nach Anspruch 1,
wobei der Adsorptionszyklus ferner Folgendes aufweist

- einen Kühlschritt zum Kühlen des Adsorptionsturms nach dem Erwärmungs- und Regenerierungsschritt auf eine Temperatur, bei der das Adsorptionsmittel adsorbiert werden kann, indem das Spülgas zirkuliert und als Kühlgas dem Adsorptionsturm zugeführt wird ohne zumindest Erwärmen des Spülgases, und
- einen Druckerhöhungsschritt zum Erhöhen des Drucks des Adsorptionsturms nach dem Kühlschritt durch Zuführen eines Teils des gereinigten Wasserstoffgases, das aus dem Adsorptionsturm abgegeben wird, der in dem Adsorptionsschritt eingebunden ist, zu dem Adsorptionsturm.

**3.** Verfahren zur Reinigung eines Wasserstoffgases nach Anspruch 1 oder 2,
wobei der Adsorptionszyklus ferner Folgendes aufweist

- einen Druckerhöhungsschritt zum Erhöhen des Drucks des Adsorptionsturms nach dem Erwärmungs- und Regenerierungsschritt, indem dem Adsorptionsturm ein Teil des gereinigten Wasserstoffgases zugeführt wird, das aus dem im Adsorptionsschritt eingebundenen Adsorptionsturm abgegeben wird, und
- einen Kühlschritt zum Kühlen des Adsorptionsturms nach dem Druckerhöhungsschritt auf eine Temperatur, bei der das Adsorptionsmittel adsorbiert werden kann, indem dem Adsorptionsturm ein Teil des gereinigten Wasserstoffgases zugeführt wird, das aus dem im Adsorptionsschritt eingebundenen Adsorptionsturm abgegeben wird ohne zumindest Erwärmen des Teils des gereinigten Wasserstoffgases, dann Kombinieren des Teils des gereinigten Wasserstoffgases mit dem Wasserstoffgas-Rohmaterial und Zuführen des kombinierten Gases zu dem in dem Adsorptionsschritt eingebundenen Adsorptionsturm.

**4.** Vorrichtung, die zur Reinigung eines Wasserstoffgases geeignet ist, die ein Paar von Adsorptionstürmen aufweist, die jeweils mit einem Adsorptionsmittel gefüllt sind und zum Reinigen eines Wasserstoffgas-Rohmaterials, das einen Verunreinigungsbestandteil enthält, konfiguriert sind, wobei
jeder der Adsorptionstürme konfiguriert ist, um darin wiederholt ein Adsorptionszyklus durchzuführen, wobei der Adsorptionszyklus zumindest einen Adsorptionsschritt zum Trennen des Verunreinigungsbestandteils aus dem Wasserstoffgas-Rohmaterial durch Adsorption des Verunreinigungsbestandteils an das Adsorptionsmittel im Adsorptionsturm und einen Erwärmungs- und Regenerierungsschritt zum Desorbieren des Verunreinigungsbestandteils aus dem Adsorptionsmittel durch Zuführen eines erwärmten Spülgases zu dem Adsorptionsturm nach dem Adsorptionsschritt aufweist,
wobei die Vorrichtung Folgendes aufweist:

einen Rohmaterialzufuhrkanal, der konfiguriert ist, um das Wasserstoffgas-Rohmaterial einem der beiden Adsorptionstürme zuzuführen, in dem der Adsorptionsschritt durchgeführt wird, während das Wasserstoffgas-Rohmaterial nicht dem anderen Adsorptionsturm zugeführt wird, in dem ein anderer Schritt als der Adsorptionsschritt durchgeführt wird;
einen Spülgas-Zirkulationskanal, der konfiguriert ist, um das erwärmte Spülgas dem Adsorptionsturm zuzuführen, der in dem Erwärmungs- und Regenerierungsschritt eingebunden ist, während das erwärmte Spülgas zirkuliert wird; und
eine Heizvorrichtung, die mit dem Spülgas-Zirkulationskanal verbunden ist und zum Erwärmen des Spülgases konfiguriert ist,
wobei der Spülgas-Zirkulationskanal mit einem Kühler versehen ist, der konfiguriert ist, um das Spülgas zu kühlen, um einen im Spülgas enthaltenen Verunreinigungsbestandteil zu einer Flüssigkeit zu kondensieren, und einen Gas-Flüssigkeits-Separator, der konfiguriert ist, um eine Gas-Flüssigkeits-Trennung durchzuführen, um ein Wasserstoffgas, das im Spülgas enthalten ist, und eine Flüssigkeit des Verunreinigungsbestandteils voneinander zu trennen, und die Flüssigkeit des Verunreinigungsbestandteils zurückzugewinnen, und
einen Einlasskanal für gereinigtes Wasserstoffgas, der konfiguriert ist, um einen Teil des gereinigten Wasserstoffgases zuzuführen und mit dem Spülgas-Zirkulationskanal in Verbindung zu stehen.

## Revendications

**1.** Procédé de purification d'un hydrogène gazeux dans lequel un hydrogène gazeux de matériau brut contenant un constituant d'impureté est purifié à l'aide d'une paire de tours d'adsorption remplies chacune d'un adsorbant, le procédé comprenant les étapes consistant à :

- exécuter de manière répétée un cycle d'adsorption comprenant au moins une étape d'adsorption consistant à séparer le constituant d'impureté de l'hydrogène gazeux de matériau brut en adsorbant le constituant d'impureté vers l'adsorbant dans les tours d'adsorption, et
- une étape de chauffe et de régénération consistant à désorber le constituant d'impureté de l'adsorbant hors de l'adsorbant en alimentant la tour d'adsorption en gaz de purge chauffé après l'étape d'adsorption, dans chacune des tours d'adsorption ; et
- tout en exécutant l'étape d'adsorption dans une tour d'adsorption, exécuter une étape autre que l'étape d'adsorption dans l'autre tour d'adsorption, dans lequel
le cycle d'adsorption comprend en outre
- une étape de réduction de pression consistant à réduire la pression de la tour d'adsorption juste après l'étape d'adsorption en déchargeant un gaz résiduel restant dans la tour d'adsorption, et
- une étape de préparation de régénération consistant à mélanger une partie d'hydrogène gazeux purifié, qui est déchargée de la tour d'adsorption engagée dans l'étape d'adsorption, avec le gaz résiduel pour former le gaz de purge, et à alimenter la tour d'adsorption en gaz de purge après l'étape d'adsorption tout en faisant circuler le gaz de purge, avant l'étape de chauffe et de régénération, et
l'étape de chauffe et de régénération comprenant d'alimenter la tour d'adsorption en gaz de purge après l'étape d'adsorption tout en faisant circuler le gaz de purge, et
dans lequel l'étape de chauffe et de régénération comprend en outre l'étape consistant à refroidir le gaz de purge pour condenser un constituant d'impureté contenu dans le gaz de purge en liquide, à effectuer une séparation gaz/liquide pour séparer un hydrogène gazeux contenu dans le gaz de purge et un liquide du constituant d'impureté l'un de l'autre, et à récupérer le liquide du constituant d'impureté.

**2.** Procédé de purification d'un hydrogène gazeux selon la revendication 1, dans lequel le cycle d'adsorption comprend en outre

- une étape de refroidissement consistant à refroidir la tour d'adsorption après l'étape de chauffe et de régénération à une température à laquelle l'adsorbant peut être adsorbé, en faisant circuler et en alimentant la tour d'adsorption en gaz de purge à titre de gaz de refroidissement sans la moindre chauffe du gaz de purge, et
- une étape d'élévation de pression consistant à élever la pression de la tour d'adsorption après l'étape de refroidissement en alimentant la tour d'adsorption en une partie de l'hydrogène gazeux purifié déchargé de la tour d'adsorption engagée dans l'étape d'adsorption.

**3.** Procédé de purification d'un hydrogène gazeux selon la revendication 1 ou 2,
dans lequel le cycle d'adsorption comprend en outre

- une étape d'élévation de pression consistant à élever la pression de la tour d'adsorption après l'étape de chauffe et de régénération en alimentant la tour en une partie de l'hydrogène gazeux purifié déchargé de la tour d'adsorption engagée dans l'étape d'adsorption, et
- une étape de refroidissement consistant à refroidir la tour d'adsorption à une température à laquelle l'adsorbant

peut être adsorbé, en alimentant la tour d'adsorption en une partie de l'hydrogène gazeux purifié déchargé de la tour d'adsorption engagée dans l'étape d'adsorption sans la moindre chauffe de la partie de l'hydrogène gazeux purifié, et puis à combiner la partie de l'hydrogène gazeux purifié avec l'hydrogène gazeux de matériau brut, et à alimenter en gaz combiné la tour d'adsorption engagée dans l'étape d'adsorption.

**4.** Appareil approprié pour purifié un hydrogène gazeux, qui comprend une paire de tours d'adsorption remplies chacune d'un adsorbant et configurées pour purifier un hydrogène gazeux de matériau brut contenant un constituant d'impureté, dans lequel

chacune des tours d'adsorption est configurée pour exécuter de manière répétée un cycle d'adsorption à l'intérieur d'elle-même, le cycle d'adsorption comprenant au moins une étape d'adsorption consistant à séparer le constituant d'impureté de l'hydrogène gazeux de matériau brut en adsorbant le constituant d'impureté vers l'adsorbant dans la tour d'adsorption, et une étape de chauffe et de régénération consistant à désorber le constituant d'impureté hors de l'adsorbant en alimentant la tour d'adsorption en gaz de purge chauffé après l'étape d'adsorption,
l'appareil comprenant :

un canal d'alimentation de matériau brut configuré de telle sorte que l'hydrogène gazeux de matériau brut est acheminé à l'une de la paire de tours d'adsorption dans laquelle l'étape d'adsorption est exécutée, tandis que l'hydrogène gazeux de matériau brut n'est pas alimenté à l'autre tour d'adsorption dans laquelle une étape autre que l'étape d'adsorption est exécutée ;
un canal de circulation de gaz de purge configuré pour alimenter en gaz de purge chauffé la tour d'adsorption engagée dans l'étape de chauffe et de régénération tout en faisant circuler le gaz de purge chauffé ; et
un chauffage qui est connecté au canal de circulation de gaz de purge, et qui est configuré pour chauffer le gaz de purge,
dans lequel le canal de circulation de gaz de purge est muni d'un refroidisseur configuré pour refroidir le gaz de purge pour condenser un constituant impureté contenu dans le gaz de purge en liquide, et
un séparateur gaz/liquide configuré pour effectuer une séparation gaz/liquide pour séparer un hydrogène gazeux contenu dans le gaz de purge et un liquide du constituant d'impureté l'un de l'autre, et récupérer le liquide du constituant d'impureté, et
un canal d'introduction d'hydrogène gazeux purifié configuré pour acheminer une partie de l'hydrogène gazeux purifié et pour communiquer avec le canal de circulation de gaz de purge.

**Fig. 1**

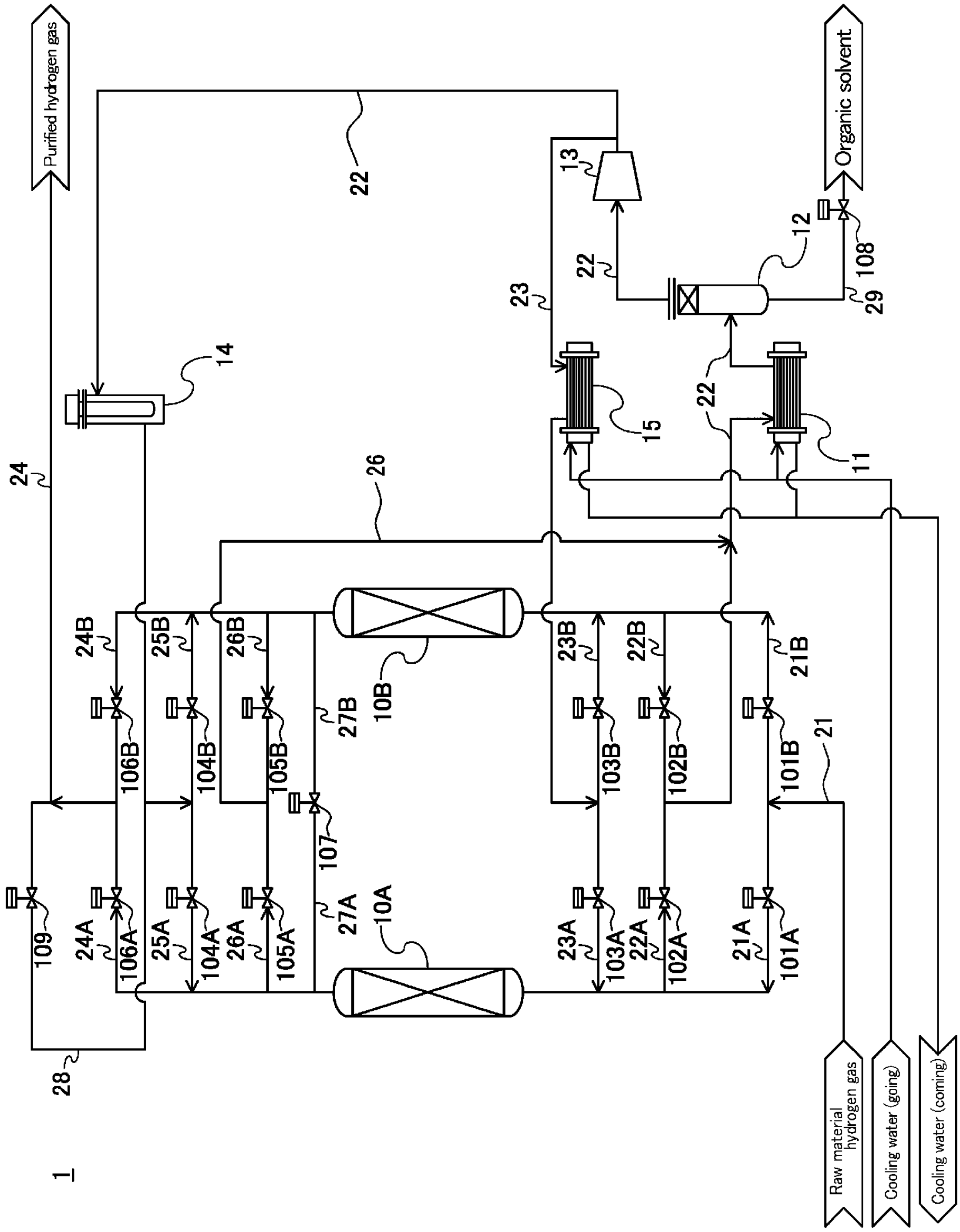
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

Fig.2

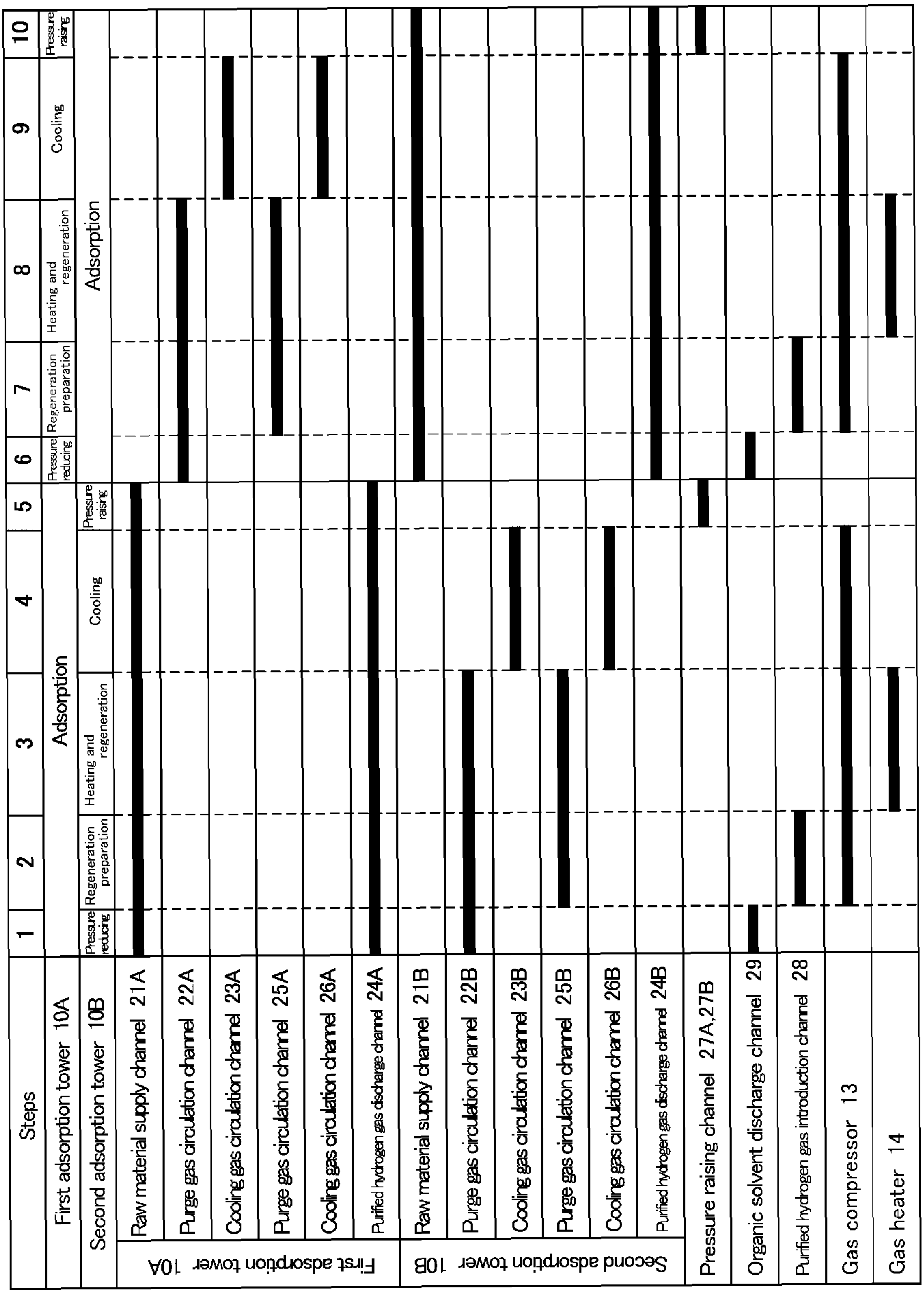
Steps
1
2
3
4
5
6
7
8
9
10
First adsorption tower 10A
Pressure reducing
Regeneration preparation
Heating and regeneration
Cooling
Pressure raising
Adsorption
Second adsorption tower 10B
Pressure reducing
Regeneration preparation
Heating and regeneration
Cooling
Pressure raising
Adsorption
First adsorption tower 10A
Raw material supply channel 21A
Purge gas circulation channel 22A
Cooling gas circulation channel 23A
Purge gas circulation channel 25A
Cooling gas circulation channel 26A
Purified hydrogen gas discharge channel 24A
Second adsorption tower 10B
Raw material supply channel 21B
Purge gas circulation channel 22B
Cooling gas circulation channel 23B
Purge gas circulation channel 25B
Cooling gas circulation channel 26B
Purified hydrogen gas discharge channel 24B
Pressure raising channel 27A,27B
Organic solvent discharge channel 29
Purified hydrogen gas introduction channel 28
Gas compressor 13
Gas heater 14

Fig.3

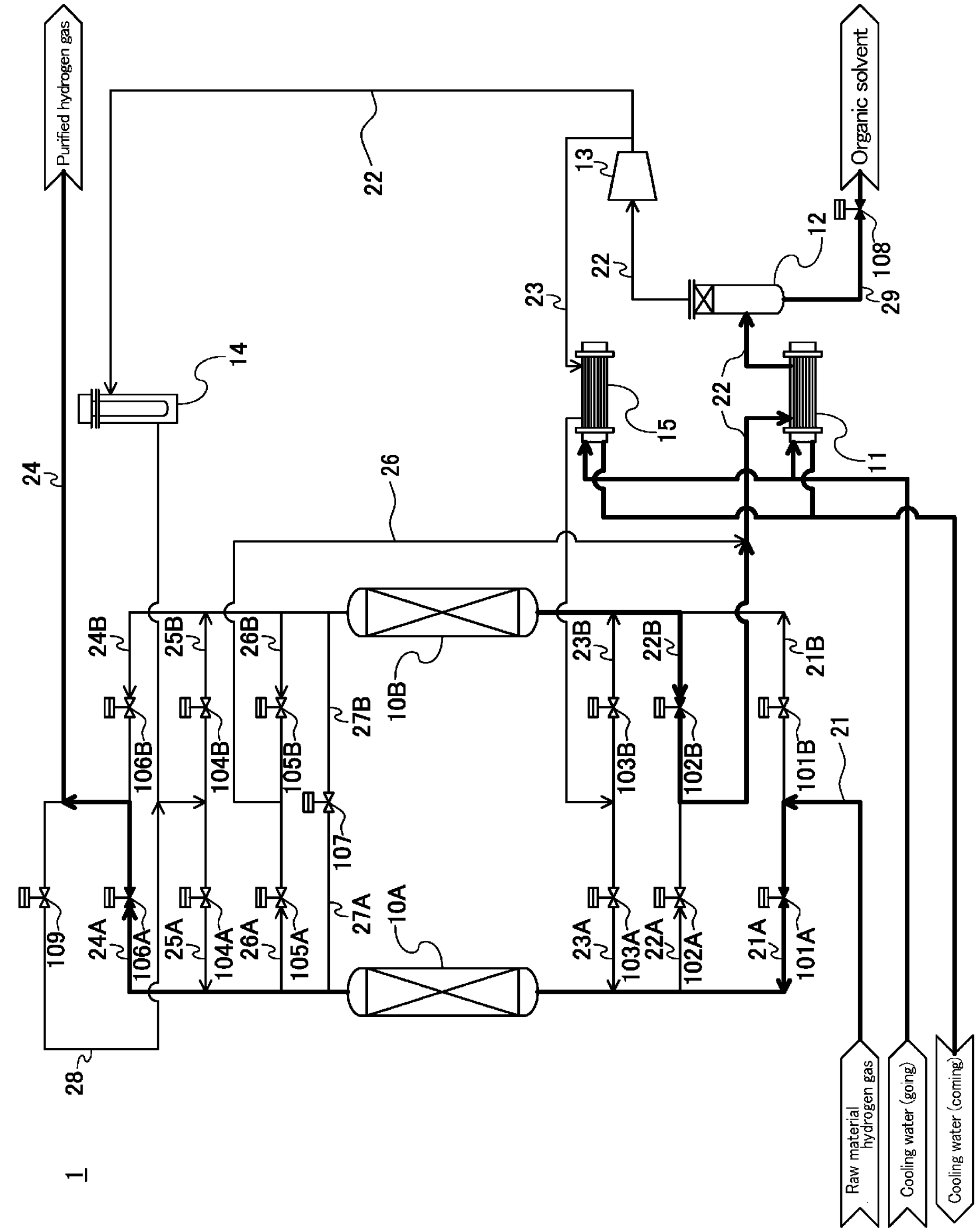
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 4**

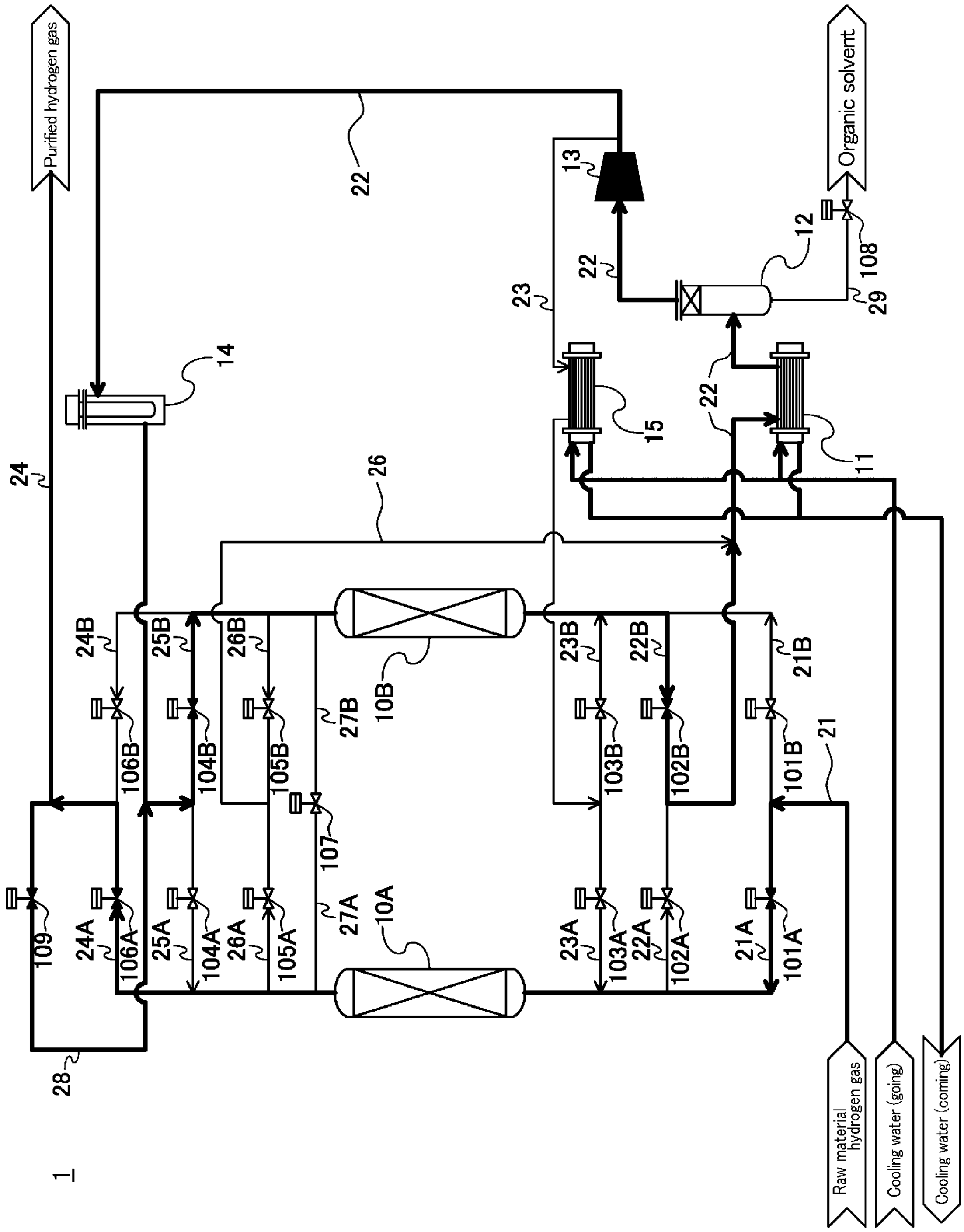
Purified hydrogen gas
Organic solvent
Raw material hydrogen gas
Cooling water (going)
Cooling water (coming)

**Fig. 5**

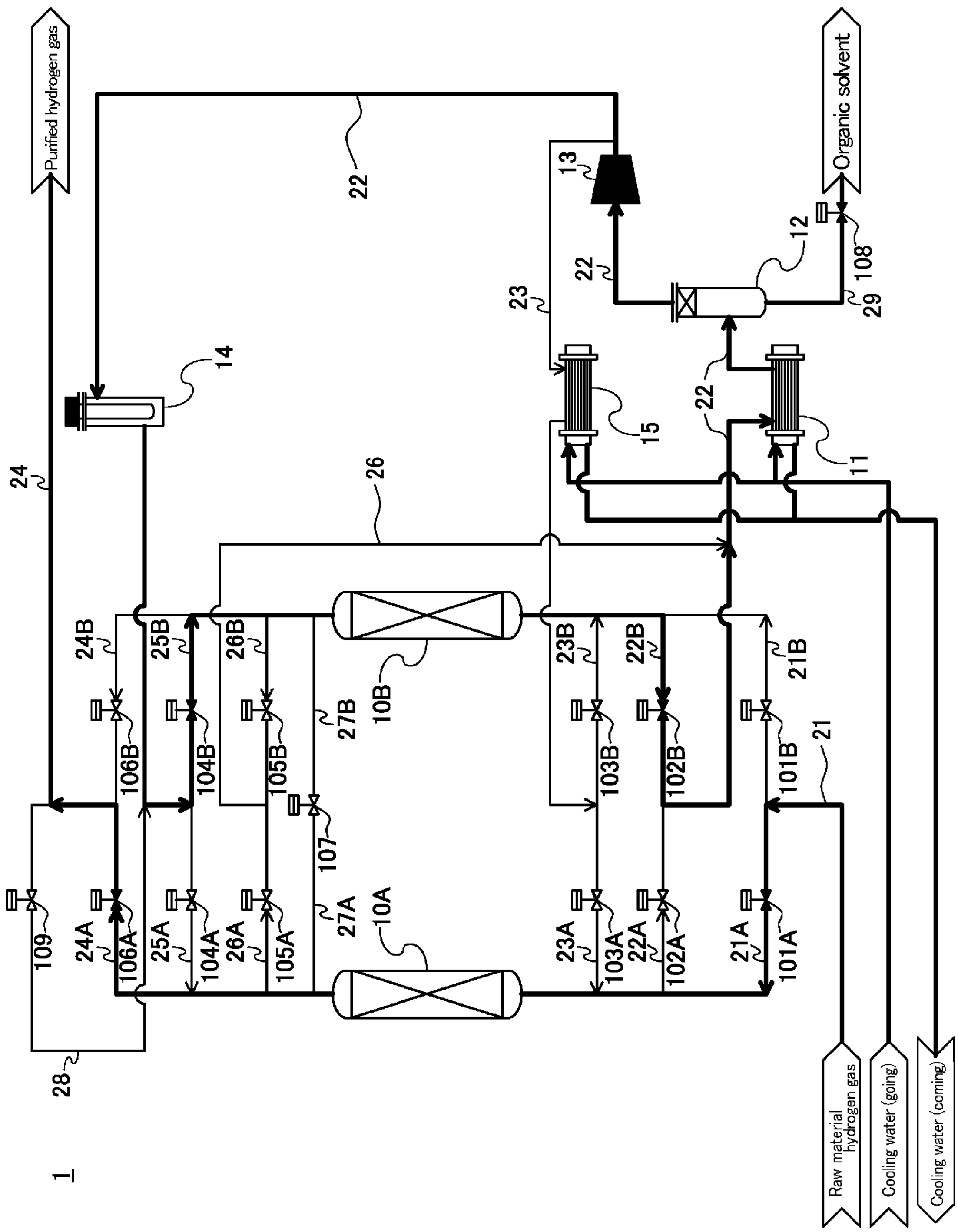
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 6**

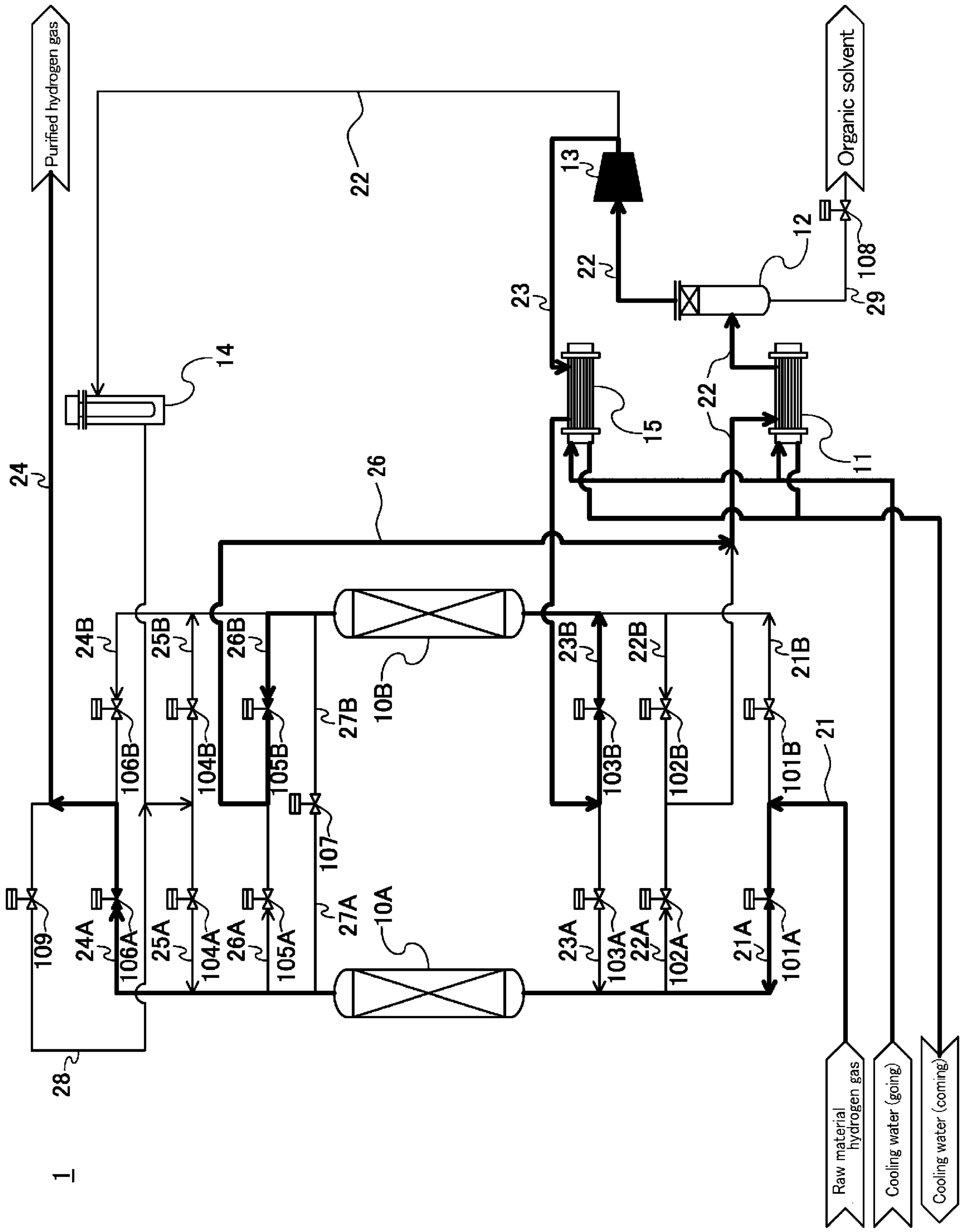

Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig.7**

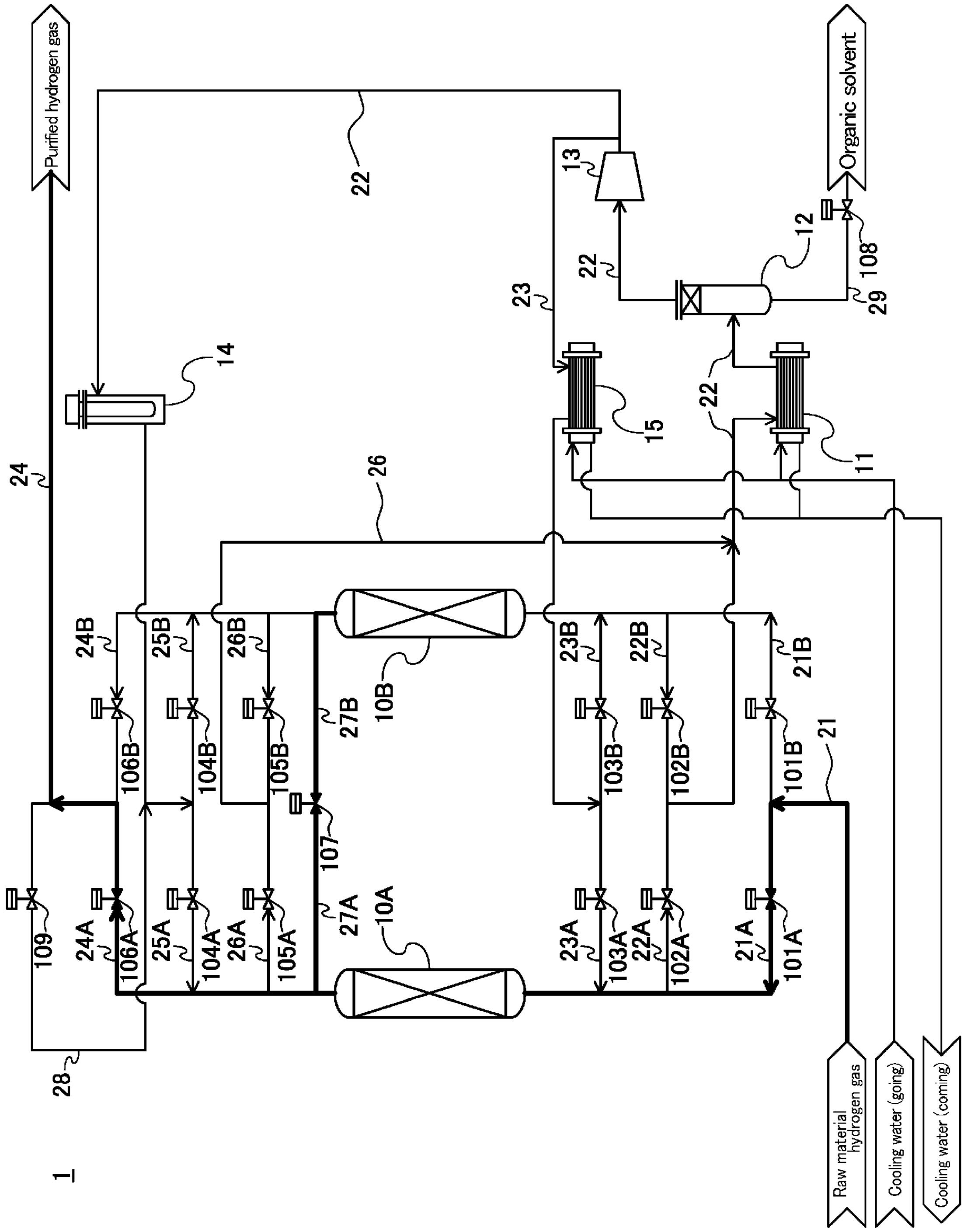
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig.8**

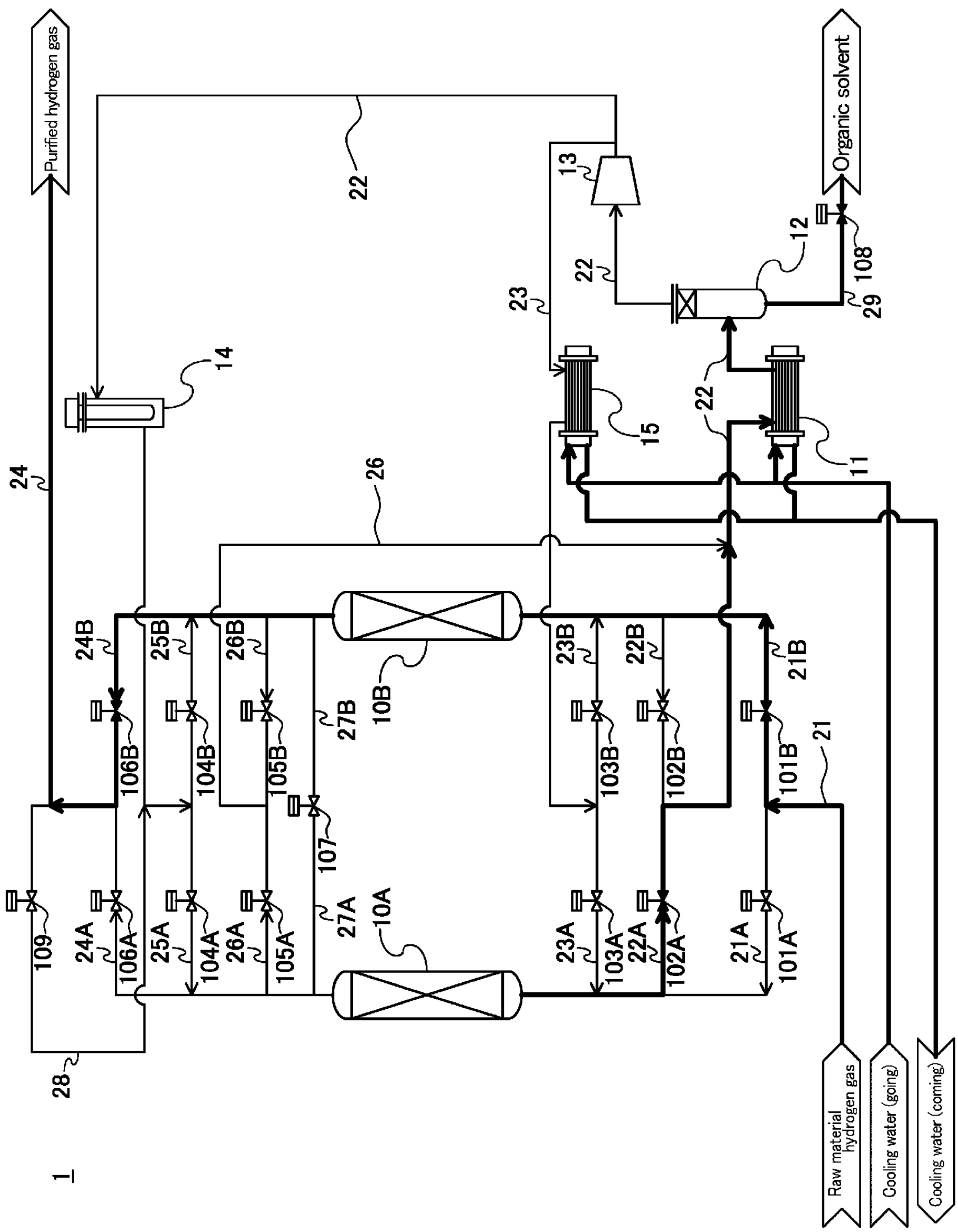
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 9**

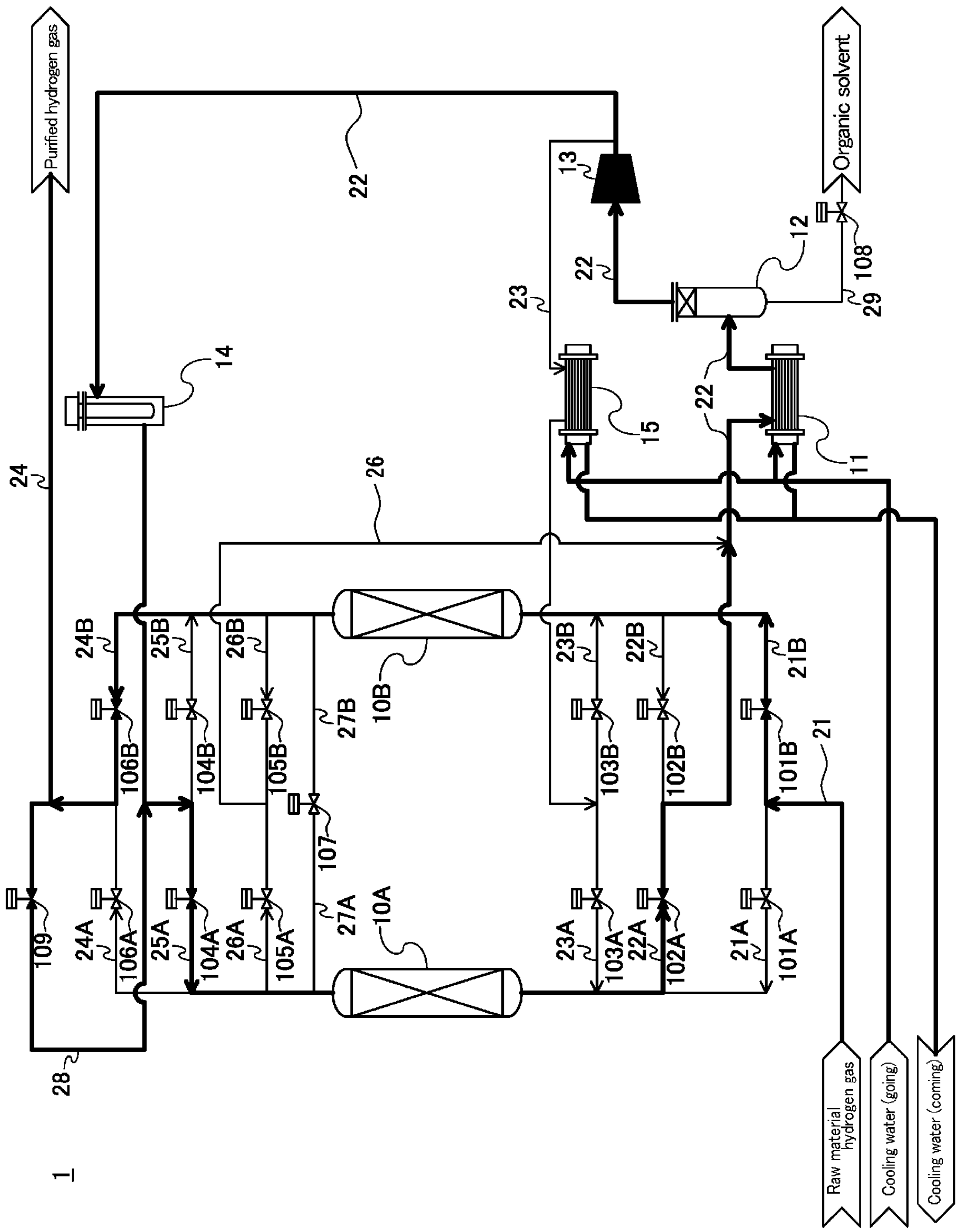
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 10**

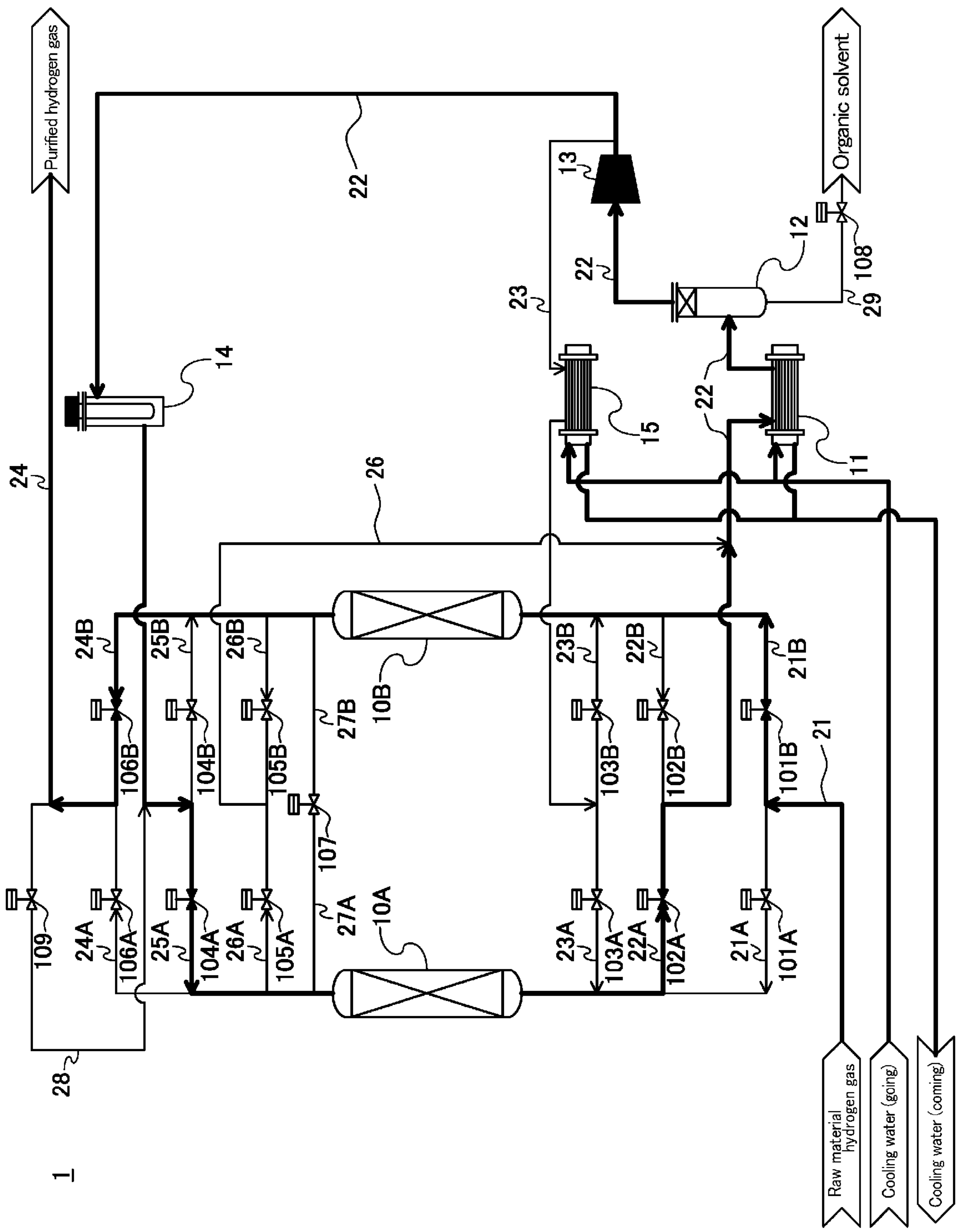
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 11**

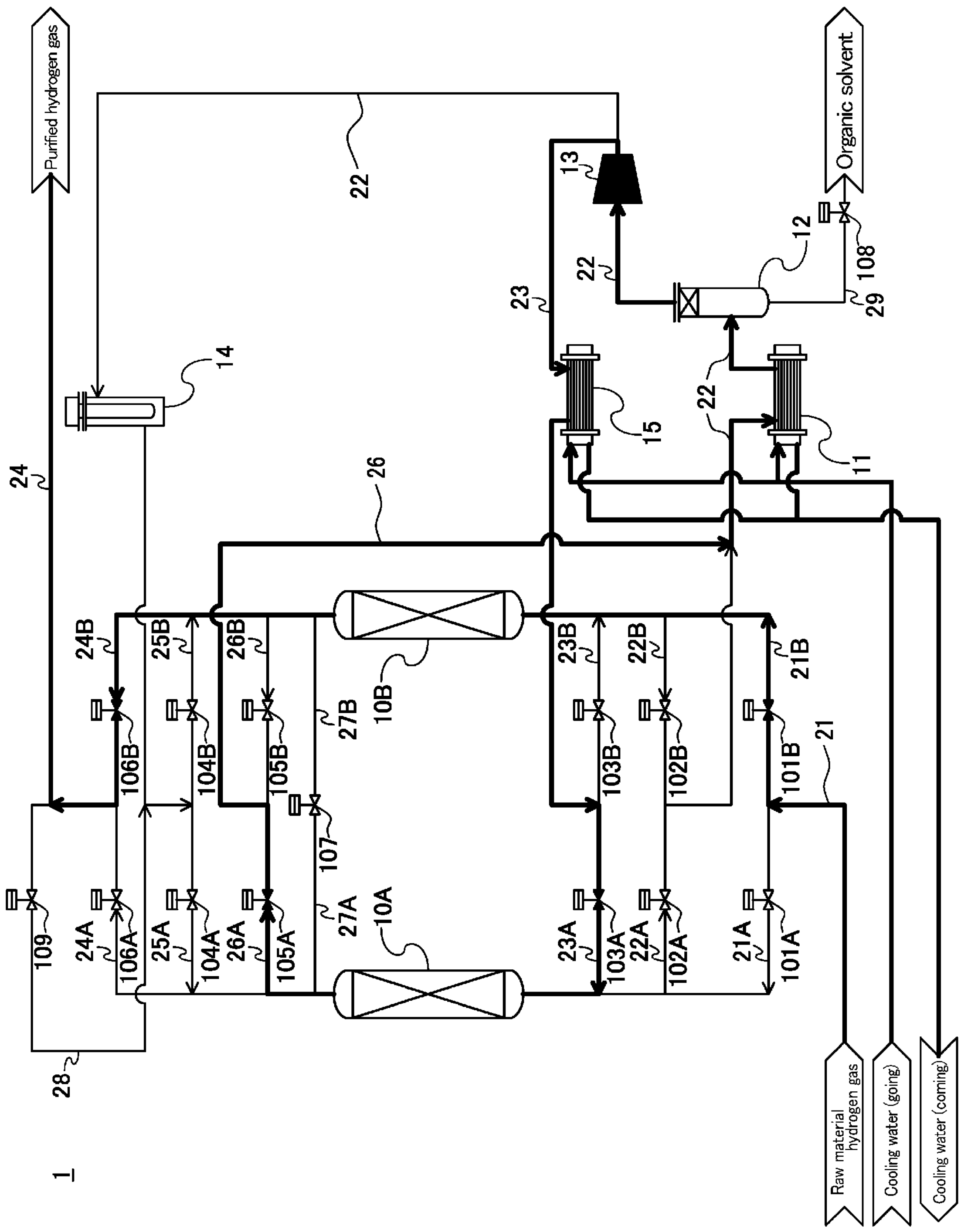
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 12**

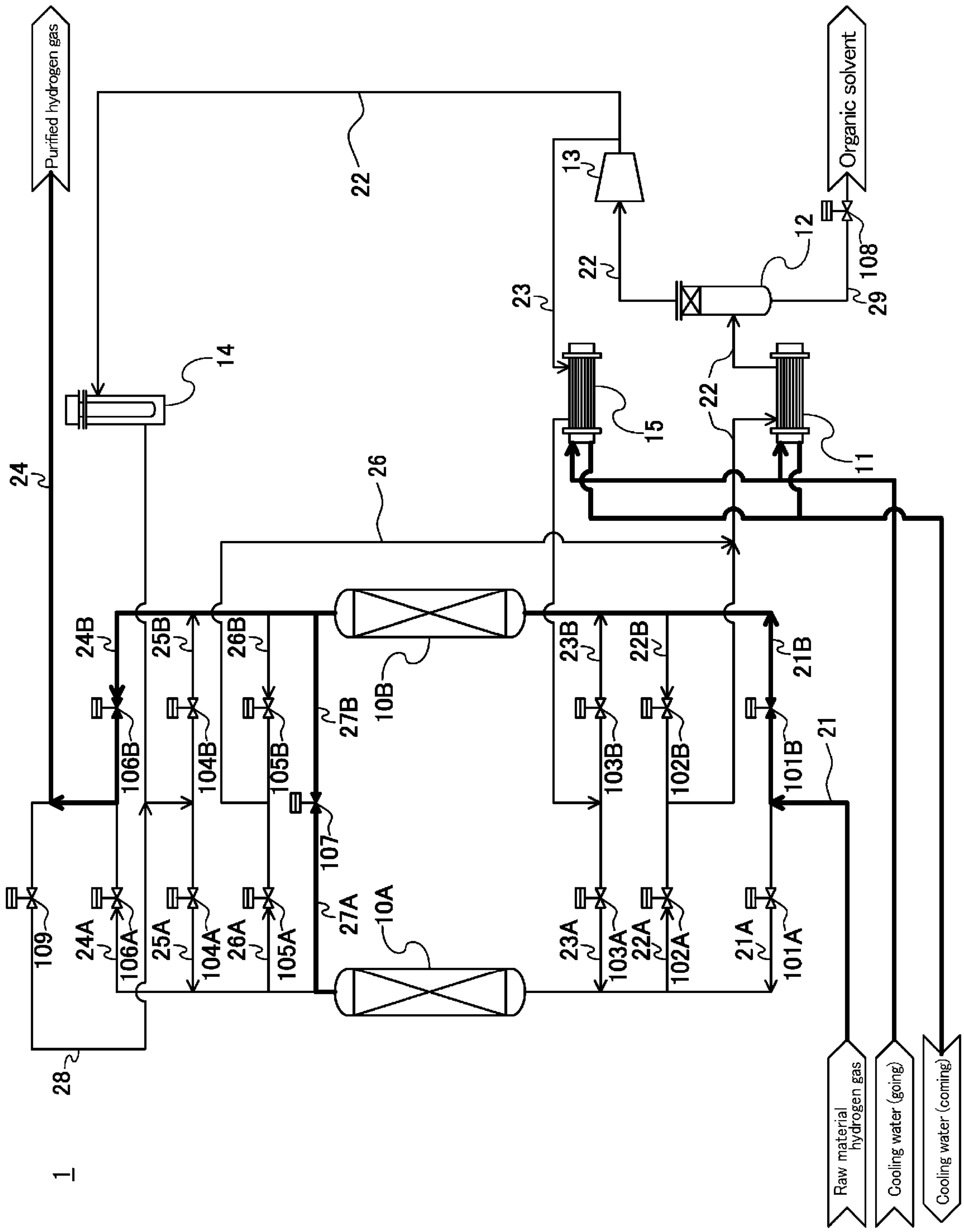
Purified hydrogen gas
Organic solvent
Raw material hydrogen gas
Cooling water (going)
Cooling water (coming)
1
10A
10B
11
12
13
14
15
21
21A
21B
22
22A
22B
23
23A
23B
24
24A
24B
25A
25B
26
26A
26B
27A
27B
28
29
101A
101B
102A
102B
103A
103B
104A
104B
105A
105B
106A
106B
107
108
109

**Fig. 13** (Amended)

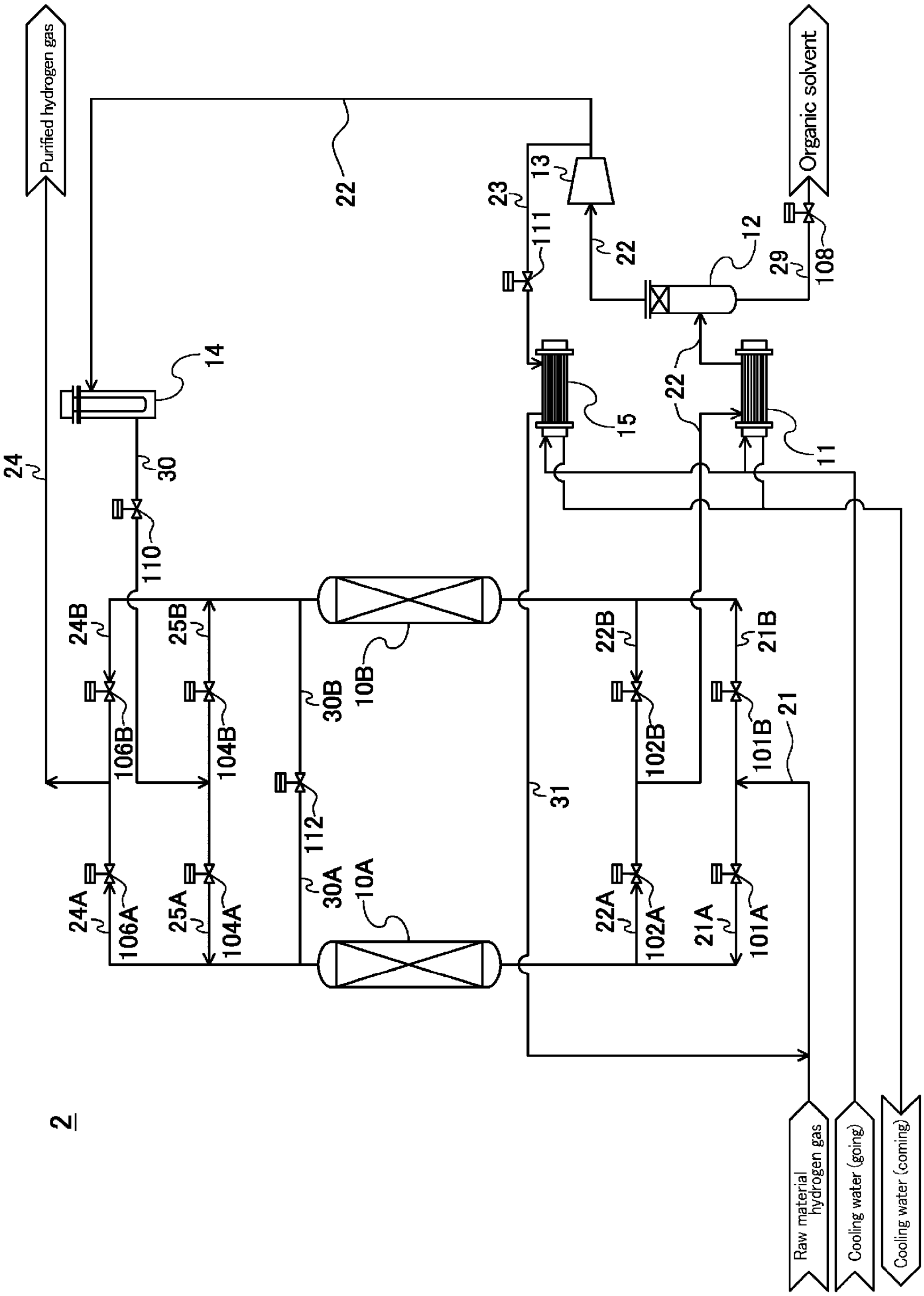

**Fig. 14**

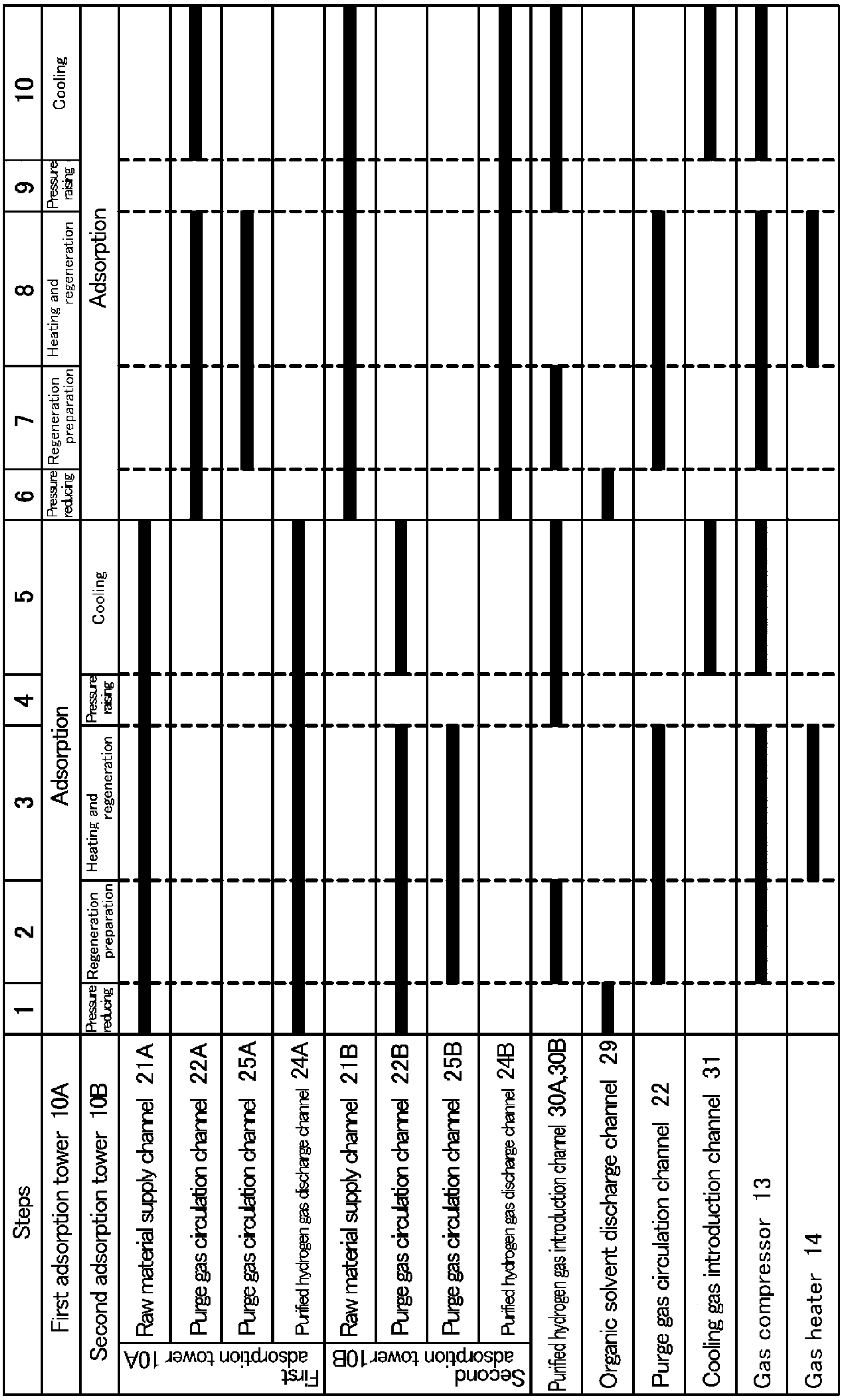
Steps
1
2
3
4
5
6
7
8
9
10
First adsorption tower 10A
Pressure reducing
Regeneration preparation
Heating and regeneration
Pressure raising
Cooling
Adsorption
Second adsorption tower 10B
First adsorption tower 10A
Raw material supply channel 21A
Purge gas circulation channel 22A
Purge gas circulation channel 25A
Purified hydrogen gas discharge channel 24A
Second adsorption tower 10B
Raw material supply channel 21B
Purge gas circulation channel 22B
Purge gas circulation channel 25B
Purified hydrogen gas discharge channel 24B
Purified hydrogen gas introduction channel 30A,30B
Organic solvent discharge channel 29
Purge gas circulation channel 22
Cooling gas introduction channel 31
Gas compressor 13
Gas heater 14

**Fig. 15**

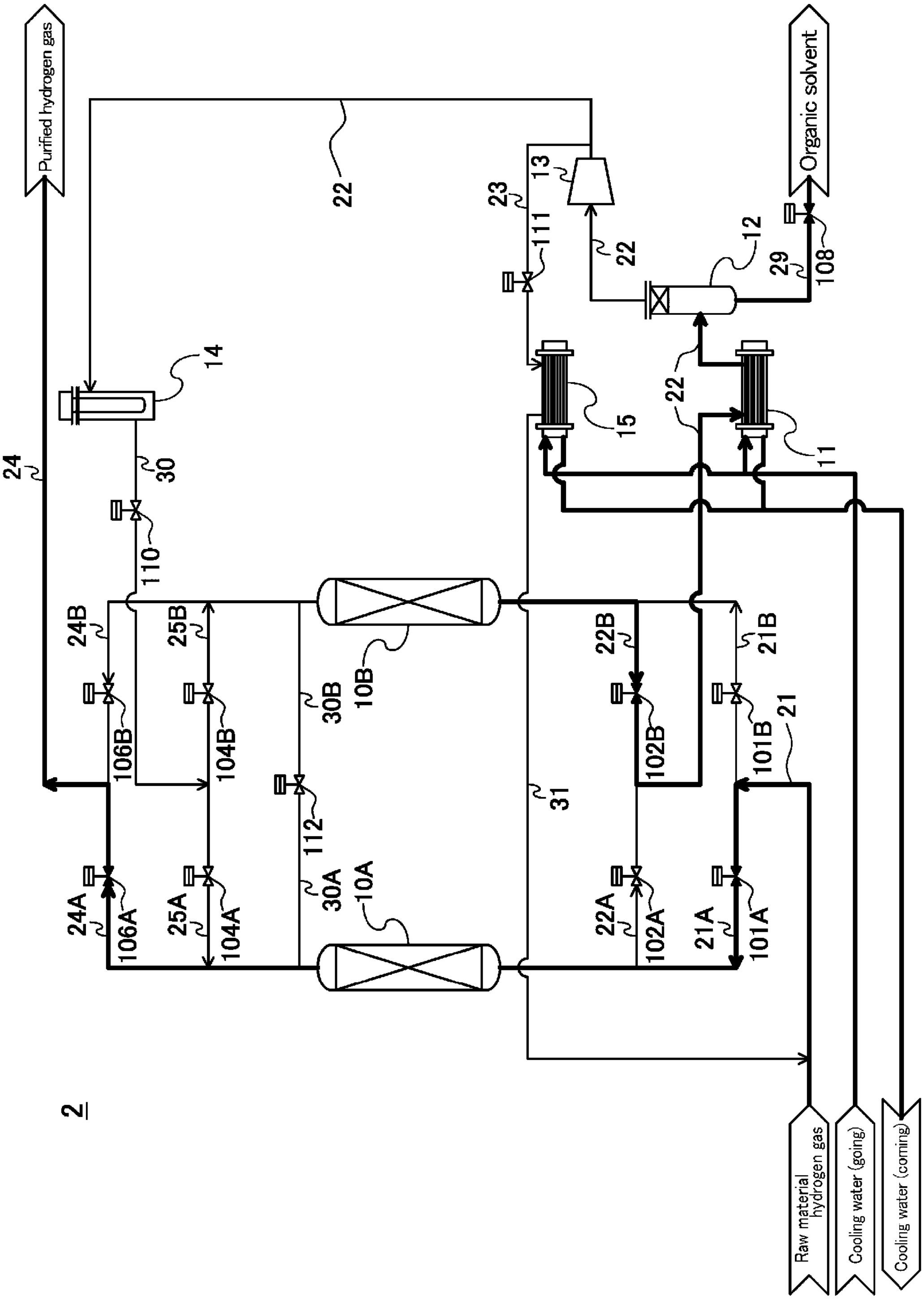
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 16**

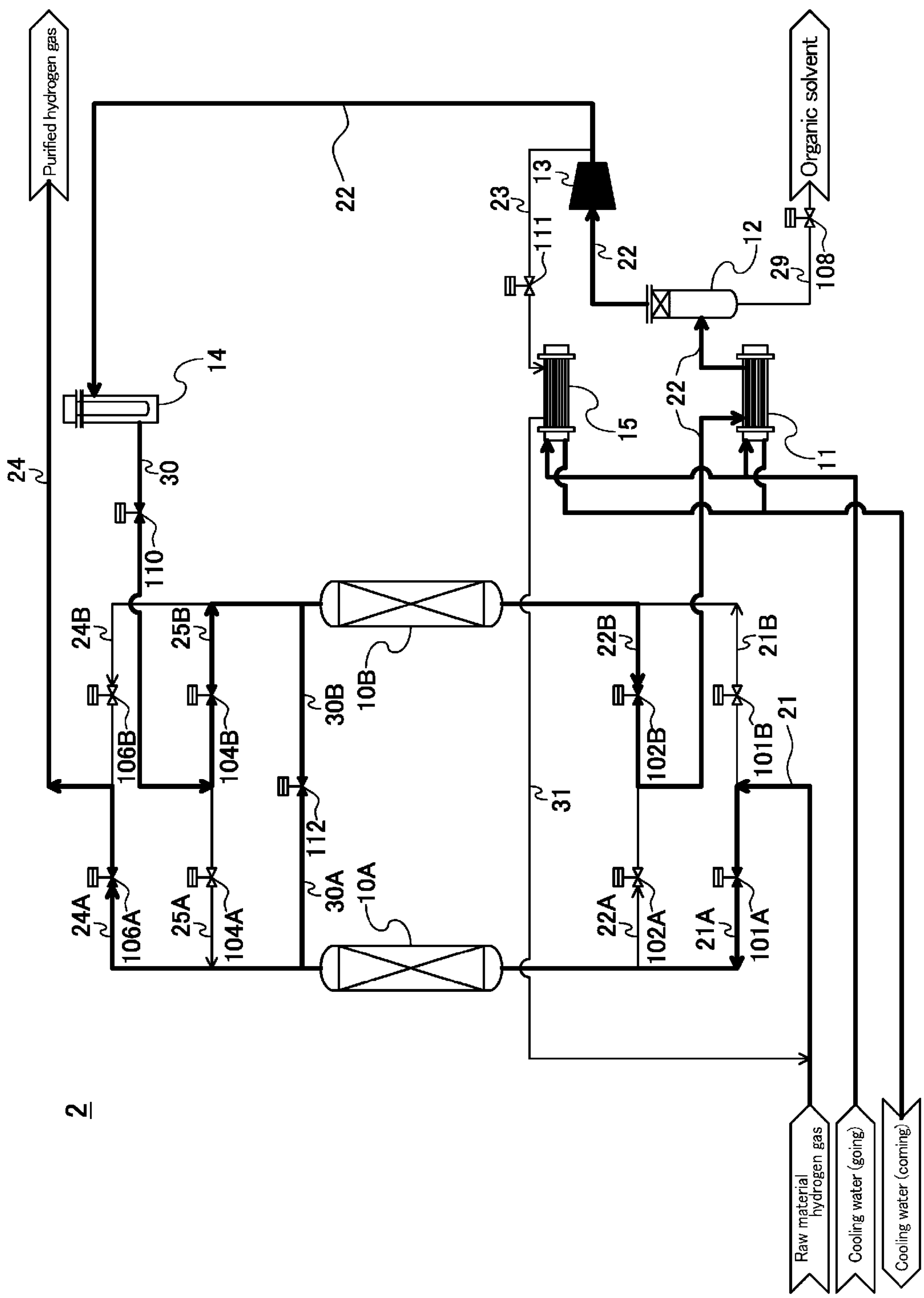
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 17**

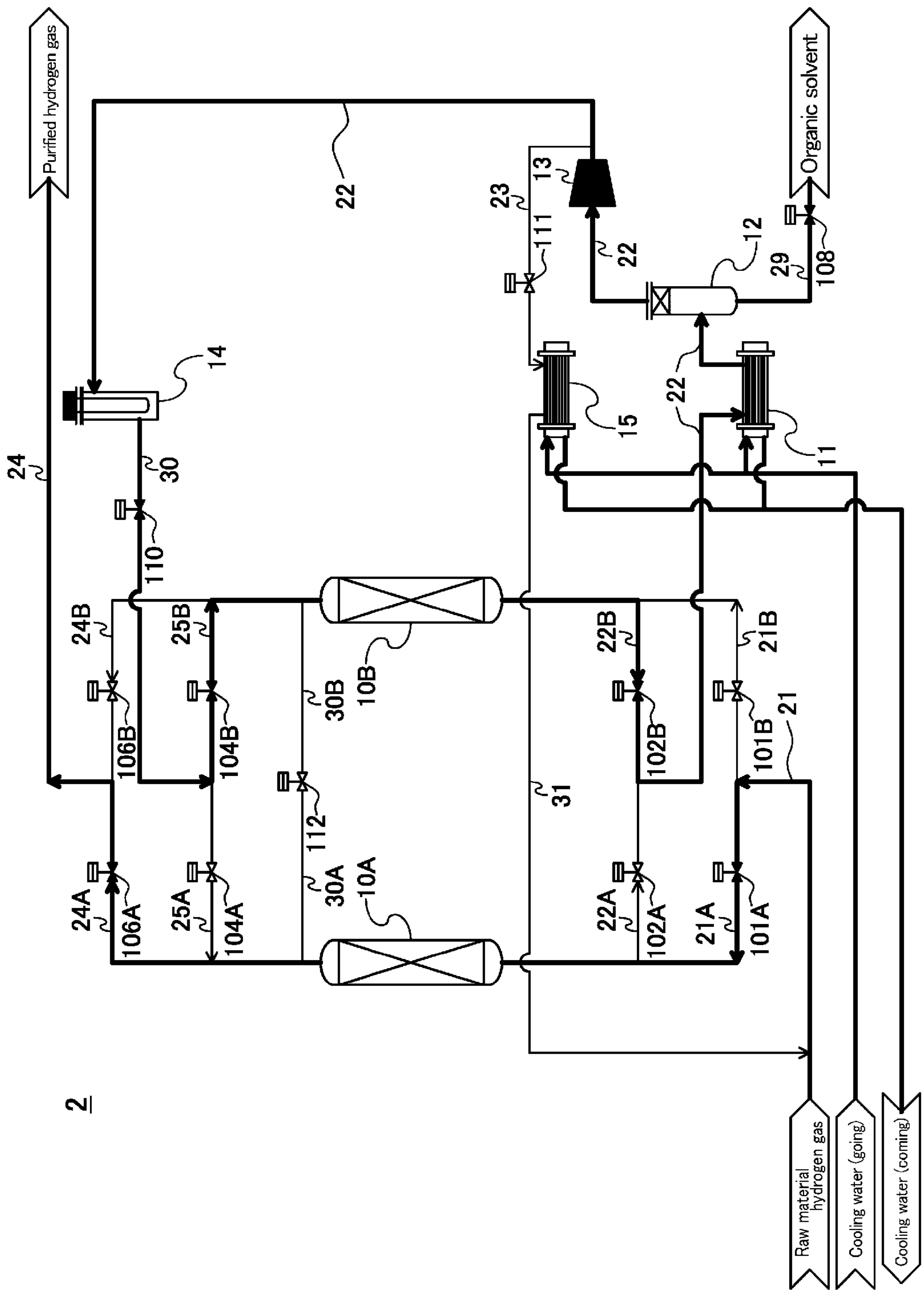
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 18**

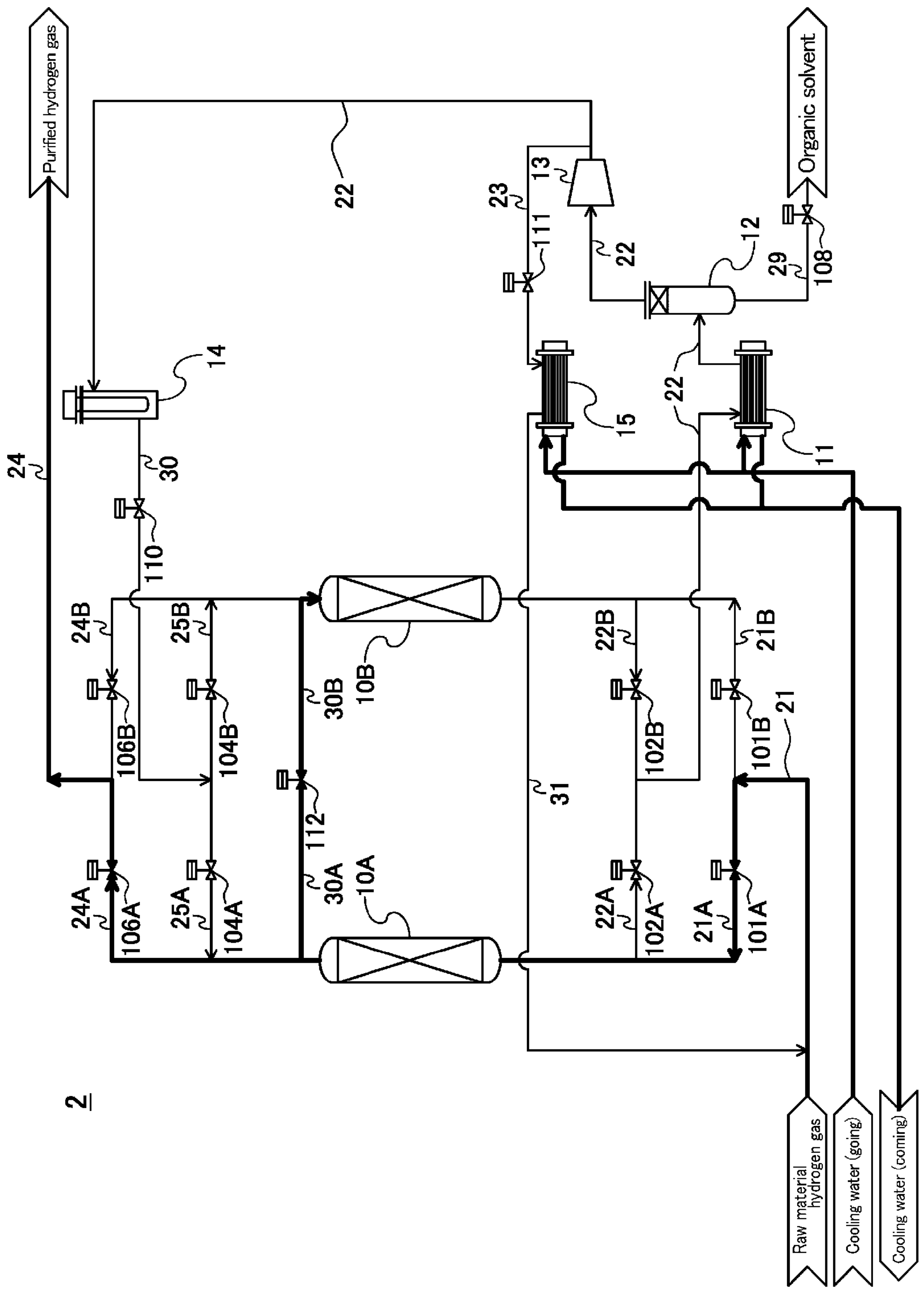
Purified hydrogen gas
Organic solvent
Raw material hydrogen gas
Cooling water (going)
Cooling water (coming)

**Fig. 19**

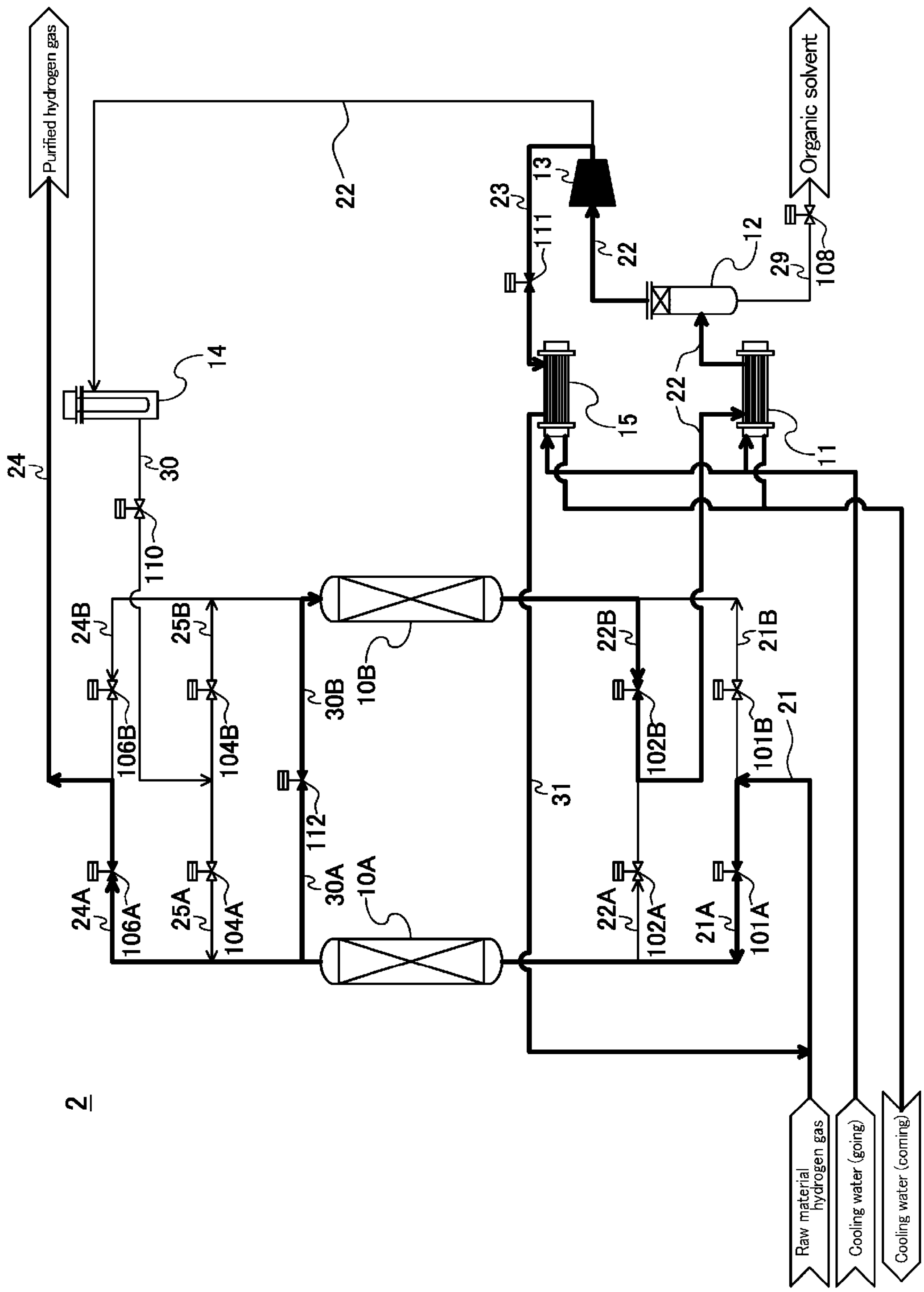
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 20**

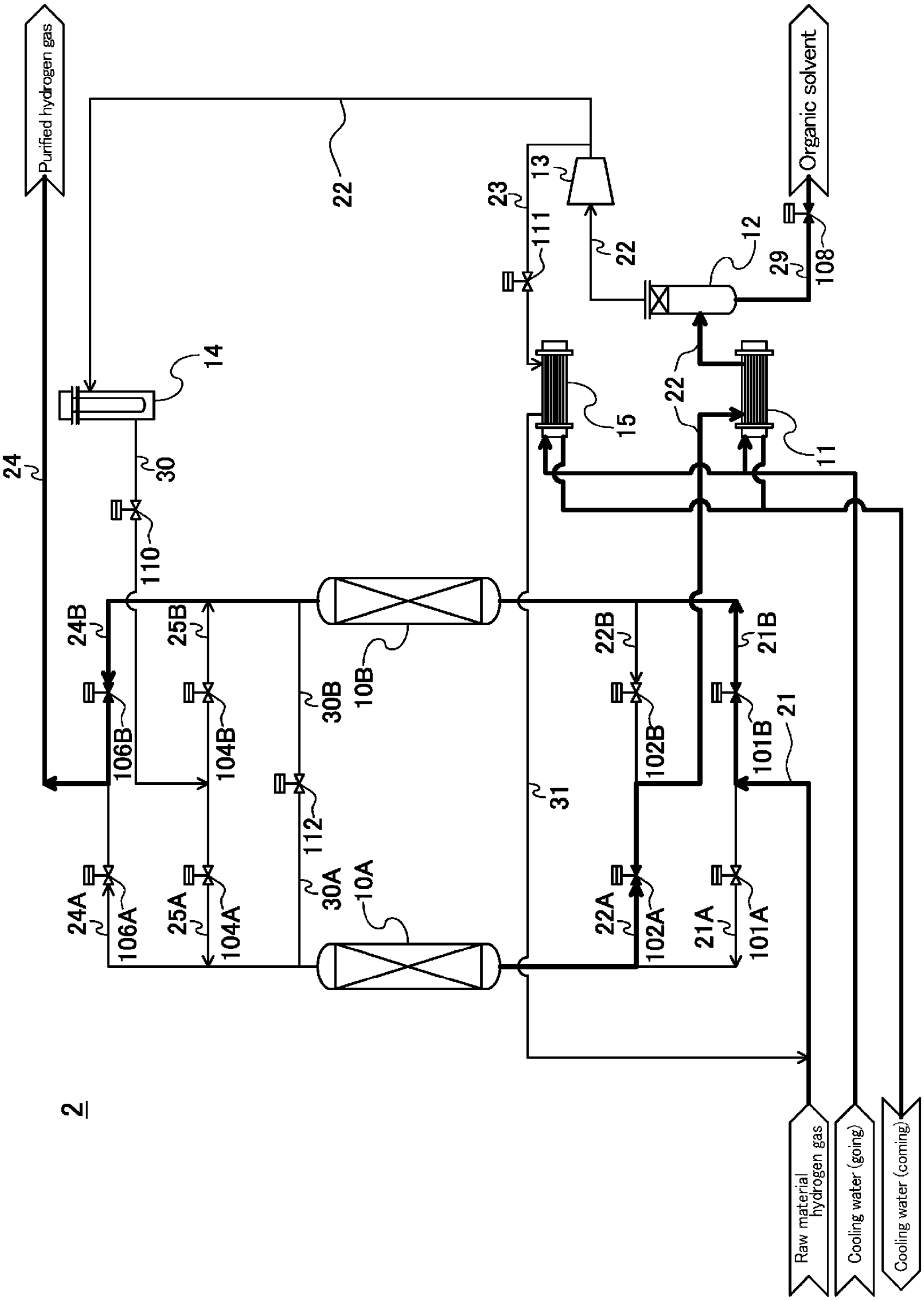
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 21**

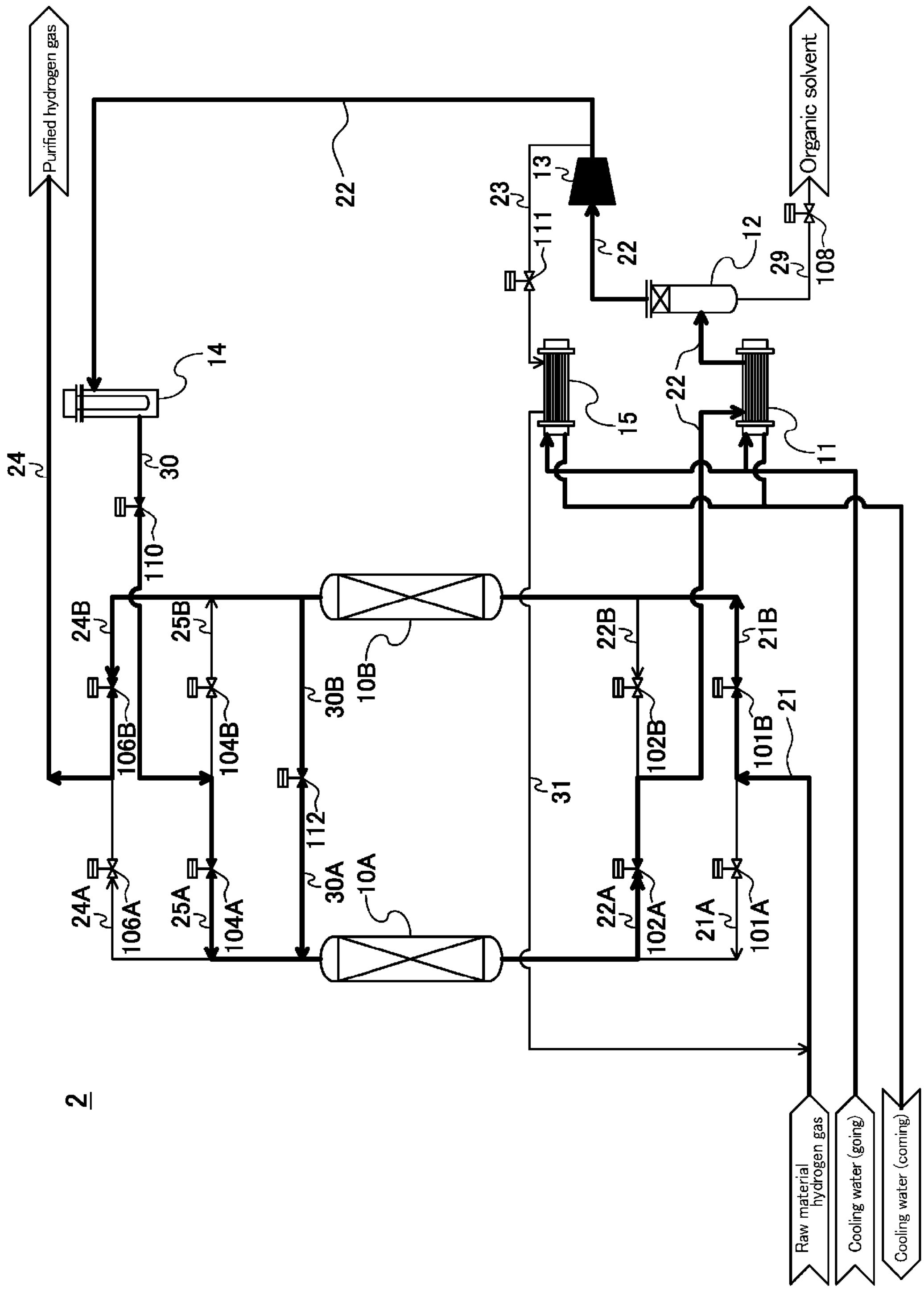
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 22**

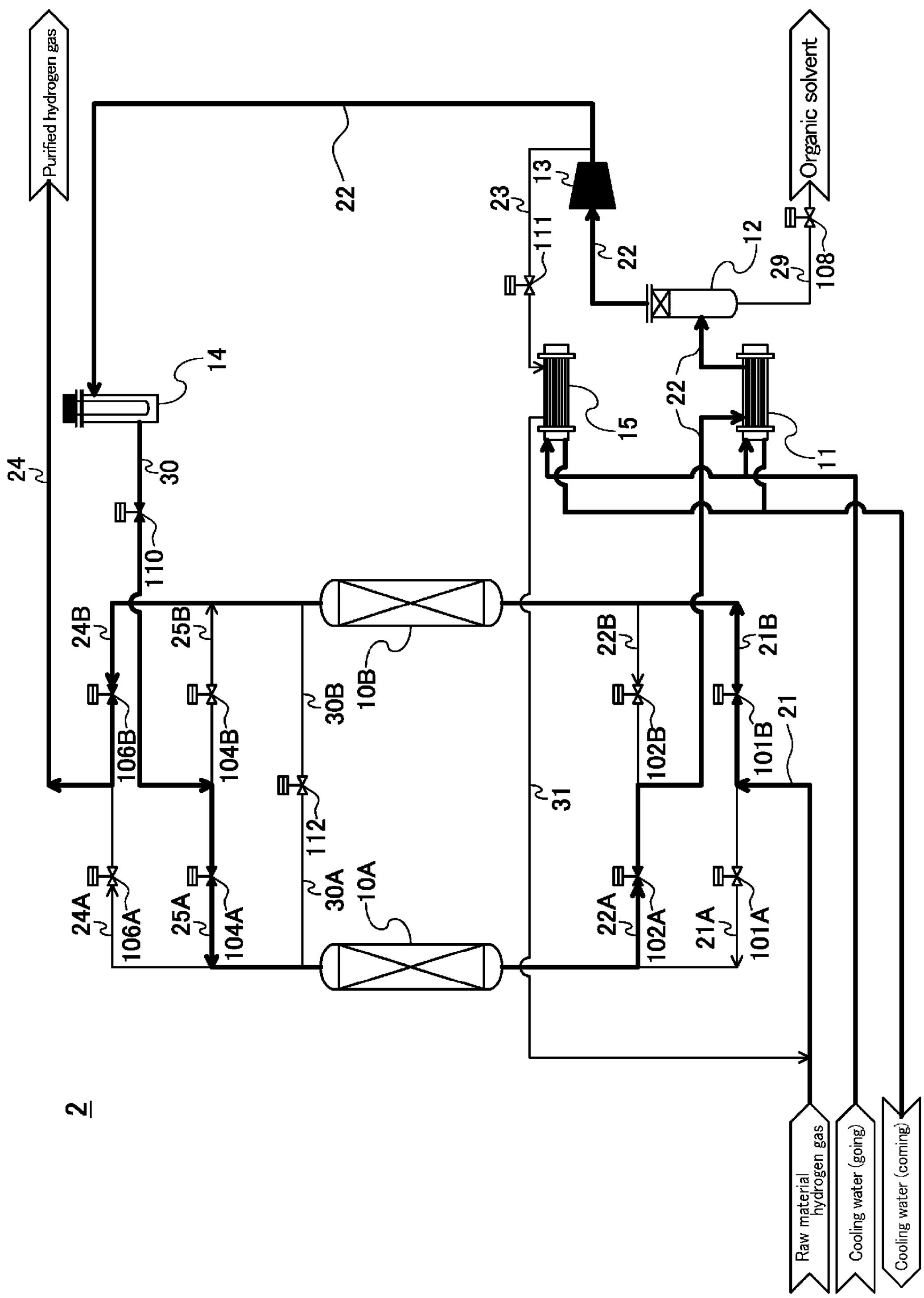
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 23**

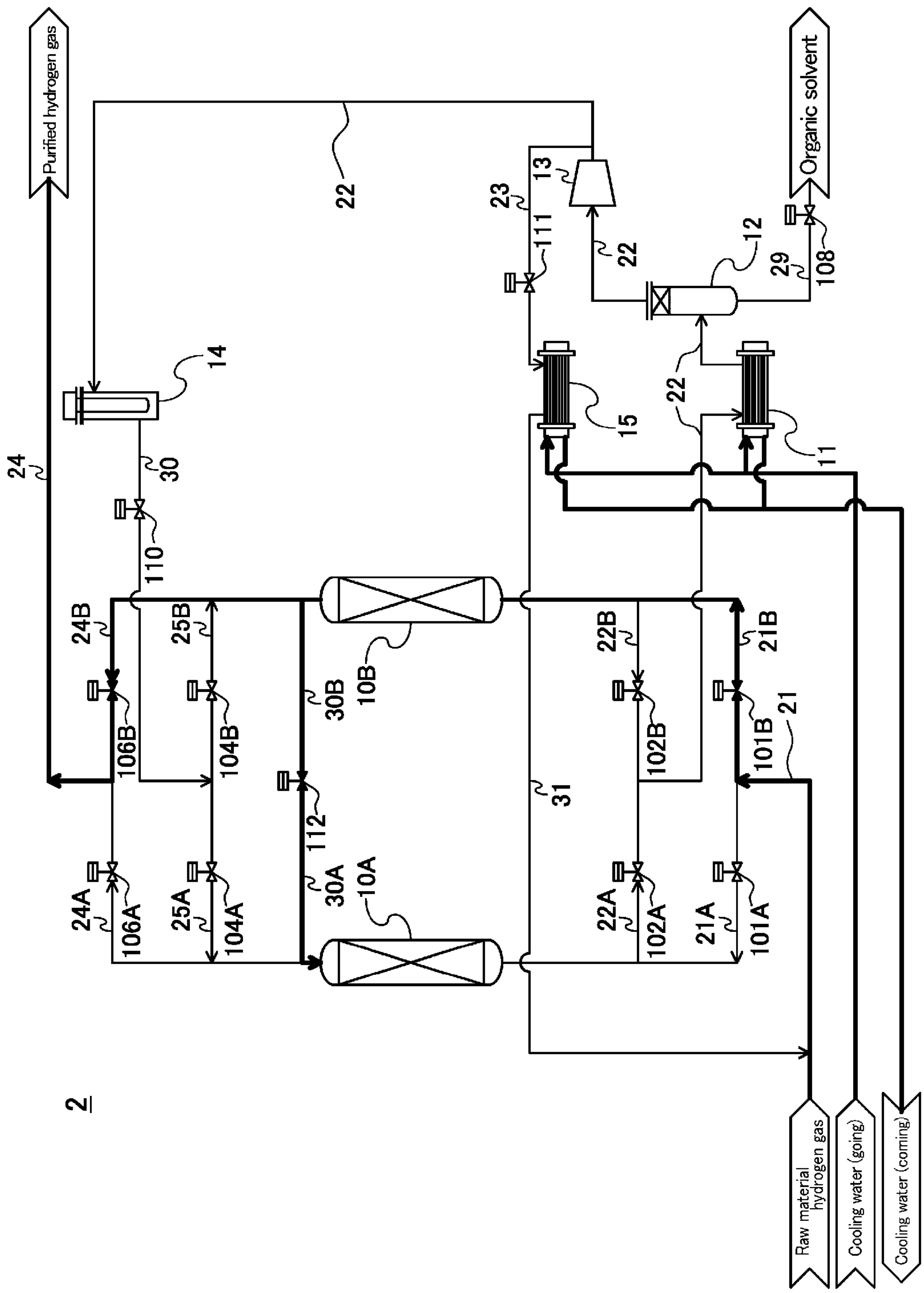
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

**Fig. 24**

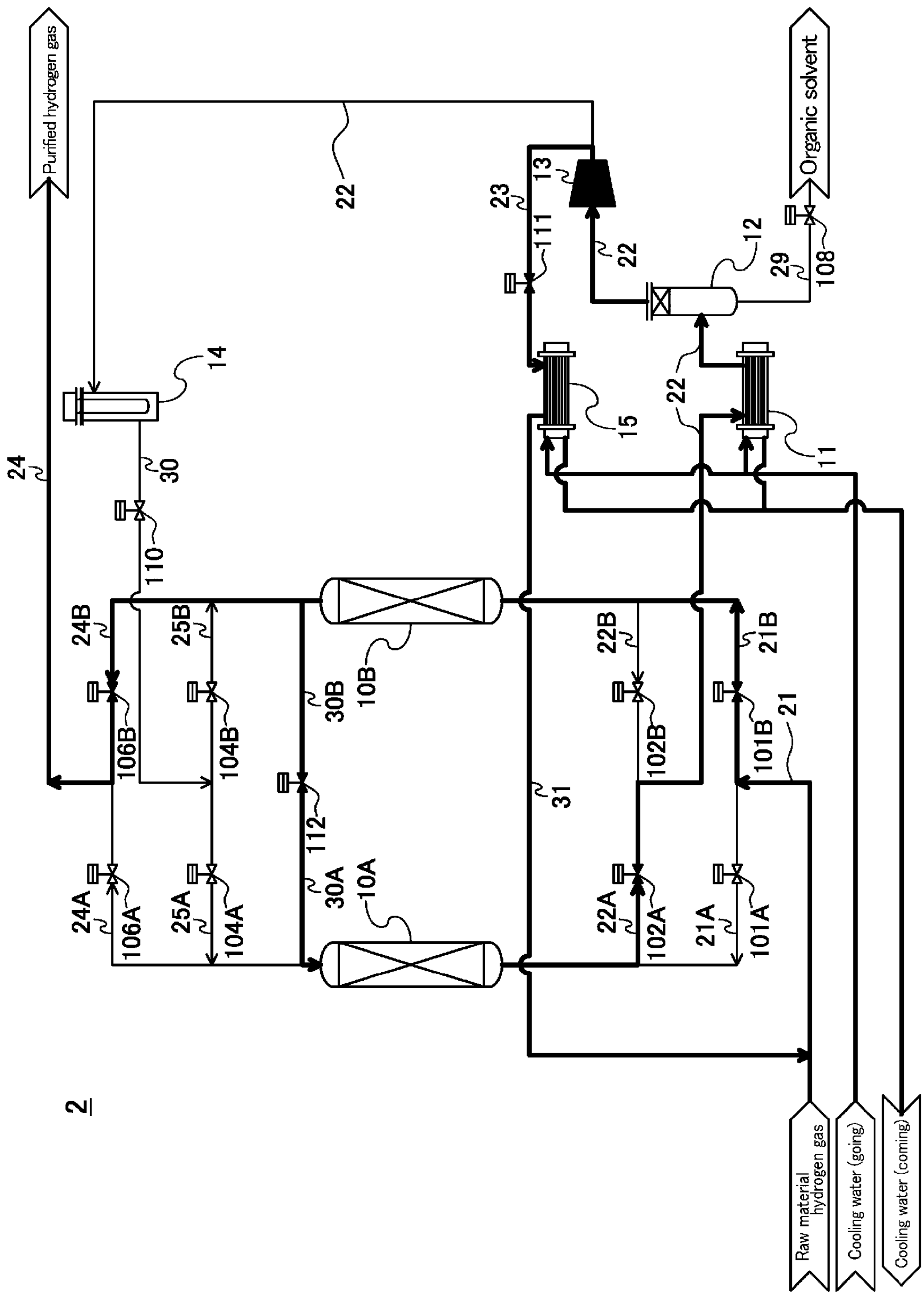
Purified hydrogen gas
Organic solvent
Raw material hydrogen gas
Cooling water (going)
Cooling water (coming)
2
10A
10B
11
12
13
14
15
21
21A
21B
22
22A
22B
23
24
24A
24B
25A
25B
29
30
30A
30B
31
101A
101B
102A
102B
104A
104B
106A
106B
108
110
111
112

Fig. 25

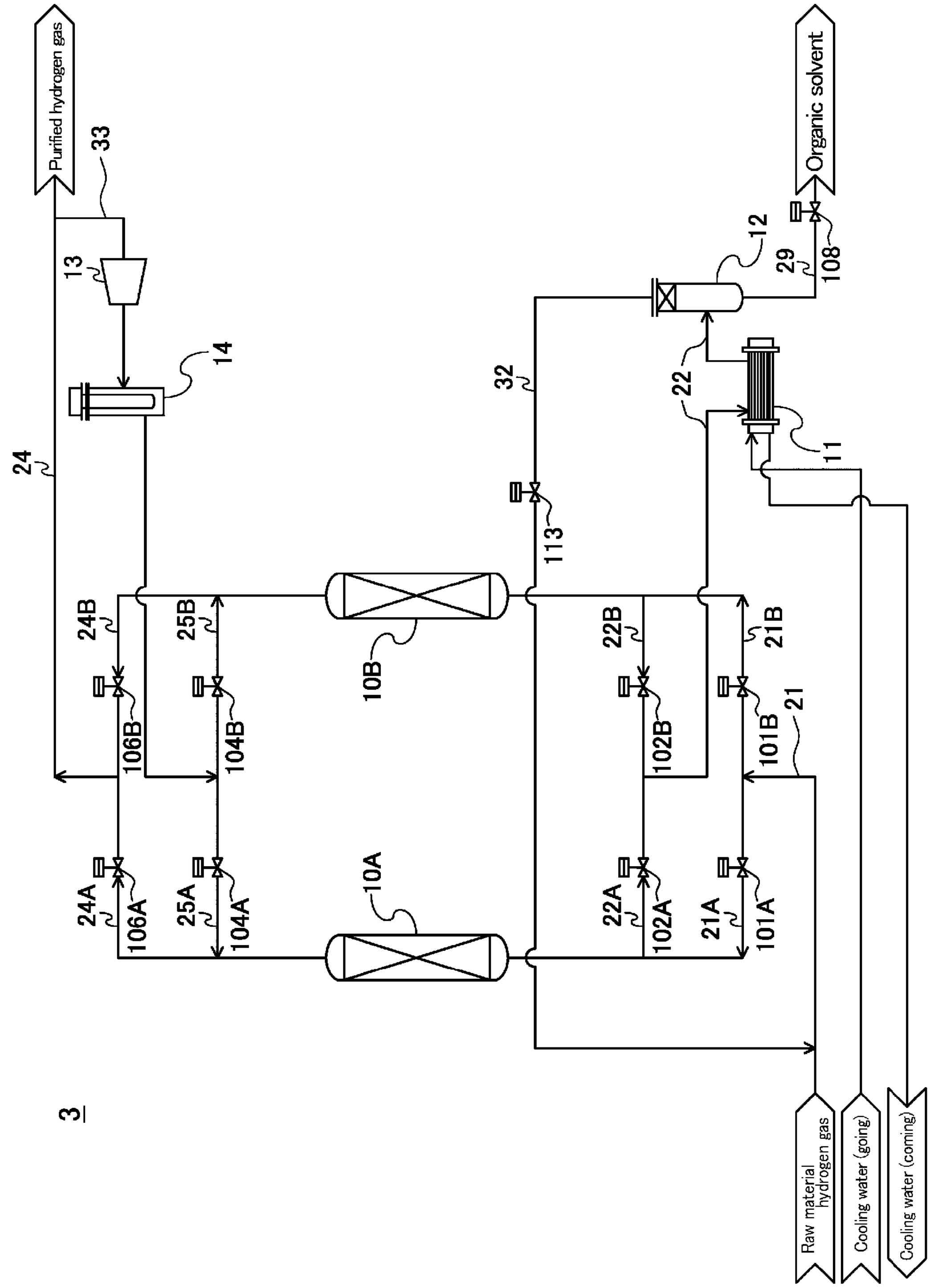
Purified hydrogen gas
Organic solvent
Raw material hydrogen gas
Cooling water (going)
Cooling water (coming)
3
10A
10B
11
12
13
14
21
21A
21B
22
22A
22B
24
24A
24B
25A
25B
29
32
33
101A
101B
102A
102B
104A
104B
106A
106B
108
113

**Fig. 26**

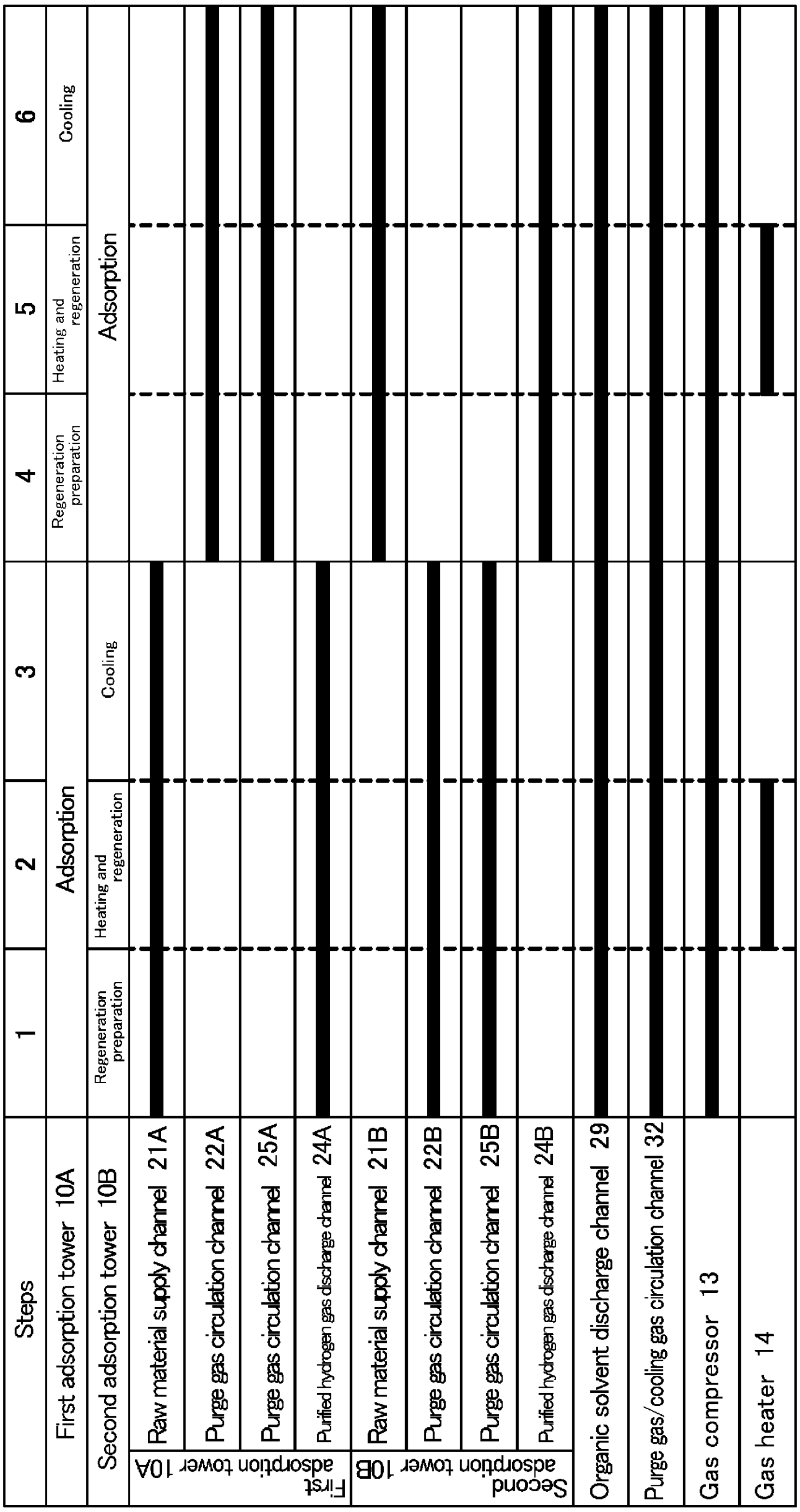
Steps
1
2
3
4
5
6
First adsorption tower 10A
Adsorption
Regeneration preparation
Heating and regeneration
Cooling
Second adsorption tower 10B
Regeneration preparation
Heating and regeneration
Cooling
Adsorption
First adsorption tower 10A
Raw material supply channel 21A
Purge gas circulation channel 22A
Purge gas circulation channel 25A
Purified hydrogen gas discharge channel 24A
Second adsorption tower 10B
Raw material supply channel 21B
Purge gas circulation channel 22B
Purge gas circulation channel 25B
Purified hydrogen gas discharge channel 24B
Organic solvent discharge channel 29
Purge gas/cooling gas circulation channel 32
Gas compressor 13
Gas heater 14

**Fig. 27**

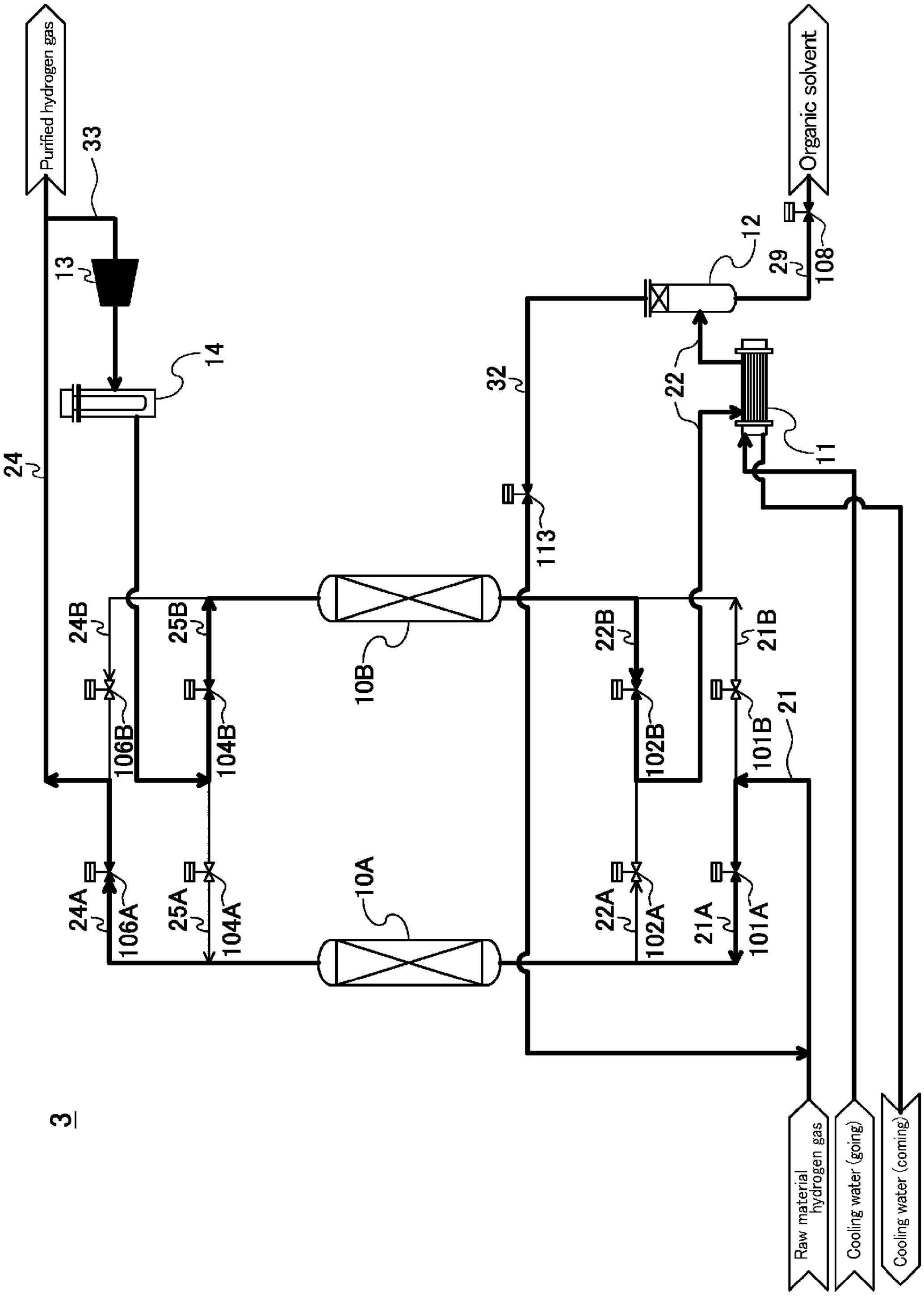
Purified hydrogen gas
Organic solvent
Raw material hydrogen gas
Cooling water (going)
Cooling water (coming)
3
33
13
14
24
24B
25B
24A
25A
106A
104A
106B
104B
10A
10B
32
113
12
29
108
22
11
22B
21B
22A
21A
102A
101A
102B
101B
21

Fig. 28

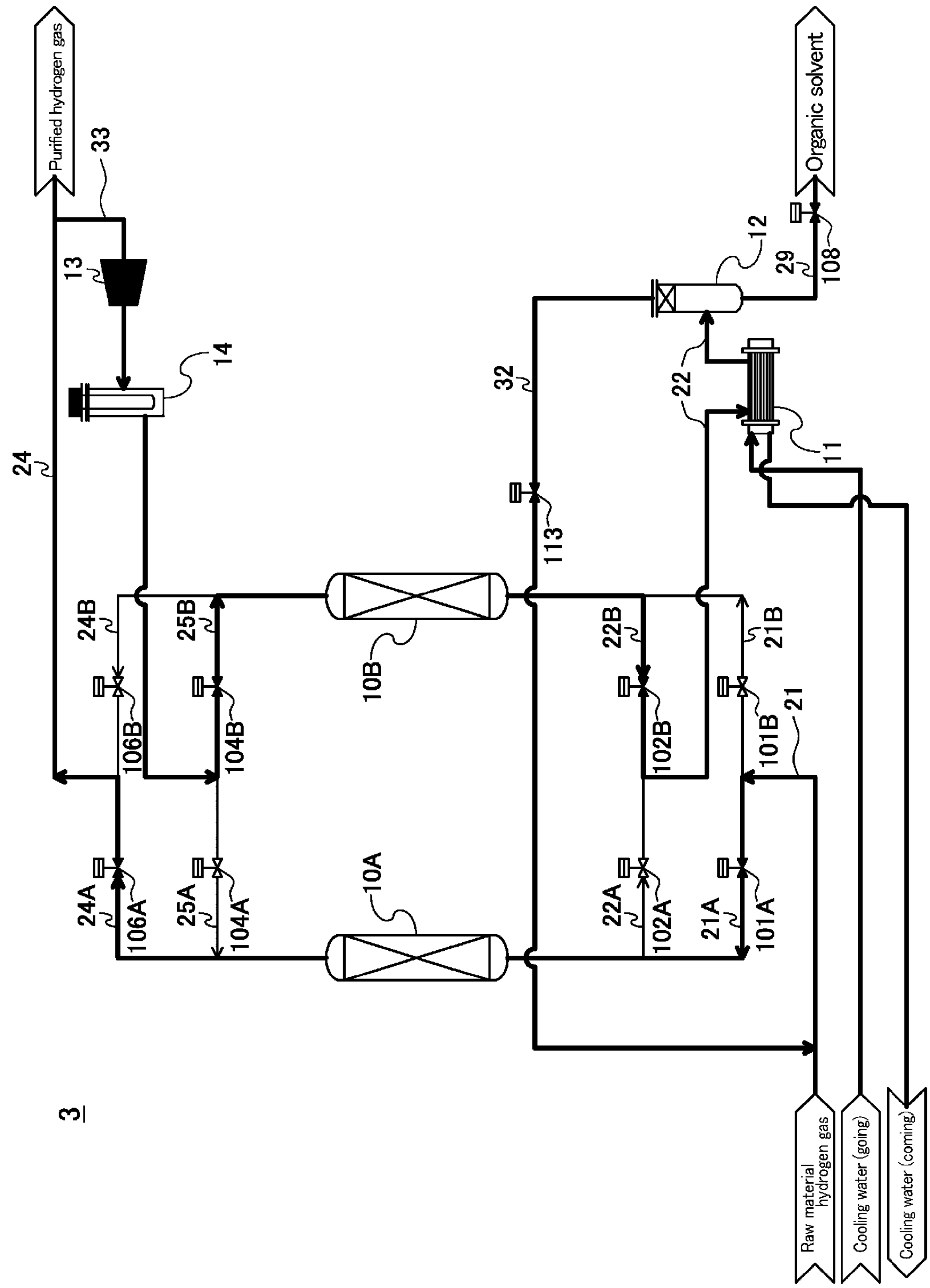
Purified hydrogen gas
Organic solvent
Raw material hydrogen gas
Cooling water (going)
Cooling water (coming)
3
33
13
14
24
24B
25B
10B
106B
104B
24A
106A
25A
104A
10A
32
113
22
11
12
29
108
22B
21B
102B
101B
21
22A
102A
21A
101A

**Fig. 29**

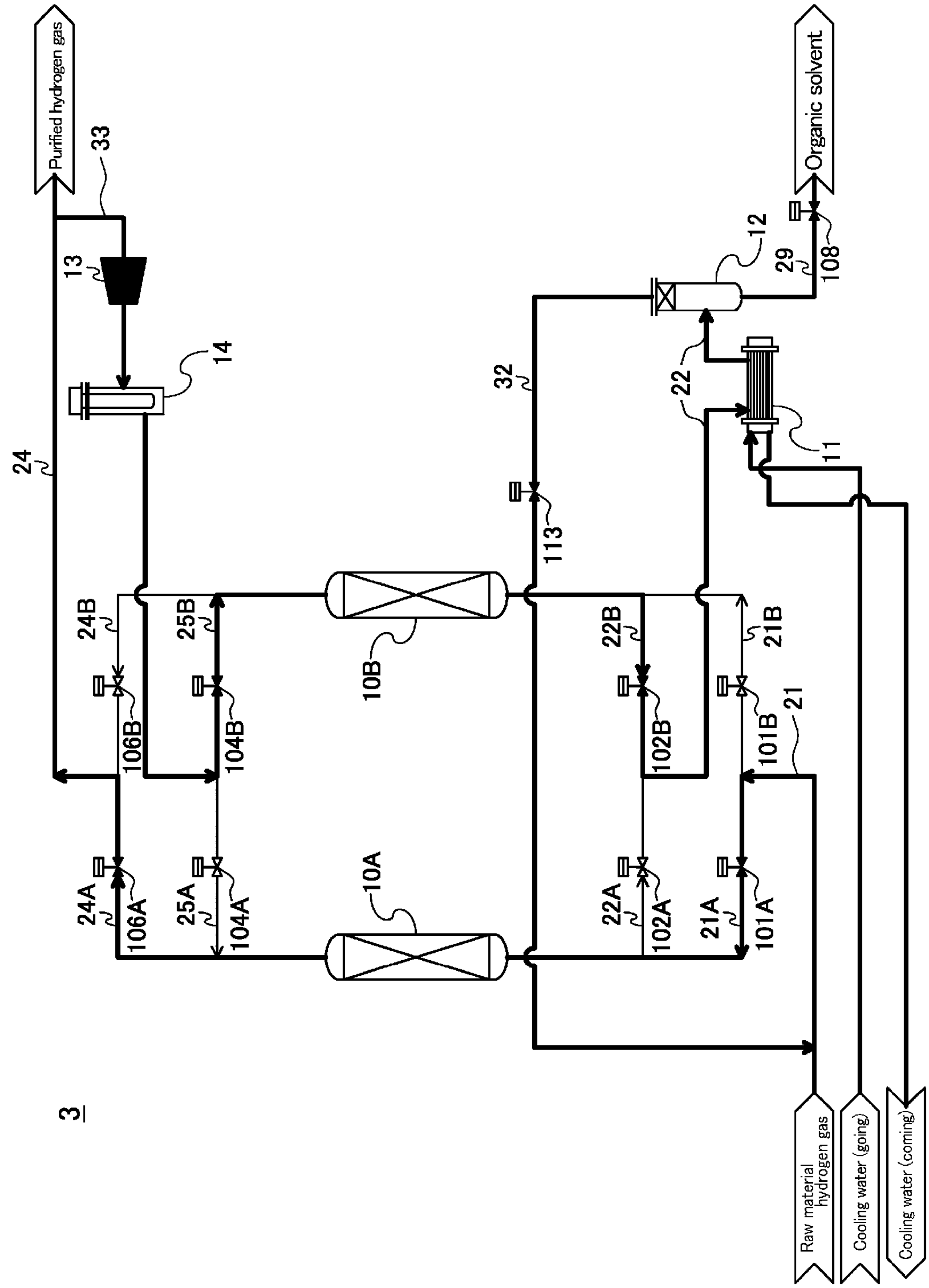
Purified hydrogen gas
33
13
14
24
32
22
12
29
108
Organic solvent
11
113
24B
25B
10B
22B
21B
106B
104B
102B
101B
21
24A
106A
25A
104A
10A
22A
102A
21A
101A
3
Raw material hydrogen gas
Cooling water (going)
Cooling water (coming)

Fig. 30

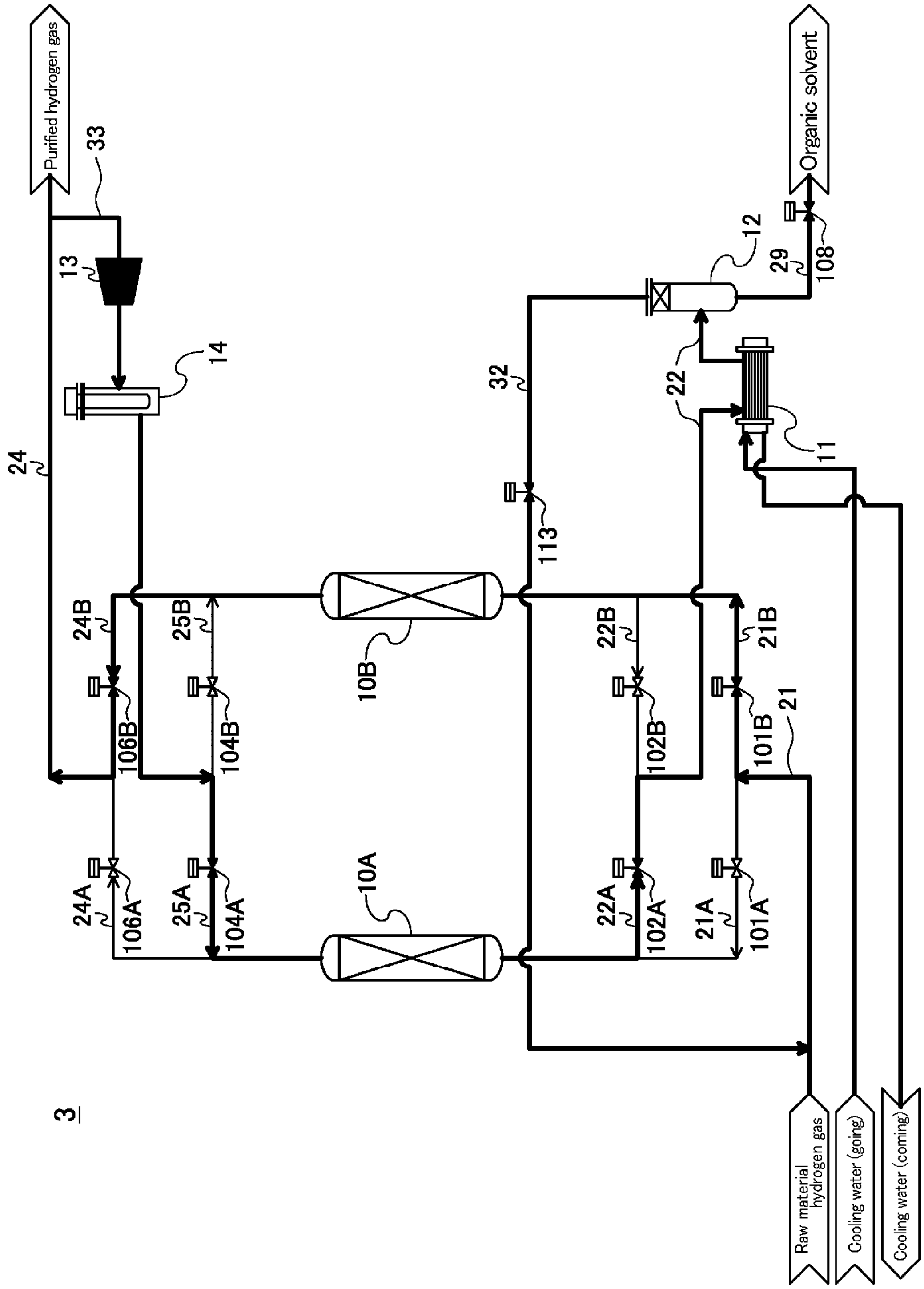
Purified hydrogen gas
Organic solvent
Raw material hydrogen gas
Cooling water (going)
Cooling water (coming)
3
10A
10B
11
12
13
14
21
21A
21B
22
22A
22B
24
24A
24B
25A
25B
29
32
33
101A
101B
102A
102B
104A
104B
106A
106B
108
113

**Fig. 31**

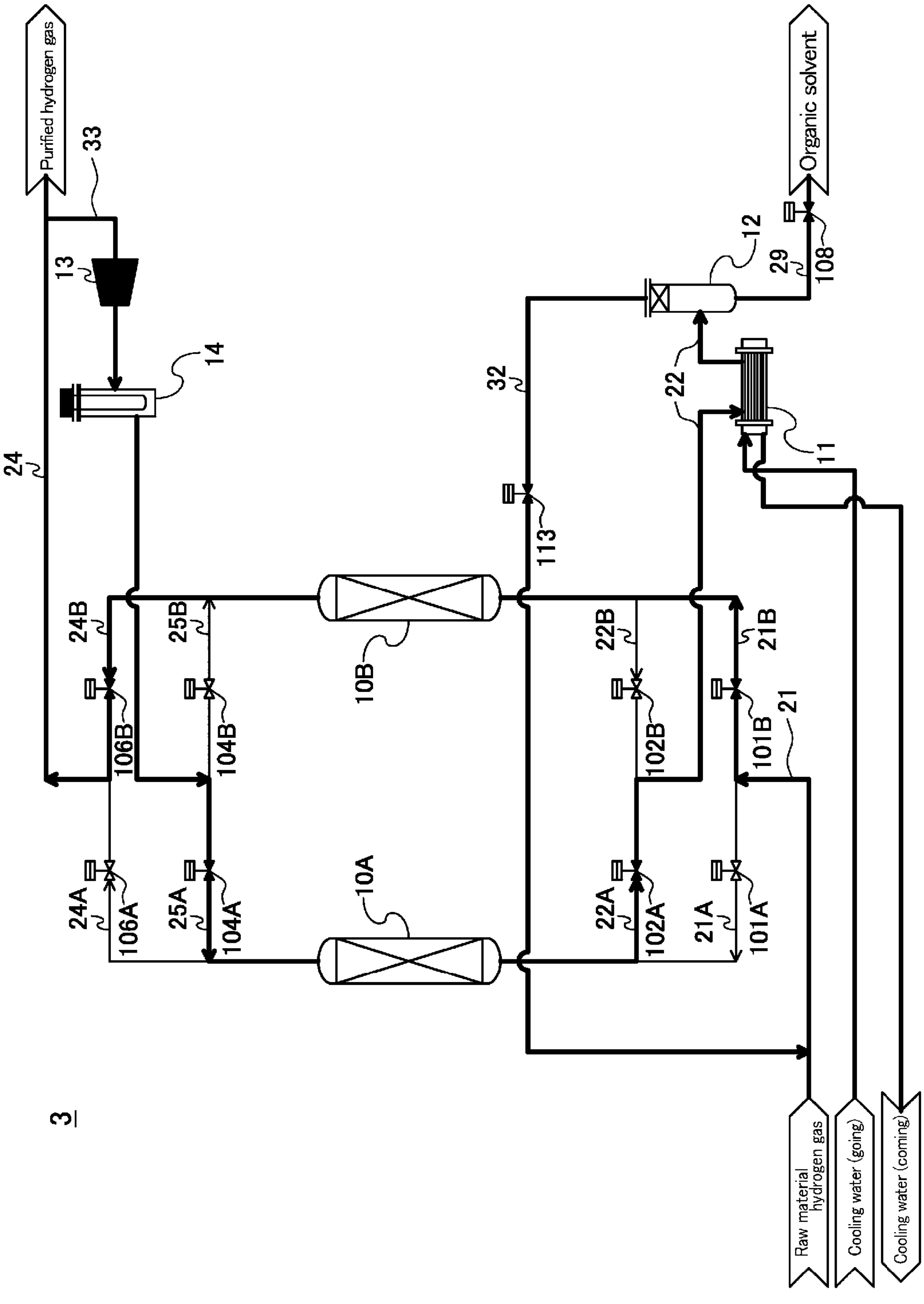
Purified hydrogen gas
Organic solvent
Raw material hydrogen gas
Cooling water (going)
Cooling water (coming)
3
10A
10B
11
12
13
14
21
21A
21B
22
22A
22B
24
24A
24B
25A
25B
29
32
33
101A
101B
102A
102B
104A
104B
106A
106B
108
113

**Fig. 32**

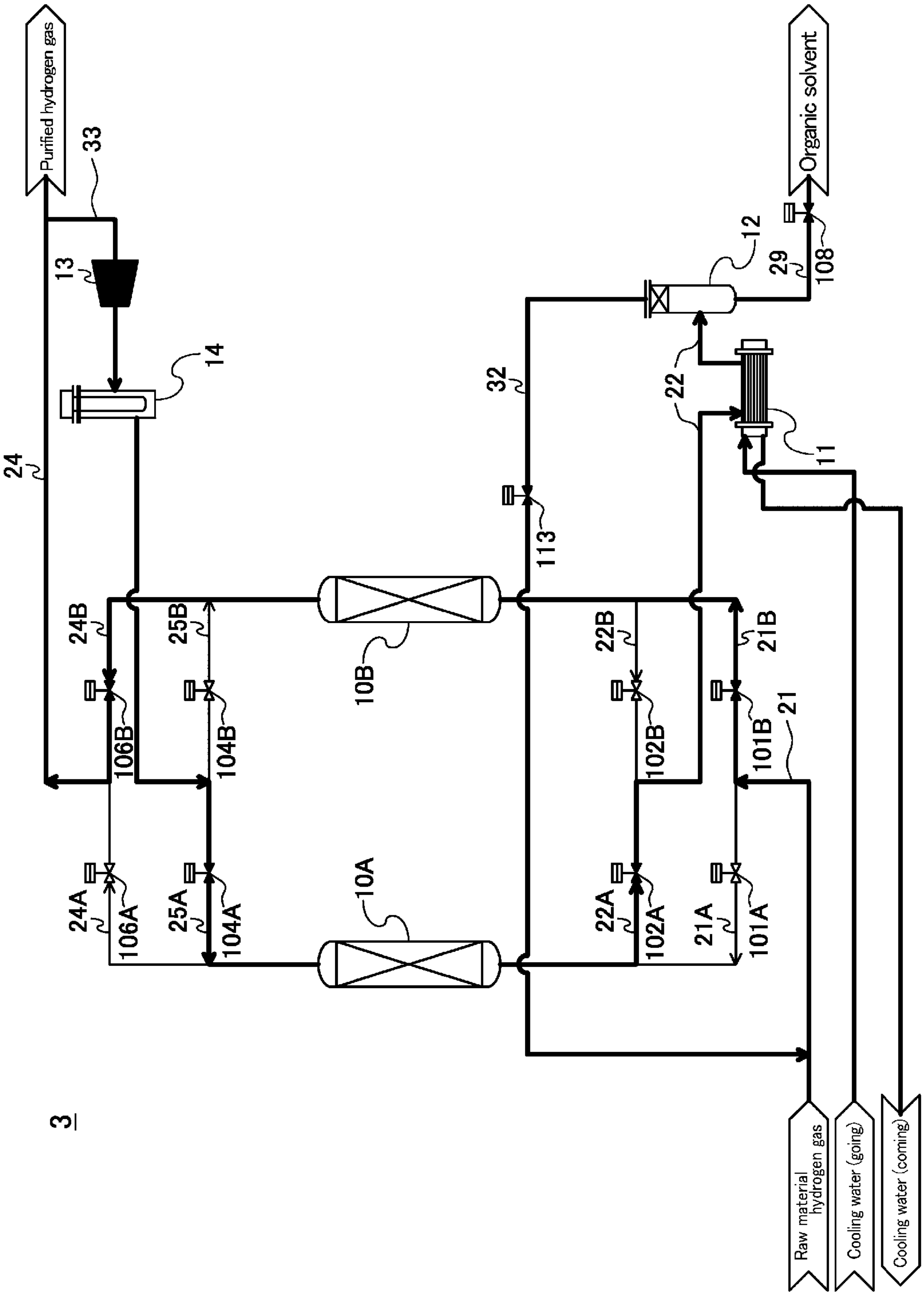
Purified hydrogen gas
Organic solvent
Raw material hydrogen gas
Cooling water (going)
Cooling water (coming)
3
10A
10B
11
12
13
14
21
21A
21B
22
22A
22B
24
24A
24B
25A
25B
29
32
33
101A
101B
102A
102B
104A
104B
106A
106B
108
113

**Fig. 33**

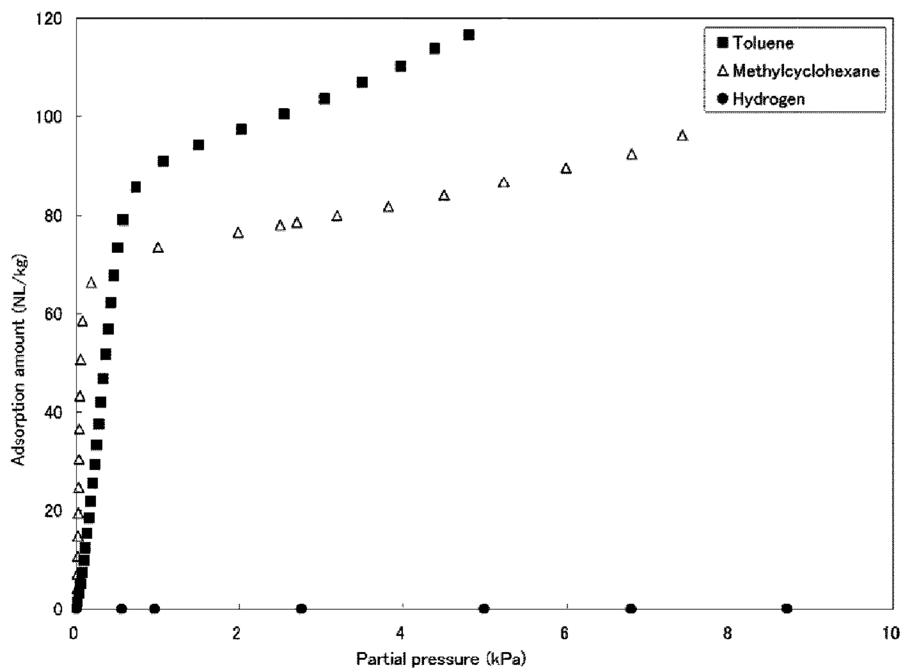
Toluene
Methylcyclohexane
Hydrogen
Adsorption amount (NL/kg)
Partial pressure (kPa)
0
20
40
60
80
100
120
0
2
4
6
8
10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014073923 A
- US 5897686 A


### Non-patent literature cited in the description


- **JUNICHI SAKAGUCHI**. Hydrogen Production/Absorption/Storage Material and Safing. *Science & Technology Co., Ltd.*, 2010, 272-280
- **YOSHIMI OKADA et al.** Chemical Engineering. *Society for Chemical Engineers*, 2013, vol. 77 (1), 46-50